(19) **Europäisches Patentamt**
**European Patent Office**
**Office européen des brevets**

(11) **EP 4 535 874 A1**

(12) **EUROPEAN PATENT APPLICATION**

(43) Date of publication:
**09.04.2025 Bulletin 2025/15**

(21) Application number: **24204814.8**

(22) Date of filing: **04.10.2024**

(51) International Patent Classification (IPC):
**H04W 48/12** (2009.01)      **H04W 48/14** (2009.01)
**H04W 48/02** (2009.01)      **H04W 48/20** (2009.01)
**H04W 72/23** (2023.01)

(52) Cooperative Patent Classification (CPC):
**H04W 48/14; H04W 48/12;** H04W 48/02;
H04W 48/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.10.2023 US 202363542628 P**

(71) Applicant: **Comcast Cable Communications, LLC**
**Philadelphia, PA 19103 (US)**

(72) Inventors:
• **ZHOU, Hua**
  **Philadelphia, 19103 (US)**
• **CIRIK, Ali Cagatay**
  **Philadelphia, 19103 (US)**
• **DINAN, Esmael Hejazi**
  **Philadelphia, 19103 (US)**
• **JEON, Hyoungsuk**
  **Philadelphia, 19103 (US)**
• **PARK, Kyungmin**
  **Philadelphia, 19103 (US)**
• **PRASAD, Gautham**
  **Philadelphia, 19103 (US)**

(74) Representative: **V.O.**
**P.O. Box 87930**
**2508 DH Den Haag (NL)**

(54) **SYSTEM INFORMATION REQUEST PROCEDURES**

(57)    A wireless device may communicate with a base station. The wireless device may request, on demand, system information associated with a cell. The cell may be determined to be unavailable, for example, based on system information associated with the cell not being provided after an on-demand request for it is made.

**FIG. 32**

**Description**

CROSS-REFERENCE TO RELATED APPLICATIONS

This application claims the benefit of U.S. Provisional Application No. 63/542,628 filed on October 5, 2023. The above referenced application is hereby incorporated by reference in its entirety.

BACKGROUND

A wireless device communicates with a base station. The base station sends various configuration parameters to the wireless device via cells.

SUMMARY

The following summary presents a simplified summary of certain features. The summary is not an extensive overview and is not intended to identify key or critical elements.

A wireless device may communicate with a base station. The base station may inform the wireless device whether system information, such as a system information block, may be requested on demand. An uplink signal (e.g., a wake-up signal) may be used to request system information, for example, if such information is indicated to be available on demand. A base station and/or a communication area, such as a cell, may be determined to be unavailable for the wireless device, based on a determination that a response to the uplink signal has not been received.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

EP 4 535 874 A1

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein.

FIG. 16A, FIG. 16B, FIG. 16C, and FIG. 16D show examples of uplink and downlink signal transmission.

FIG. 17A, FIG. 17B, and FIG. 17C show example MAC subheaders.

FIG. 18A and FIG. 18B show example MAC PDUs.

FIG. 19 shows example logical channel identifier (LCID) values.

FIG. 20 shows example LCID values.

FIG. 21A and FIG. 21B show example secondary cell (SCell) Activation/Deactivation MAC control elements (CEs).

FIG. 22 shows an example of BWP activation/deactivation.

FIG. 23 shows examples of various downlink control information (DCI) formats.

FIG. 24A shows an example master information block (MIB) message.

FIG. 24B shows an example configuration of a CORESET.

FIG. 24C shows an example of configuration of a search space.

FIG. 25 shows an example of a system information block (SIB).

FIG. 26 shows example RRC configuration parameters.

FIG. 27 shows an example configuration of a search space.

FIG. 28 shows an example of synchronization signal block (SSB) configurations.

FIG. 29 shows an example of SSB transmissions.

FIG. 30 shows an example of a procedure for missing essential system information.

FIG. 31 shows an example of a camping method on a cell when on-demand SIB 1 is configured on the cell.

FIG. 32 shows an example of on-demand SIB1 reception.

FIG. 33 shows an example of on-demand SIB1 reception.

FIG. 34 shows an example of a wake-up signal triggered on-demand transmission and reception.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

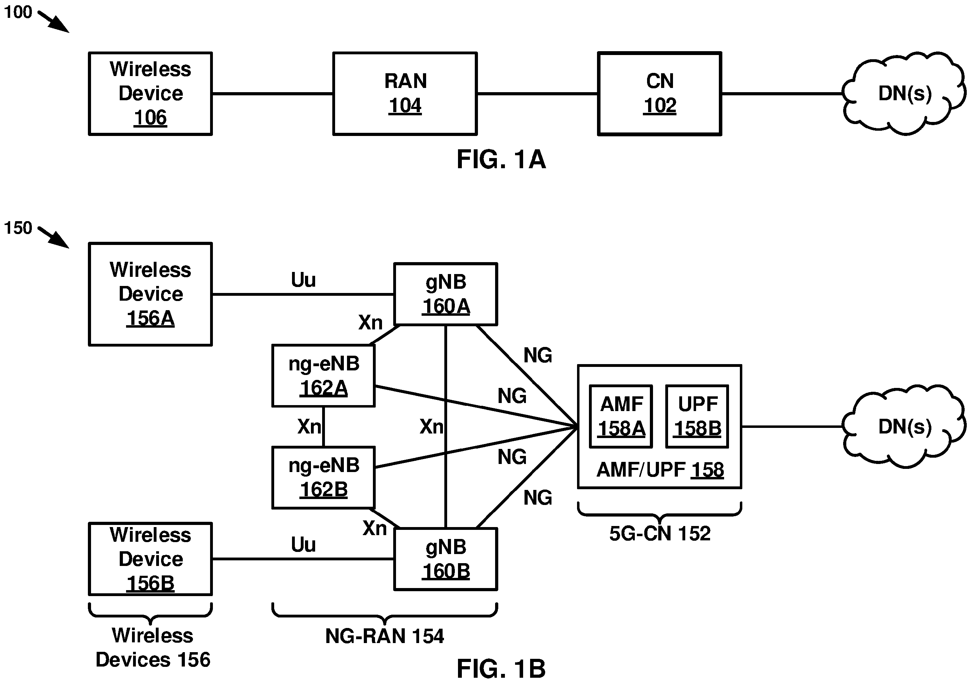

FIG. 1A shows an example communication network 100. The communication network 100 may comprise a mobile communication network. The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with the one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over/via an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a Generation Node B (base station/gNB), an Next Generation Evolved Node B (ng-eNB), a relay node (e.g., an integrated access and backhaul (IAB) node), a donor node (e.g., a donor eNB, a donor base station/gNB, etc.), an access point (AP) (e.g., a Wi-Fi access point), a transmission and reception point (TRP), a computing device, a device capable of wirelessly communicating, or any other device capable of sending and/or receiving signals. A base station may comprise one or more of the elements listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an eNB (e.g., associated with Evolved-Universal Terrestrial Radio Access (E-UTRA) and/or fourth-generation (4G) standards), a remote radio head (RRH), a baseband processing unit coupled to one or more RRHs, a repeater node or relay node used to extend the coverage area of a donor node, a ng-eNB, a base station/gNB (e.g., associated with New Radio (NR) and/or fifth-generation (5G) standards), an AP (e.g., associated with, for example, Wi-Fi or any other suitable wireless communication standard), any other generation base station, and/or any combination thereof. A base station may comprise one or more devices, such as at least one base station central device (e.g., a base station/gNB Central Unit (gNB-CU)) and at least one base station distributed device (e.g., a base station/gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an AP, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to the one or more DNs 170. The wireless device(s) 156 may communicate with the one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs 170, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G-CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/LTPF device 158. The UPF device 158B may serve as a gateway between the RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-linter-Radio Access Technology (RAT) mobility, an external protocol (or packet) data unit (PDU) session point of interconnect to the one or more DNs 170, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., base stations/gNBs comprising a base station/gNB 160A and a base station/gNB 160B (collectively base stations/gNBs 160)) and/or one or more second-type base stations (e.g., ng-eNBs comprising an ng-eNB 162A and an ng-eNB 162B (collectively ng-eNBs 162)). The RAN 154 may comprise one or more of any quantity of types of base station. The base stations/gNBs 160 and/or ng-eNBs 162 may be referred to as base stations. The base stations (e.g., the gNBs 160 and/or ng-eNBs 162) may comprise one or more sets of antennas for communicating with the wireless device(s) 156 wirelessly (e.g., an over an air interface). One or more base stations (e.g., the gNBs 160 and/or the ng-eNBs 162) may comprise multiple sets of antennas to respectively control multiple cells (or sectors). The cells of the base stations (e.g., the gNBs 160 and/or the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G-CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMFIUPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide E-UTRA user plane and control plane protocol terminations towards the wireless device(s) 156 via a Uu interface (e.g., where E-UTRA may refer to the 3GPP 4G radio-access technology). A base station (e.g., the ng-eNB 162B) may provide E-UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, IoT devices, hotspots, cellular repeaters, computing devices, and/or, more generally, UE. Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a 6G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

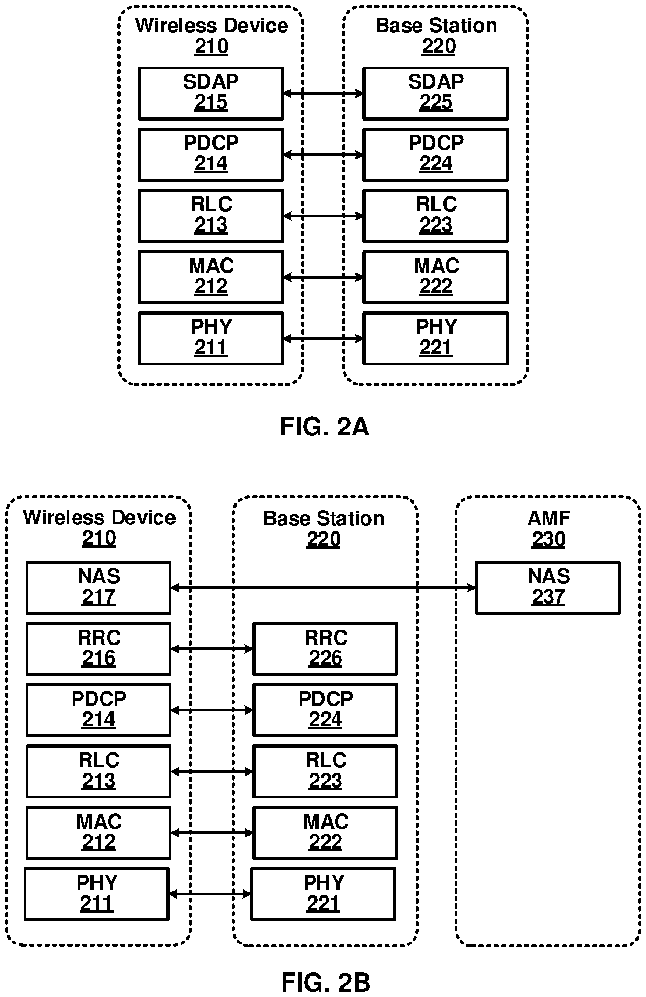

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configurations and/or the control plane configurations may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

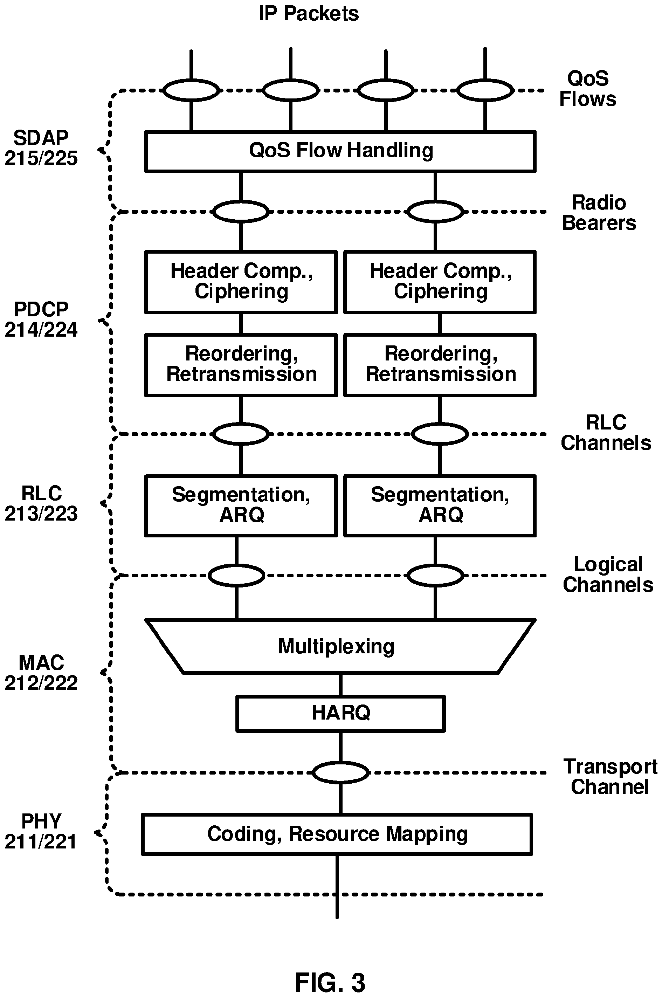

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform QoS flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows 310 of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers (e.g., RLCs 213 and 223) may perform one or more of the noted functions, for example, based on the transmission mode the RLC layer (e.g., RLCs 213 and 223) is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels 330 as a service to the PDCP layers (e.g., PDCPs 214 and 224, respectively), such as shown in FIG. 3.

The MAC layers (e.g., MACs 212 and 222) may perform multiplexing/demultiplexing of logical channels 340 and/or mapping between logical channels 340 and transport channels 350. The multiplexing/demultiplexing may comprise multiplexing/demultiplexing of data units/data portions, belonging to the one or more logical channels 340, into/from Transport Blocks (TBs) delivered to/from PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels 340 of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels 350 to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

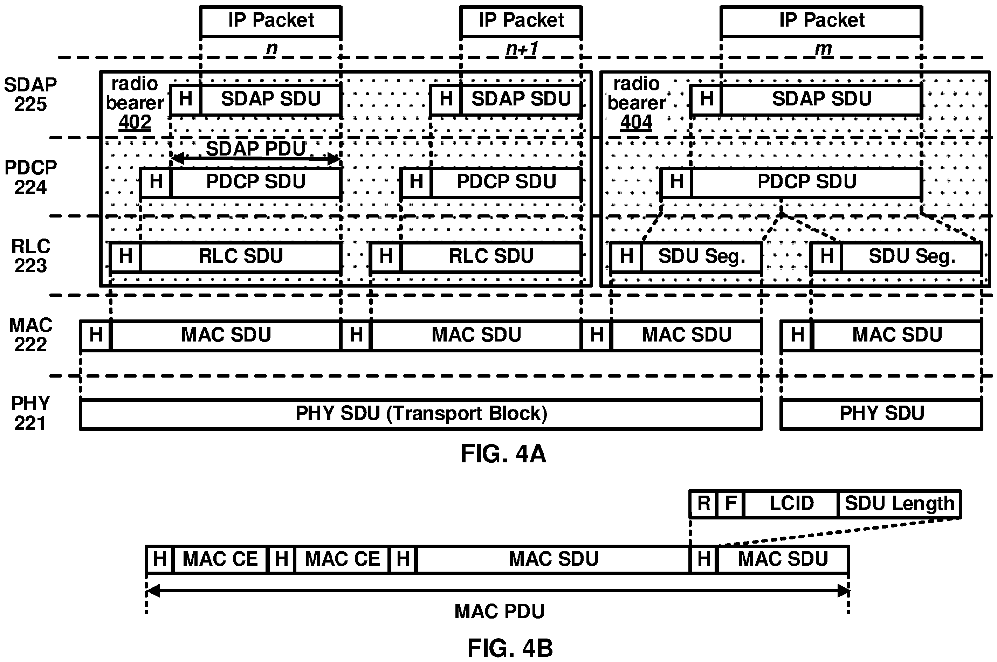

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 212 or MAC 222. As shown in FIG. 4B, two MAC CEs may be inserted into/added to the MAC PDU. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

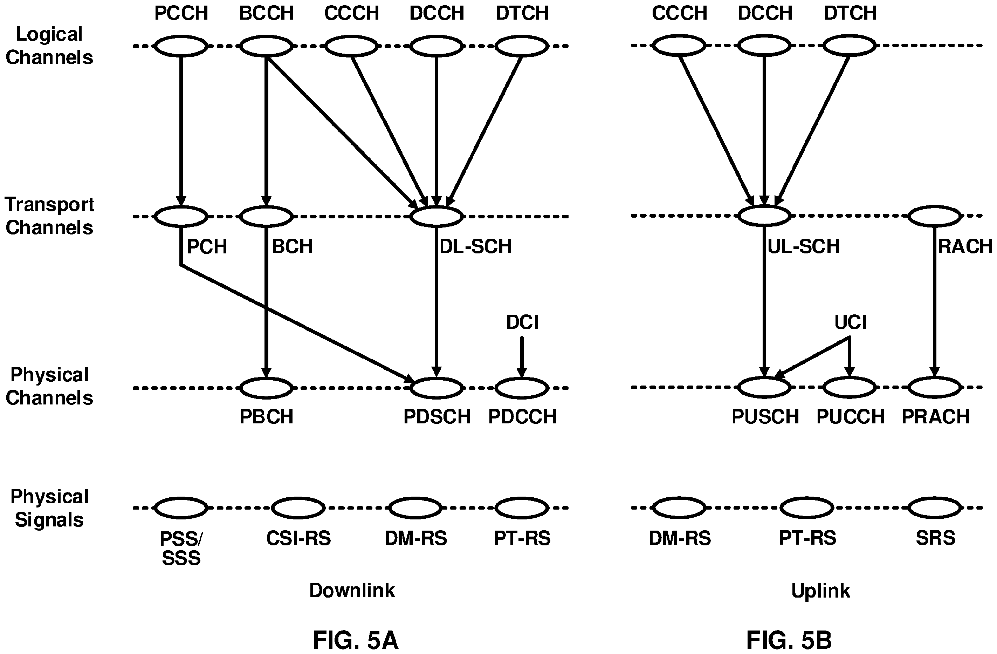

FIG. 5A shows an example mapping for downlink channels. The mapping for downlink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/-carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may comprise an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as layer 1 or layer 2 (e.g., L1 or L2, Layer 1/Layer 2, L1/L2, Layer 1 or layer 2, Layer 1 or Layer 2, L 1/2, Layer 1/2, layer 1/2, etc.) control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access

The PHY layer may generate physical signals to support the low-level operation of the PHY layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), SRS, phase-tracking reference signals (PT RS), and/or any other signals.

One or more of the channels (e.g., logical channels, transport channels, physical channels, etc.) may be used to carry out functions associated with the control plane protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHYs 211 and 221, MACs 212 and 222, RLCs 213 and 223, and PDCPs 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane protocol stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and substantially the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting and control of the reporting; detection of and recovery from radio link failure (RLF); and/or NAS message transfer. As part of establishing an RRC connection, the RRC layers 216 and 226 may establish an RRC context, which may involve configuring parameters for communication between the wireless device 210 and the RAN (e.g., the base station 220).

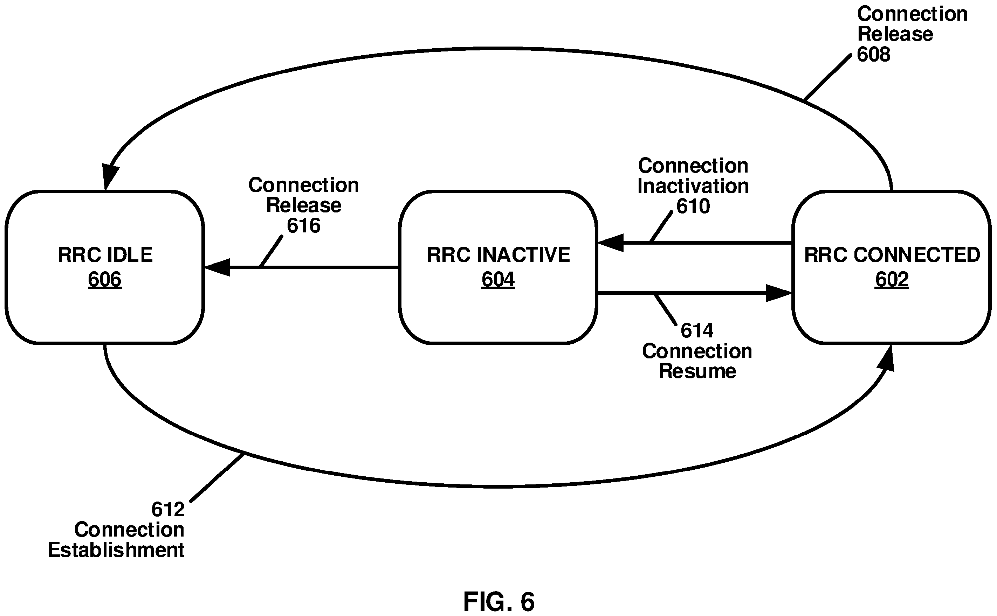

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the base stations/gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104, the RAN 154, or any other RAN). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., the RRC connected 602) to an RRC idle state (e.g., the RRC idle 606) via a connection release procedure 608. The RRC state may transition from the RRC connected state (e.g., the RRC connected 602) to the RRC inactive state (e.g., the RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., one time in every DRX cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be substantially the same as or similar to connection release procedure 608.

An RRC state may be associated with a mobility management mechanism. During the RRC idle state (e.g., the RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC inactive state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., the RRC inactive 604).

A base station (e.g., the gNBs 160 in FIG. 1B or any other base station) may be split in two parts: a central unit (e.g., a base station central unit, such as a gNB-CU) and one or more distributed units (e.g., a base station distributed unit, such as a gNB-DU). A base station central unit (CU) may be coupled to one or more base station distributed units (DUs) using an F 1 interface (e. g., an F 1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM may be a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbol streams may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

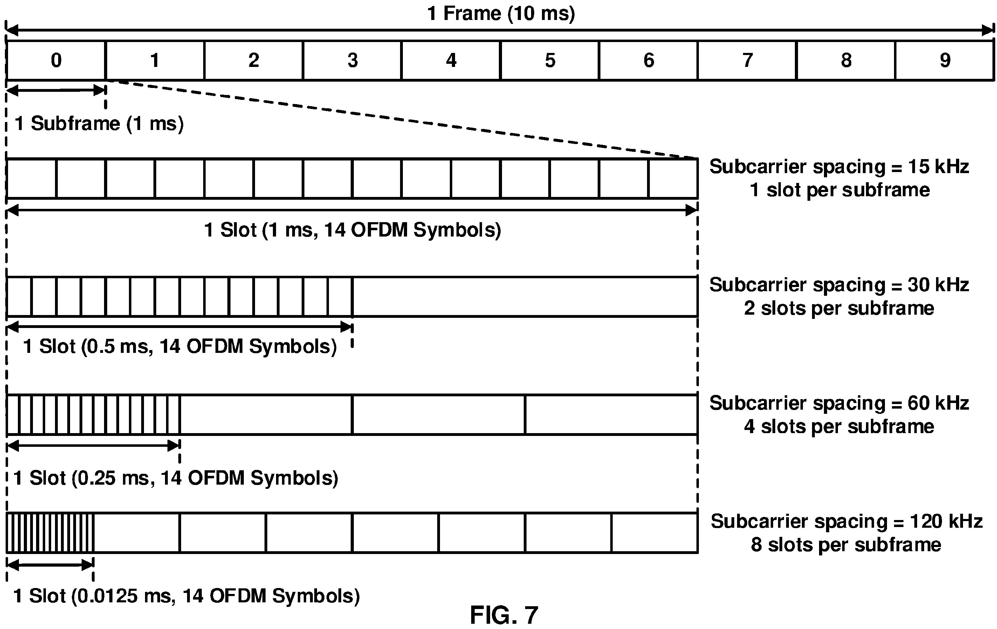

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR radio frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

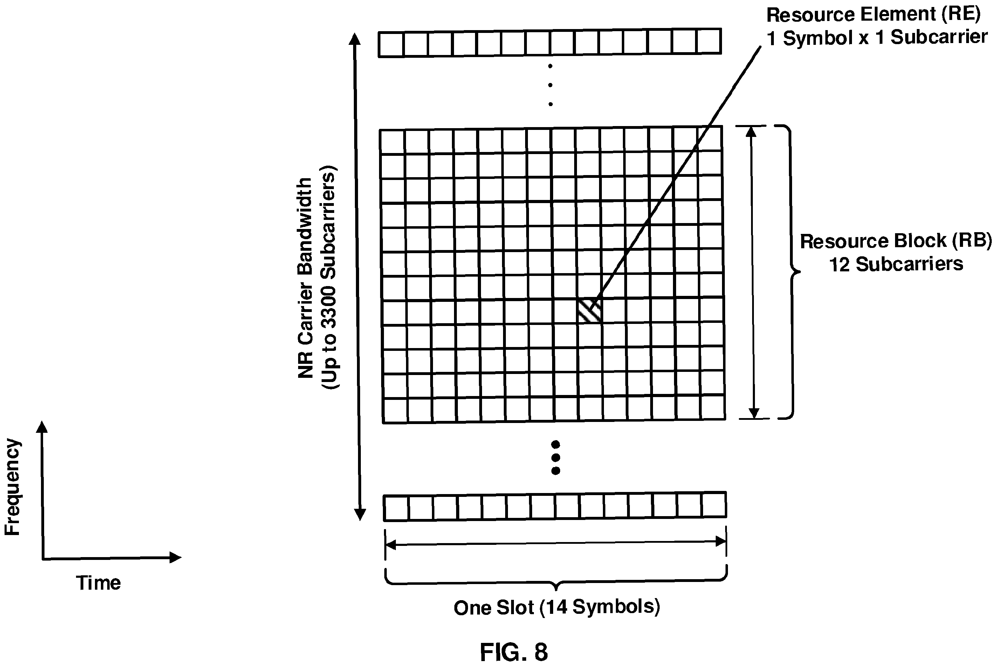

FIG. 8 shows an example resource configuration of one or more carriers. The resource configuration may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275 \times 12 = 3300$ subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR carrier such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in DCI. A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access

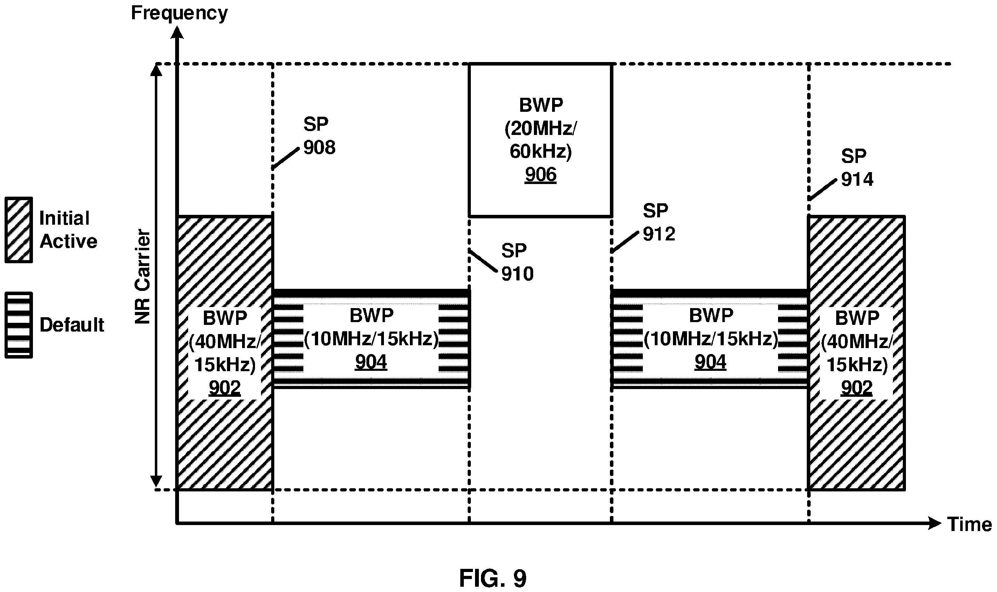

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at the switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating the BWP 904 as the active BWP. The wireless device may switch at a switching point 910 from the active BWP (e.g., the BWP 904) to the BWP 906, for example, after or in response receiving DCI indicating the BWP 906 as a new active BWP. The wireless device may switch at a switching point 912 from the active BWP (e.g., the BWP 906) to the BWP 904, for example, a based on (e.g., after or in response to) an expiry of a BWP inactivity timer. The wireless device may switch at the switching point 912 from the active BWP (e.g., the BWP 906) to the BWP 904, for example, after or in response to receiving DCI indicating the BWP 904 as a new active BWP. The wireless device may switch at a switching point 914 from the active BWP (e.g., the BWP 904) to the BWP 902, for example, after or in response receiving DCI indicating the BWP 902 as a new active BWP.

Wireless device procedures for switching BWPs on a secondary cell may be substantially the same/similar as those on a primary cell, for example, if the wireless device is configured for a secondary cell with a default downlink BWP in a set of configured downlink BWPs and a timer value. The wireless device may use the timer value and the default downlink BWP for the secondary cell in substantially the same/similar manner as the wireless device uses the timer value and/or default downlink BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

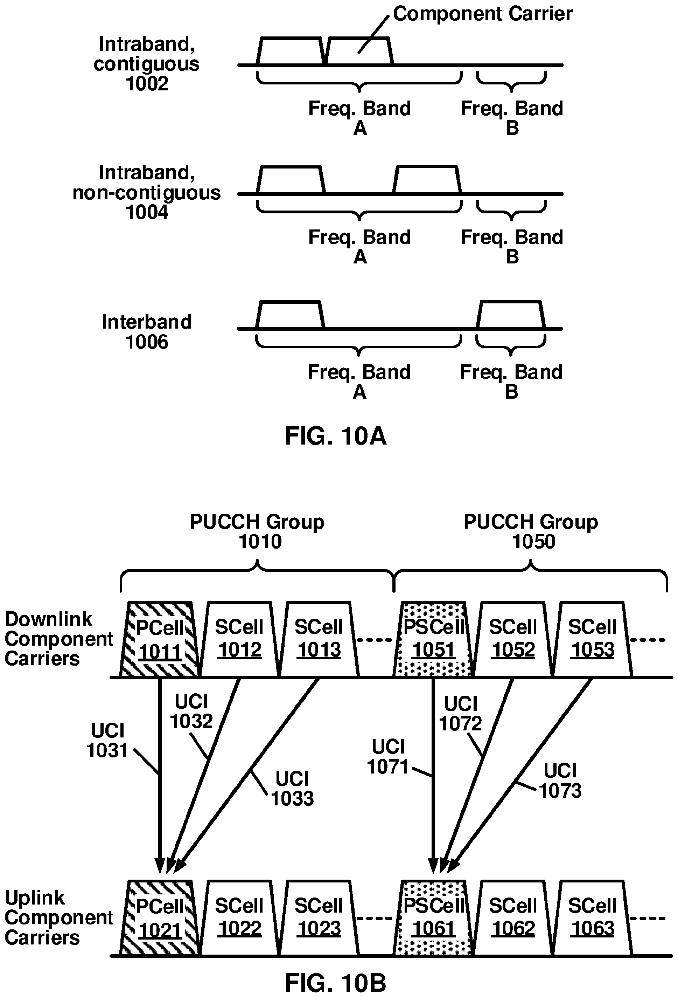

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless devices may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information for the downlink, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. UCI may comprise control information for the uplink, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (orPSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may use/apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

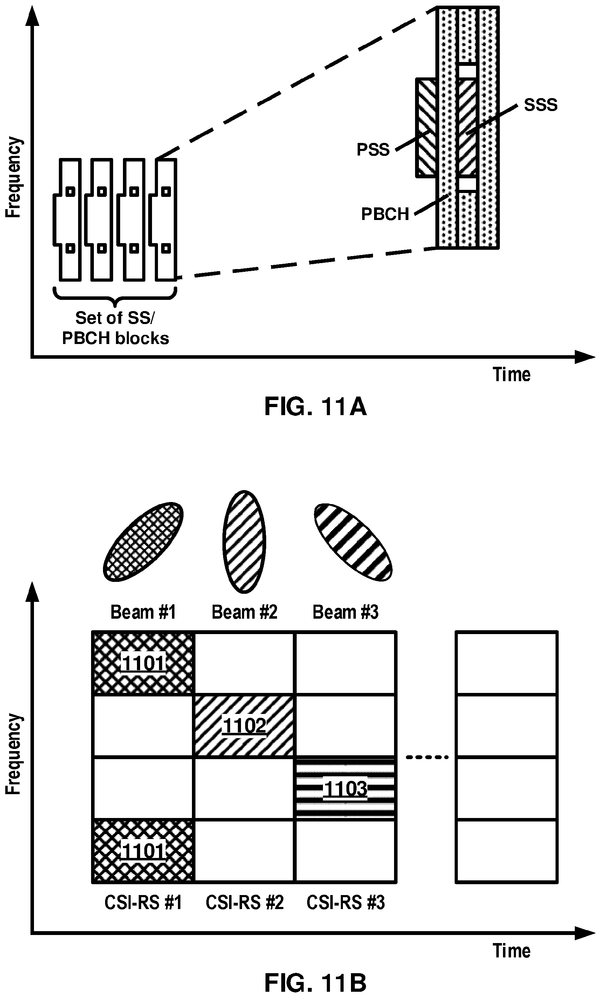

FIG. 11A shows an example mapping of one or more SS/PBCH blocks. A burst of SS/PBCH blocks may comprise one or more SS/PBCH blocks (e.g., 4 SS/PBCH blocks, as shown in FIG. 1 1A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB 1. The SIB1 may be decoded using parameters provided/comprised in the MIB. The PBCH may indicate an absence of SIB1. The wireless device may be pointed to a frequency, for example, based on the PBCH indicating the absence of SIB 1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial receiving (Rx) parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same

The CSI-RS may be sent/transmitted by the base station and used by the wireless device to acquire/obtain/determine CSI. The base station may configure the wireless device with one or more CSI-RSs for channel estimation or any other suitable purpose. The base station may configure a wireless device with one or more of substantially the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports (or any other quantity of orthogonal downlink DM-RS ports) per wireless device (e.g., for single user-MIMO). A DM-RS configuration may support up to 4 orthogonal downlink DM-RS ports (or any other quantity of orthogonal downlink DM-RS ports) per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be substantially the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with substantially the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as QCLed, for example, if one or more large-scale properties of the channel over which a first symbol on the first antenna port is conveyed may be inferred/determined from the channel over which a second symbol on a second antenna port is conveyed. The one or more large-scale properties may comprise at least one of: a delay spread; a Doppler spread; a Doppler shift; an average gain; an average delay; and/or spatial Rx parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a RB within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of: a CSI-RS resource configuration identity, a number of CSI-RS ports, a CSI-RS configuration (e.g., symbol and RE locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, QCL parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams may be shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure a reference signal received power (RSRP) of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more SRS resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a PMI, a CQI, and/or a RI.

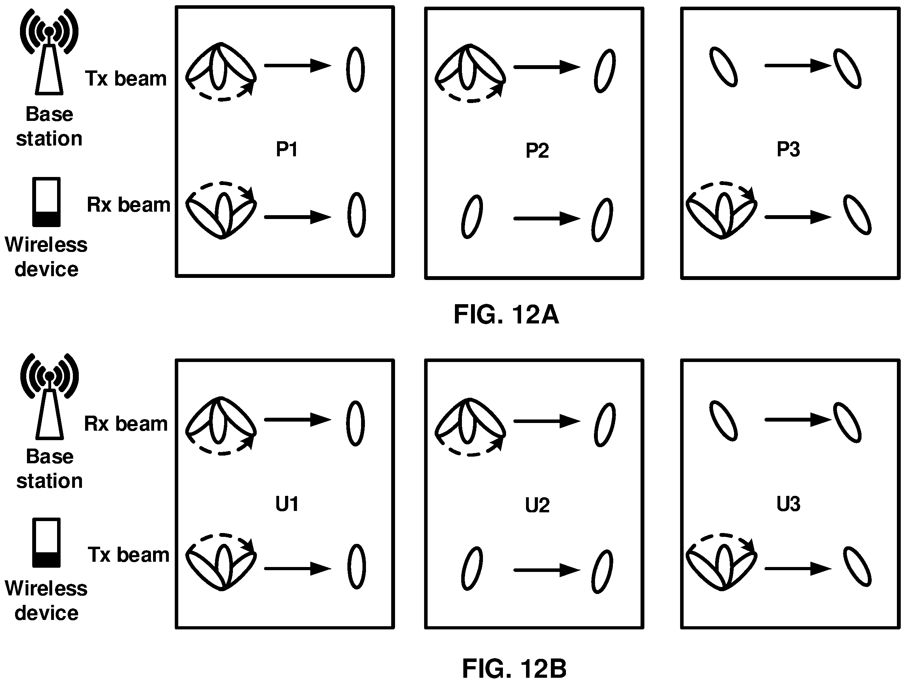

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the bottom row of U1 and top row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more RSs comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are substantially the same or similar as the channel characteristics from a transmission via the channel to the wireless device.

A network (e.g., an NR network comprising a base station/gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more SIBs (e.g., or any other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

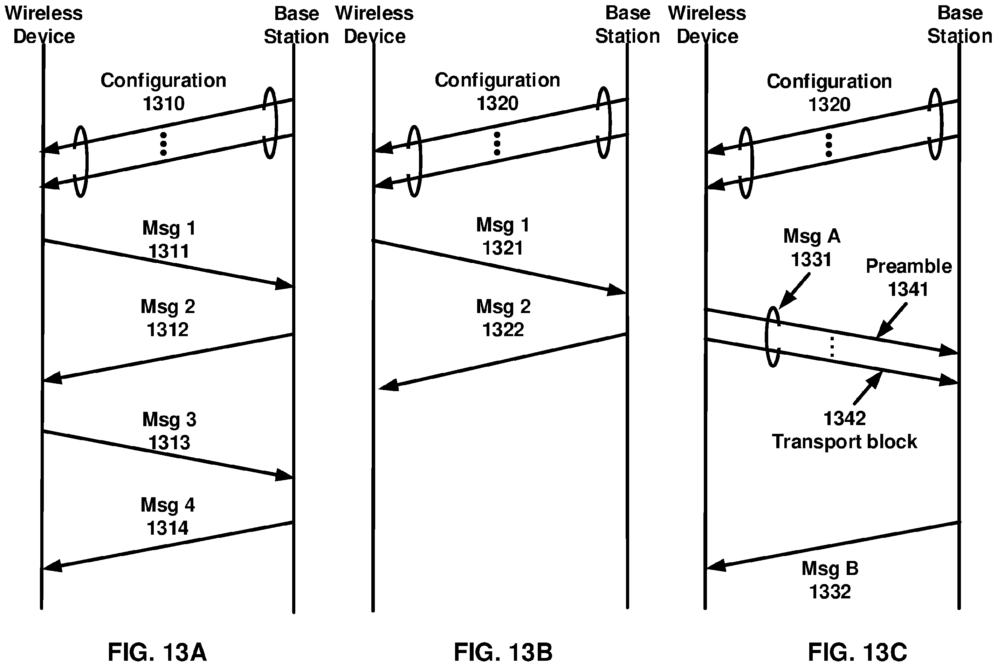

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more RACH parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more PRACH occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate at least one of: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. RNTIs may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s\_id + 14 \times t\_id + 14 \times 80 \times f\_id + 14 \times 80 \times 8 \times ul\_carrier\_id,$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless device on the PDCCH (e.g., the base station may send the PDCCH to the wireless device) using a C-RNTI, for example, if the C-RNTI was included in the third message (e.g., Msg 3 1313). The random access procedure may be determined to be successfully completed, for example, if the unique C-RNTI of the wireless device is detected on the PDCCH (e.g., the PDCCH is scrambled by the C-RNTI). The fourth message (e.g., Msg 4 1314) may be received using a DL-SCH associated with a TC-RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., for the first message (e.g., Msg 1 1311) and/or the third message (e.g., Msg 3 1313)). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322).

The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

The first message (e.g., Msg A 1331) may be sent/transmitted in an uplink transmission by the wireless device. The first message (e.g., Msg A 1331) may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIG. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as layer 1 or layer 2 (e.g., L1 or L2, Layer 1/Layer 2, L1/L2, Layer 1 or layer 2, Layer 1 or Layer 2, L1/2, Layer 1/2, layer 1/2 etc.)) control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as DCI. The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

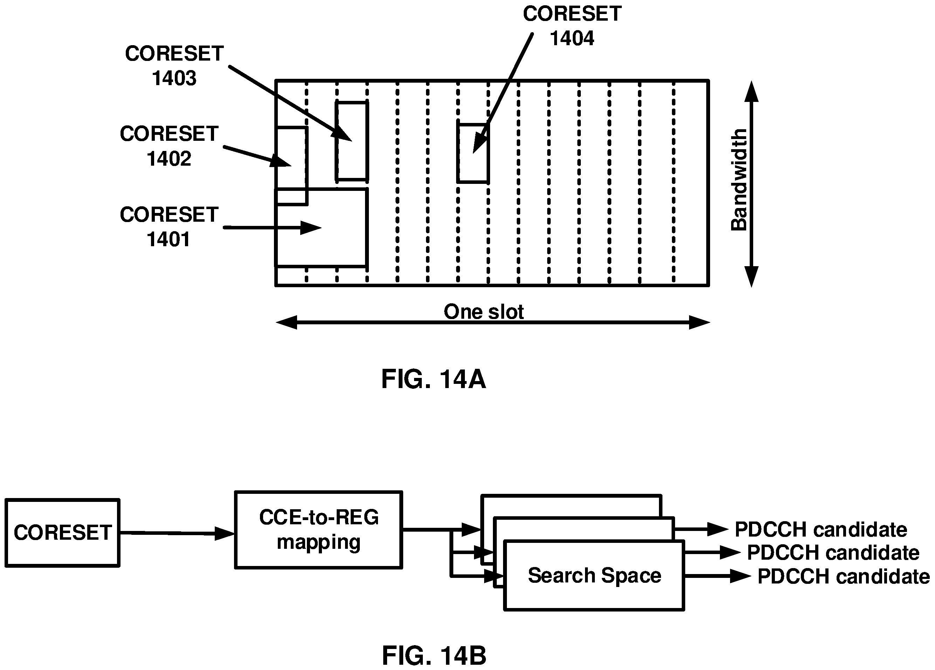

FIG. 14A shows an example of CORESET configurations. The CORESET configurations may be for a bandwidth part or any other frequency bands. The base station may send/transmit DCI via a PDCCH on one or more CORESETs. A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The wireless device may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise SR. The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a quantity/number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets.

The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from a PUCCH resource set for UCI (HARQ-ACK, CSI, and/or SR) transmission, for example, after determining the PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

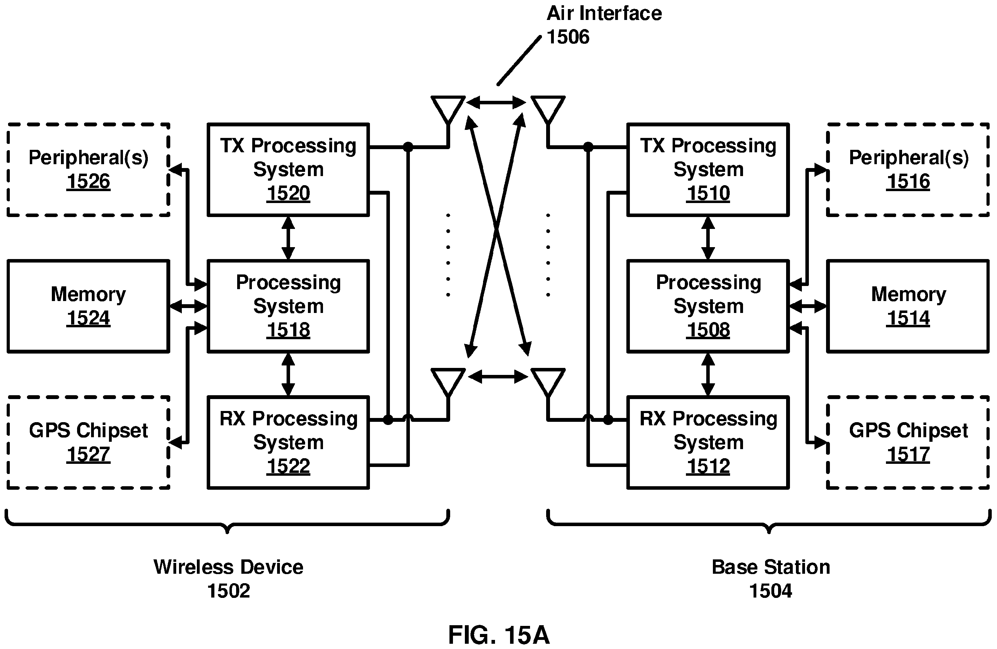

FIG. 15A shows an example of communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

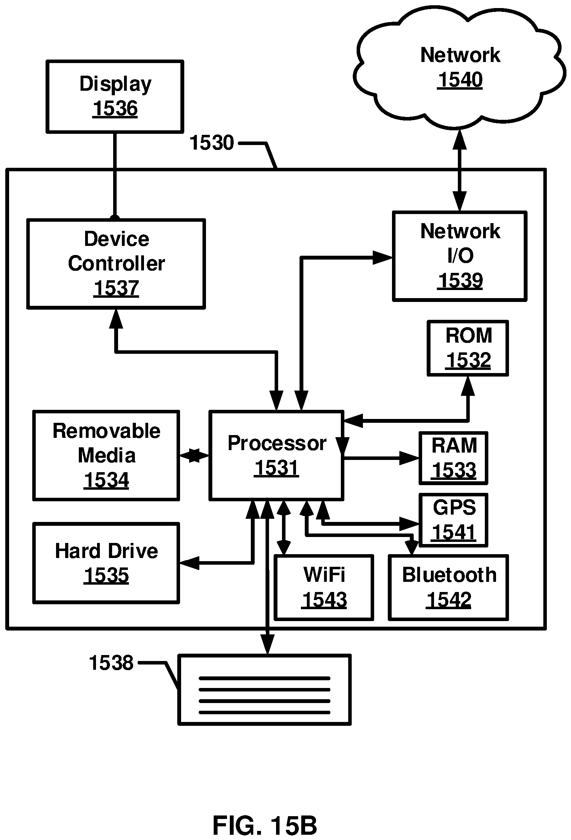

FIG. 15B shows example elements of a computing device that may be used to implement any of the various devices described herein, including, for example, the base station 160A, 160B, 162A, 162B, 220, 1504, 2200, 3020, 3120, 3220, 3320, and/or 3420, the wireless device 106, 156A, 156B, 210, 1502, 2220, 3010, 3110, 3210, 3310 and/or 3410 or any other base station, wireless device, AMF, UPF, network device, or computing device described herein. The computing device 1530 may include one or more processors 1531, which may execute instructions stored in the random-access memory (RAM) 1533, the removable media 1534 (such as a USB drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a GPS microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

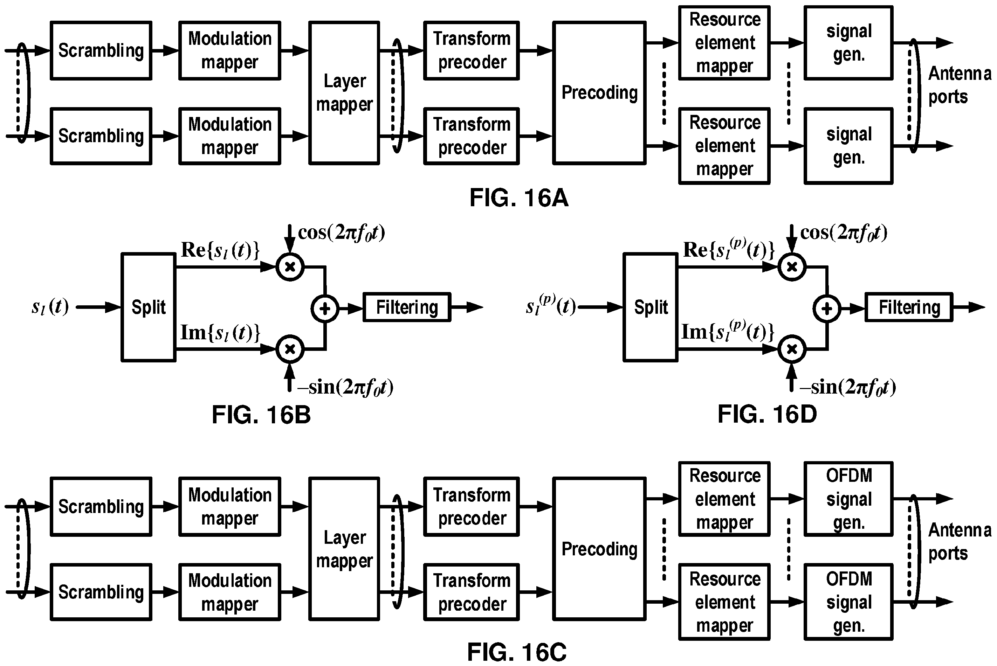

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after it is started and continue running until it is stopped or until it expires. A timer may be started, for example, if it is not running or restarted if it is running. A timer may be associated with a value (e.g., the timer may be started or restarted from a value or may be started from zero and expire after it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A base station may communicate with a wireless device via a wireless network (e.g., a communication network). The communications may use/employ one or more radio technologies (e.g., new radio technologies, legacy radio technologies, and/or a combination thereof). The one or more radio technologies may comprise at least one of: one or multiple technologies related to a physical layer; one or multiple technologies related to a medium access control layer; and/or one or multiple technologies related to a radio resource control layer. One or more enhanced radio technologies described herein may improve performance of a wireless network. System throughput, transmission efficiencies of a wireless network, and/or data rate of transmission may be improved, for example, based on one or more configurations described herein. Battery consumption of a wireless device may be reduced, for example, based on one or more configurations described herein. Latency of data transmission between a base station and a wireless device may be improved, for example, based on one or more configurations described herein. A network coverage of a wireless network may increase, for example, based on one or more configurations described herein.

A base station may send/transmit one or more MAC PDUs to a wireless device. A MAC PDU may be a bit string that is byte aligned (e.g., aligned to a multiple of eight bits) in length. Bit strings may be represented by one or more tables in which the most significant bit may be the leftmost bit of the first line of a table, and the least significant bit may be the rightmost bit on the last line of the table. The bit string may be read from left to right and then in the reading order of the lines (e.g., from the topmost line of the table to the bottommost line of the table). The bit order of a parameter field within a MAC PDU may be represented with the first and most significant bit in the leftmost bit and the last and least significant bit in the rightmost bit.

A MAC SDU may be a bit string that is byte aligned (e.g., aligned to a multiple of eight bits) in length. A MAC SDU may be comprised in a MAC PDU from the first bit onward. A MAC CE may be a bit string that is byte aligned (e.g., aligned to a multiple of eight bits) in length. A MAC subheader may be a bit string that is byte aligned (e.g., aligned to a multiple of eight bits) in length. A MAC subheader may be placed immediately in front of a corresponding MAC SDU, MAC CE, or padding. A wireless device (e.g., the MAC entity of the wireless device) may ignore a value of reserved bits in a downlink (DL) MAC PDU.

A MAC PDU may comprise one or more MAC subPDUs. A MAC subPDU of the one or more MAC subPDUs may comprise: a MAC subheader only (including padding); a MAC subheader and a MAC SDU; a MAC subheader and a MAC CE; a MAC subheader and padding, and/or a combination thereof. The MAC SDU may be of variable size. A MAC subheader may correspond to a MAC SDU, a MAC CE, or padding.

A MAC subheader may comprise: an R field with a one-bit length; an F field with a one-bit length; an LCID field with a multi-bit length; an L field with a multi-bit length; and/or a combination thereof, for example, if the MAC subheader corresponds to a MAC SDU, a variable-sized MAC CE, or padding.

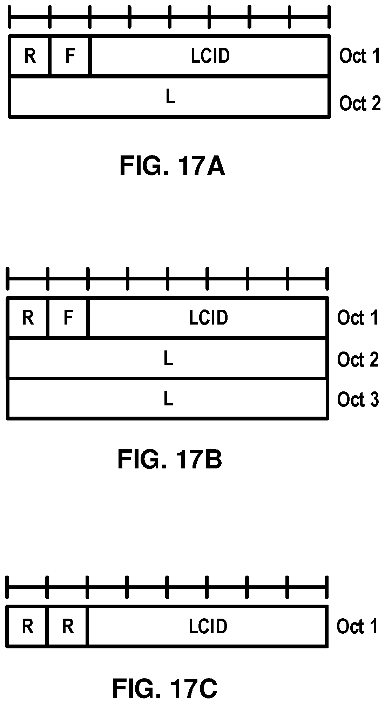

FIG. 17A shows an example of a MAC subheader. The MAC subheader may comprise an R field, an F field, an LCID field, and/or an L field. The LCID field may be six bits in length (or any other quantity of bits). The L field may be eight bits in length (or any other quantity of bits). Each of the R field and the F field may be one bit in length (or any other quantity of bits). FIG. 17B shows an example of a MAC subheader. The MAC subheader may comprise an R field, an F field, an LCID field, and/or an L field. Similar to the MAC subheader shown in FIG. 17A, the LCID field may be six bits in length (or any other quantity of bits), the R field may be one bit in length (or any other quantity of bits), and the F field may be one bit in length (or any other quantity of bits). The L field may be sixteen bits in length (or any other quantity of bits, such as greater than sixteen bits in length). A MAC subheader may comprise: an R field with a two-bit length (or any other quantity of bits) and/or an LCID field with a multi-bit length (or single bit length), for example, if the MAC subheader corresponds to a fixed sized MAC CE or padding. FIG. 17C shows an example of a MAC subheader. In the example MAC subheader shown in FIG. 17C, the LCID field may be six bits in length (or any other quantity of bits), and the R field may be two bits in length (or any other quantity of bits).

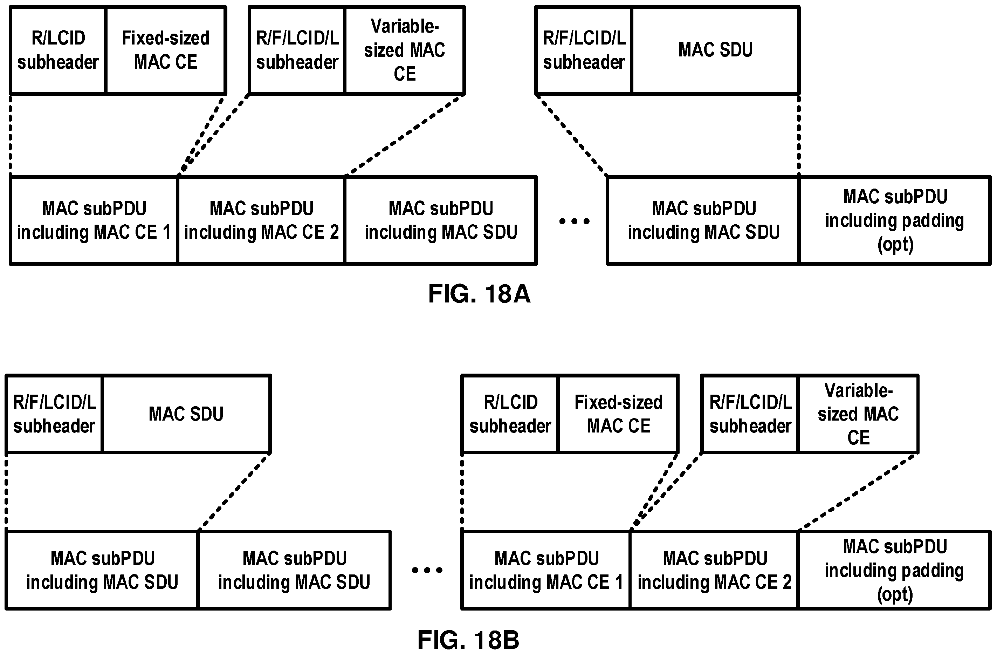

FIG. 18A shows an example of a MAC PDU (e.g., a DL MAC PDU). Multiple MAC CEs, such as MAC CE 1 and 2 shown in FIG. 18A, may be placed together (e.g., located within the same MAC PDU). A MAC subPDU comprising a MAC CE may be placed (e.g., located within a MAC PDU) before any MAC subPDU comprising a MAC SDU or a MAC subPDU comprising padding. MAC CE 1 may be a fixed-sized MAC CE that follows a first-type MAC subheader. The first-type MAC subheader may comprise an R field and an LCID field (e.g., similar to the MAC CE shown in FIG. 17C). MAC CE 2 may be a variable-sized MAC CE that follows a second-type MAC subheader. The second-type MAC subheader may comprise an R field, an F field, an LCID field and an L field (e.g., similar to the MAC CEs shown in FIG. 17A or FIG. 17B). The size of a MAC SDU that follows the second-type MAC subheader may vary.

FIG. 18B shows an example of a MAC PDU (e.g., a UL MAC PDU). Multiple MAC CEs, such as MAC CE 1 and 2 shown in FIG. 18B, may be placed together (e.g., located within the same MAC PDU). A MAC subPDU comprising a MAC CE may be placed (e.g., located within a MAC PDU) after all MAC subPDUs comprising a MAC SDU. The MAC subPDU and/or the MAC subPDU comprising a MAC CE may be placed (e.g., located within a MAC PDU) before a MAC subPDU comprising padding. Similar to the MAC CEs shown in FIG. 18A, MAC CE 1 shown in FIG. 18B may be a fixed-sized MAC CE that follows a first-type MAC subheader. The first-type MAC subheader may comprise an R field and an LCID field (e.g., similar to the MAC CE shown in FIG. 17C). Similar to the MAC CEs shown in FIG. 18A, MAC CE 2 shown in FIG. 18B may be a variable-sized MAC CE that follows a second-type MAC subheader. The second-type MAC subheader may comprise an R field, an F field, an LCID field and an L field (e.g., similar to the MAC CEs shown in FIG. 17A or FIG. 17B). The size of a MAC SDU that follows the second-type MAC subheader may vary.

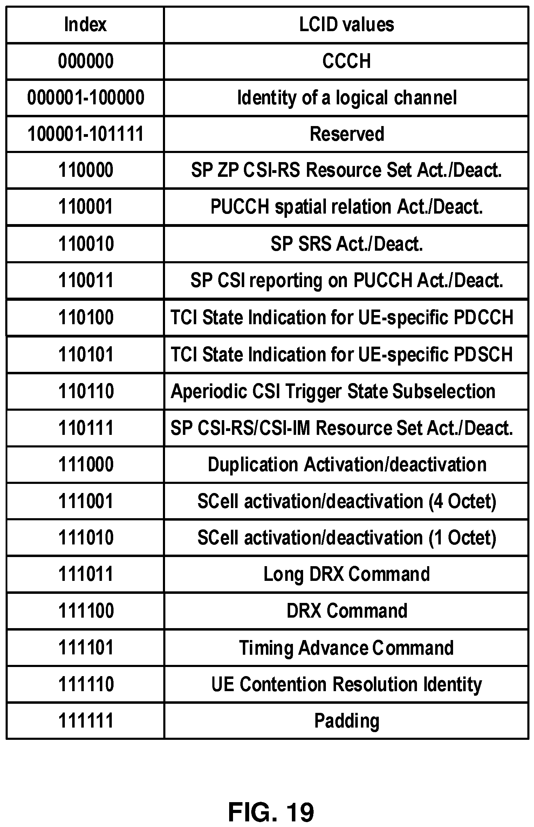

A base station (e.g., the MAC entity of a base station) may send/transmit one or more MAC CEs to a wireless device (e.g., a MAC entity of a wireless device). FIG. 19 shows example LCID values. The LCID values may be associated with one or more MAC CEs. The LCID values may be associated with a downlink channel, such as a DL-SCH. The one or more MAC CEs may comprise at least one of: an semi-persistent zero power CSI-RS (SP ZP CSI-RS) Resource Set Activation/Deactivation MAC CE, a PUCCH spatial relation Activation/Deactivation MAC CE, an SP SRS Activation/-Deactivation MAC CE, an SP CSI reporting on PUCCH Activation/Deactivation MAC CE, a TCI State Indication for wireless device-specific (e.g., UE-specific) PDCCH MAC CE, a TCI State Indication for wireless device-specific (e.g., UE-specific) PDSCH MAC CE, an Aperiodic CSI Trigger State Subselection MAC CE, an SP CSI-RS/CSI interference measurement (CSI-IM) Resource Set Activation/Deactivation MAC CE, a wireless device (e.g., UE) contention resolution identity MAC CE, a timing advance command MAC CE, a DRX command MAC CE, a Long DRX command MAC CE, an SCell activation/deactivation MAC CE (e.g., 1 Octet), an SCell activation/deactivation MAC CE (e.g., 4 Octet), and/or a duplication activation/deactivation MAC CE. A MAC CE, such as a MAC CE sent/transmitted by a base station (e.g., a MAC entity of a base station) to a wireless device (e.g., a MAC entity of a wireless device), may be associated with (e.g., correspond to) an LCID in the MAC subheader corresponding to the MAC CE. Different MAC CEs may correspond to a different LCID in the MAC subheader corresponding to the MAC CE. An LCID having an index value "111011" in a MAC subheader may indicate that a MAC CE associated with the MAC subheader is a long DRX command MAC CE, for example, for a MAC CE associated with the downlink.

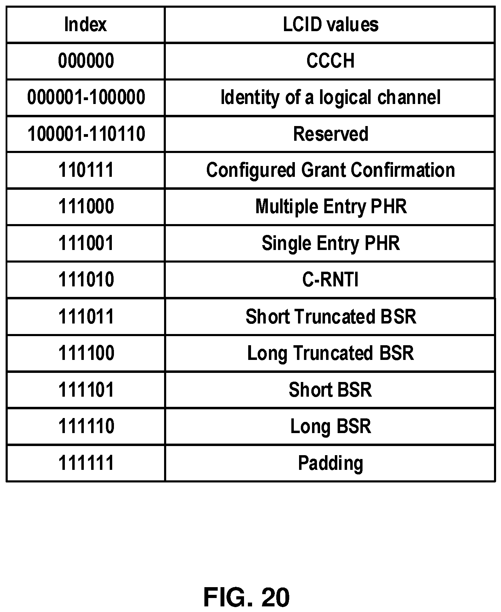

A wireless device (e.g., a MAC entity of a wireless device) may send/transmit to a base station (e.g., a MAC entity of a base station) one or more MAC CEs. FIG. 20 shows an example LCID values that may be associated with the one or more MAC CEs. The LCID values may be associated with an uplink channel, such as a UL-SCH. The one or more MAC CEs may comprise at least one of: a short buffer status report (BSR) MAC CE, a long BSR MAC CE, a C-RNTI MAC CE, a configured grant confirmation MAC CE, a single entry power headroom report (PHR) MAC CE, a multiple entry PHR MAC CE, a short truncated BSR, and/or a long truncated BSR. A MAC CE may be associated with (e.g., correspond to) an LCID in the MAC subheader corresponding to the MAC CE. Different MAC CEs may correspond to a different LCID in the MAC subheader corresponding to the MAC CE. An LCID having an index value "111011" in a MAC subheader may indicate that a MAC CE associated with the MAC subheader is a short-truncated command MAC CE, for example, for a MAC CE associated with the uplink.

Two or more CCs may be aggregated, such as in carrier aggregation (CA). A wireless device may simultaneously receive and/or transmit data via one or more CCs, for example, depending on capabilities of the wireless device (e.g., using the technique of CA). A wireless device may support CA for contiguous CCs and/or for non-contiguous CCs. CCs may be organized into cells CCs may be organized into one PCell and one or more SCells.

A wireless device may have an RRC connection (e.g., one RRC connection) with a network, for example, if the wireless device is configured with CA. During an RRC connection establishment/re-establishment/handover, a cell providing/sending/configuring NAS mobility information may be a serving cell. During an RRC connection re-establishment/handover procedure, a cell providing/sending/configuring a security input may be a serving cell. The serving cell may be a PCell. A base station may send/transmit, to a wireless device, one or more messages comprising configuration parameters of a plurality of SCells, for example, depending on capabilities of the wireless device.

A base station and/or a wireless device may use/employ an activation/deactivation mechanism of an SCell, for example, if configured with CA. The base station and/or the wireless device may use/employ an activation/deactivation mechanism of an SCell, for example, to improve battery use and/or power consumption of the wireless device. A base station may activate or deactivate at least one of one or more SCells, for example, if a wireless device is configured with the one or more SCells. An SCell may be deactivated unless an SCell state associated with the SCell is set to an activated state (e.g., "activated") or a dormant state (e.g., "dormant"), for example, after configuring the SCell.

A wireless device may activate/deactivate an SCell. A wireless device may activate/deactivate a cell, for example, based on (e.g., after or in response to) receiving an SCell Activation/Deactivation MAC CE. The SCell Activation/Deactivation MAC CE may comprise one or more fields associated with one or more SCells, respectively, to indicate activation or deactivation of the one or more SCells. The SCell Activation/Deactivation MAC CE may correspond to one octet comprising seven fields associated with up to seven SCells, respectively, for example, if the aggregated cell has less than eight SCells. The SCell Activation/Deactivation MAC CE may comprise an R field. The SCell Activation/Deactivation MAC CE may comprise a plurality of octets comprising more than seven fields associated with more than seven SCells, for example, if the aggregated cell has more than seven SCells.

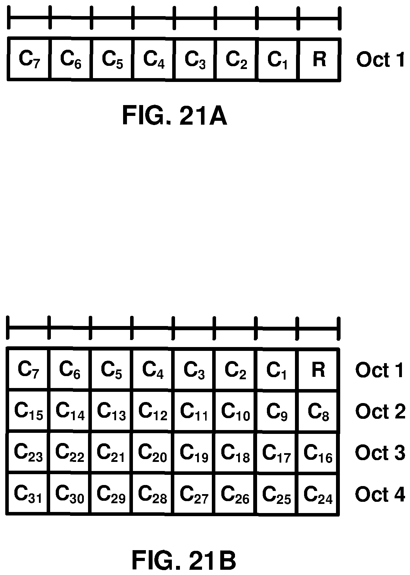

FIG. 21A shows an example SCell Activation/Deactivation MAC CE of one octet. A first MAC PDU subheader comprising a first LCID (e.g., '111010' as shown in FIG. 19) may indicate/identify the SCell Activation/Deactivation MAC CE of one octet. The SCell Activation/Deactivation MAC CE of one octet may have a fixed size. The SCell Activation/-Deactivation MAC CE of one octet may comprise a single octet. The single octet may comprise a first quantity/number of C-fields (e.g., seven or any other quantity/number) and a second quantity/number of R-fields (e.g., one or any other quantity/number).

FIG. 21B shows an example SCell Activation/Deactivation MAC CE of four octets. A second MAC PDU subheader comprising a second LCID (e.g., '111001' as shown in FIG. 19) may indicate/identify the SCell Activation/-Deactivation MAC CE of four octets. The SCell Activation/Deactivation MAC CE of four octets may have a fixed size. The SCell Activation/Deactivation MAC CE of four octets may comprise four octets. The four octets may comprise a third quantity/number of C-fields (e.g., 31 or any other quantity/number) and a fourth quantity/number of R-fields (e.g., 1 or any other quantity/number).

As shown in FIG. 21A and/or FIG. 21B, a Ci field may indicate an activation/deactivation status of an SCell with/corresponding to an SCell index i, for example, if an SCell with/corresponding to SCell index i is configured. An SCell with an SCell index i may be activated, for example, if the Ci field is set to one. An SCell with an SCell index i may be deactivated, for example, if the Ci field is set to zero. The wireless device may ignore the Ci field, for example, if there is no SCell configured with SCell index i. An R field may indicate a reserved bit. The R field may be set to zero or any other value (e.g., for other purposes).

A base station may configure a wireless device with uplink (UL) BWPs and downlink (DL) BWPs to enable bandwidth adaptation (BA) on a PCell. The base station may further configure the wireless device with at least DL BWP(s) (i.e., there may be no UL BWPs in the UL) to enable BA on an SCell, for example, if carrier aggregation is configured. An initial active BWP may be a first BWP used for initial access, for example, for a PCell. A first active BWP may be a second BWP configured for the wireless device to operate on a SCell upon the SCell being activated. A base station and/or a wireless device may independently switch a DL BWP and an UL BWP, for example, in paired spectrum (e.g., FDD). A base station and/or a wireless device may simultaneously switch a DL BWP and an UL BWP, for example, in unpaired spectrum (e.g., TDD).

A base station and/or a wireless device may switch a BWP between configured BWPs using a DCI message or a BWP inactivity timer. The base station and/or the wireless device may switch an active BWP to a default BWP based on (e.g., after or in response to) an expiry of the BWP inactivity timer associated with the serving cell, for example, if the BWP inactivity timer is configured for a serving cell. The default BWP may be configured by the network. One UL BWP for an uplink carrier (e.g., each uplink carrier) and one DL BWP may be active at a time in an active serving cell, for example, if FDD systems are configured with BA. One DL/UL BWP pair may be active at a time in an active serving cell, for example, for TDD systems. Operating on the one UL BWP and the one DL BWP (or the one DL/UL pair) may improve wireless device battery consumption. BWPs other than the one active UL BWP and the one active DL BWP that the wireless device may work on may be deactivated. The wireless device may not monitor PDCCH transmission, for example, on deactivated BWPs. The wireless device may not send (e.g., transmit) on PUCCH, PRACH, and UL-SCH, for example, on deactivated BWPs.

A serving cell may be configured with at most a first number/quantity (e.g., four) of BWPs. There may be one active BWP at any point in time, for example, for an activated serving cell. A BWP switching for a serving cell may be used to activate an inactive BWP and deactivate an active BWP at a time. The BWP switching may be controlled by a PDCCH transmission indicating a downlink assignment or an uplink grant. The BWP switching may be controlled by a BWP inactivity timer (e.g., bwp-Inactivity Timer). The BWP switching may be controlled by a wireless device (e.g., a MAC entity of the wireless device) based on (e.g., after or in response to) initiating a Random Access procedure. One BWP may be initially active without receiving a PDCCH transmission indicating a downlink assignment or an uplink grant, for example, upon addition of an SpCell or activation of an SCell. The active BWP for a serving cell may be indicated by configuration parameter(s) (e.g., parameters of RRC message) and/or PDCCH transmission. A DL BWP may be paired with a UL BWP for unpaired spectrum, and BWP switching may be common for both UL and DL.

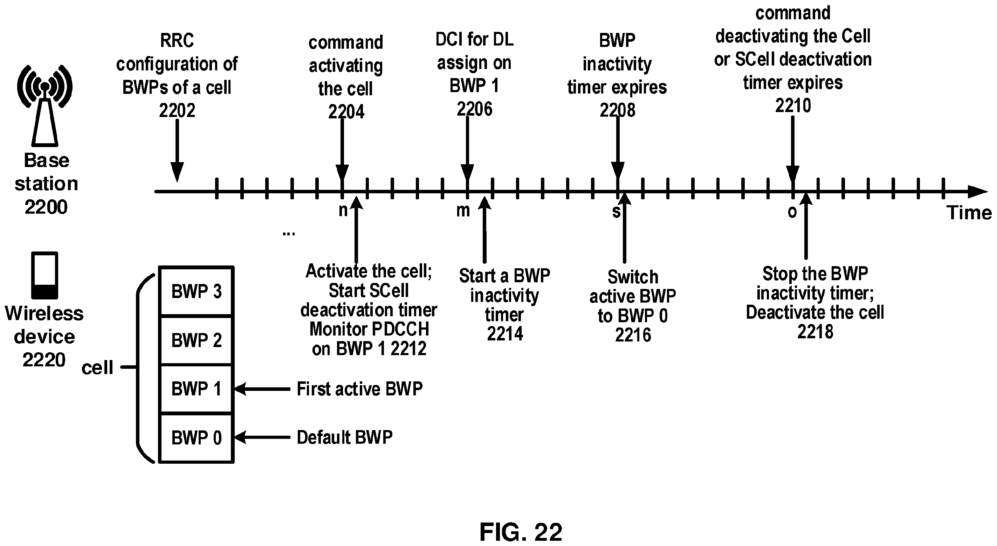

FIG. 22 shows an example of BWP activation/deactivation. The BWP activation/deactivation may be on a cell (e.g., PCell or SCell). The BWP activation/deactivation may be associated with BWP switching (e.g., BWP switching may comprise the BWP activation/deactivation). A wireless device 2220 may receive (e.g., detect) at step 2202, (e.g., from a base station 2200), at least one message (e.g., RRC message) comprising parameters of a cell and one or more BWPs associated with the cell. The RRC message may comprise at least one of: RRC connection reconfiguration message (e.g., RRCReconfiguration), RRC connection reestablishment message (e.g., RRCRestablishment), and/or RRC connection setup message (e.g., RRCSetup). Among the one or more BWPs, at least one BWP may be configured as the first active BWP (e.g., BWP 1), one BWP as the default BWP (e.g., BWP 0). The wireless device 2220 may receive (e.g., detect) a command at step 2204 (e.g., RRC message, MAC CE or DCI message) to activate the cell at an nth slot. The wireless device 2220 may not receive (e.g., detect) a command activating a cell, for example, a PCell. The wireless device 2220 may activate the PCell at step 2212, for example, after the wireless device 2220 receives/detects RRC message comprising configuration parameters of the PCell. The wireless device 2220 may start monitoring a PDCCH transmission on BWP 1 based on (e.g., after or in response to) activating the PCell at step 2212.

The wireless device 2220 may start (or restart) at step 2214, a BWP inactivity timer (e.g., bwp-Inactivity Timer) at an mth slot based on (e.g., after or in response to) receiving a DCI message 2206 indicating DL assignment on BWP 1. The wireless device 2220 may switch back at step 2216 to the default BWP (e.g., BWP 0) as an active BWP, for example, if the BWP inactivity timer expires at step 2208, at sth slot. At step 2210, the wireless device 2220 may deactivate the cell and/or stop the BWP inactivity timer, for example, if a secondary cell deactivation timer (e.g., sCellDeactivationTimer) expires at step 2210 (e.g., if the cell is a SCell). The wireless device 2220 may not deactivate the cell and may not apply or use a secondary cell deactivation timer (e.g., sCellDeactivationTimer) on the PCell, for example, based on the cell being a PCell.

A wireless device (e.g., a MAC entity of the wireless device) may apply or use various operations on an active BWP for an activated serving cell configured with a BWP. The various operations may comprise at least one of: sending (e.g., transmitting) on UL-SCH, sending (e.g., transmitting) on RACH, monitoring a PDCCH transmission, sending (e.g., transmitting) PUCCH, receiving DL-SCH, and/or (re-) initializing any suspended configured uplink grants of configured grant Type 1 according to a stored configuration, if any.

A wireless device (e.g., a MAC entity of the wireless device) may not perform certain operations, for example, on an inactive BWP for an activated serving cell (e.g., each activated serving cell) configured with a BWP. The certain operations may include at least one of sending (e.g., transmit) on UL-SCH, sending (e.g., transmit) on RACH, monitoring a PDCCH transmission, sending (e.g., transmit) PUCCH, sending (e.g., transmit) SRS, or receiving DL-SCH. The wireless device (e.g., the MAC entity of the wireless device) may clear any configured downlink assignment and configured uplink grant of configured grant Type 2, and/or suspend any configured uplink grant of configured Type 1, for example, on the inactive BWP for the activated serving cell (e.g., each activated serving cell) configured with the BWP.

A wireless device may perform a BWP switching of a serving cell to a BWP indicated by a PDCCH transmission, for example, if a wireless device (e.g., a MAC entity of the wireless device) receives/detects the PDCCH transmission for the BWP switching and a random access procedure associated with the serving cell is not ongoing. A bandwidth part indicator field value may indicate the active DL BWP, from the configured DL BWP set, for DL receptions, for example, if the bandwidth part indicator field is configured in DCI format 1_1. A bandwidth part indicator field value may indicate the active UL BWP, from the configured UL BWP set, for UL transmissions, for example, if the bandwidth part indicator field is configured in DCI format 0_1.

A wireless device may be provided by a higher layer parameter such as a default DL BWP (e.g., Default-DL-BWP) among the configured DL BWPs, for example, for a primary cell. A default DL BWP may be the initial active DL BWP, for example, if a wireless device is not provided with the default DL BWP by the higher layer parameter (e.g., Default-DL-BWP). A wireless device may be provided with a higher layer parameter such as a value of a timer for the primary cell (e.g., bwp-InactivityTimer). The wireless device may increment the timer, if running, every interval of 1 millisecond for frequency range 1 or every 0.5 milliseconds for frequency range 2, for example, if the wireless device may not detect a DCI format 1_1 for paired spectrum operation or if the wireless device may not detect a DCI format 1_1 or DCI format 0_1 for unpaired spectrum operation during the interval.

Procedures of a wireless device on the secondary cell may be substantially the same as on the primary cell using a timer value for a secondary cell and the default DL BWP for the secondary cell, for example, if the wireless device is configured for the secondary cell with a higher layer parameter (e.g., Default-DL-BWP) indicating a default DL BWP among the configured DL BWPs and the wireless device is configured with a higher layer parameter (e.g., bwp-InactivityTimer) indicating the timer value. A wireless device may use an indicated DL BWP and an indicated UL BWP on a secondary cell respectively as a first active DL BWP and a first active UL BWP on the secondary cell or carrier, for example, if the wireless device is configured by a higher layer parameter (e.g., Active-BWP-DL-SCell) associated with the first active DL BWP and by a higher layer parameter (e.g., Active-BWP-UL-SCell) associated with the first active UL BWP on the secondary cell or carrier.

A set of PDCCH candidates for a wireless device to monitor may be referred to as PDCCH search space sets. A search space set may comprise a CSS set or a USS set. A wireless device may monitor PDCCH transmission candidates in one or more of the following search spaces sets: a TypeO-PDCCH CSS set configured by pdcch-ConfigSIB1 in MIB or by searchSpaceSIB1 in PDCCH-ConfigCommon or by searchSpaceZero in PDCCH-ConfigCommon for a DCI format with CRC scrambled by a SI-RNTI on the primary cell of the MCG, a Type0A-PDCCH CSS set configured by searchSpaceOtherSystemInformation in PDCCH-ConfigCommon for a DCI format with CRC scrambled by a SI-RNTI on the primary cell of the MCG, a Type1-PDCCH CSS set configured by ra-SearchSpace in PDCCH-ConfigCommon for a DCI format with CRC scrambled by a RA-RNTI, a MsgB-RNTI, or a TC-RNTI on the primary cell, a Type2-PDCCH CSS set configured by pagingSearchSpace in PDCCH-ConfigCommon for a DCI format with CRC scrambled by a P-RNTI on the primary cell of the MCG, a Type3-PDCCH CSS set configured by SearchSpace in PDCCH-Config with searchSpaceType = common for DCI formats with CRC scrambled by INT-RNTI, SFI-RNTI, TPC-PUSCH-RNTI, TPC-PUCCH-RNTI, TPC-SRS-RNTI, CI-RNTI, or PS-RNTI and, for the primary cell, C-RNTI, MCS-C-RNTI, or CS-RNTI(s), and a USS set configured by SearchSpace in PDCCH-Config with searchSpaceType = ue-Specific for DCI formats with CRC scrambled by C-RNTI, MCS-C-RNTI, SP-CSI-RNTI, CS-RNTI(s), SL-RNTI, SL-CS-RNTI, or SL-L-CS-RNTI.

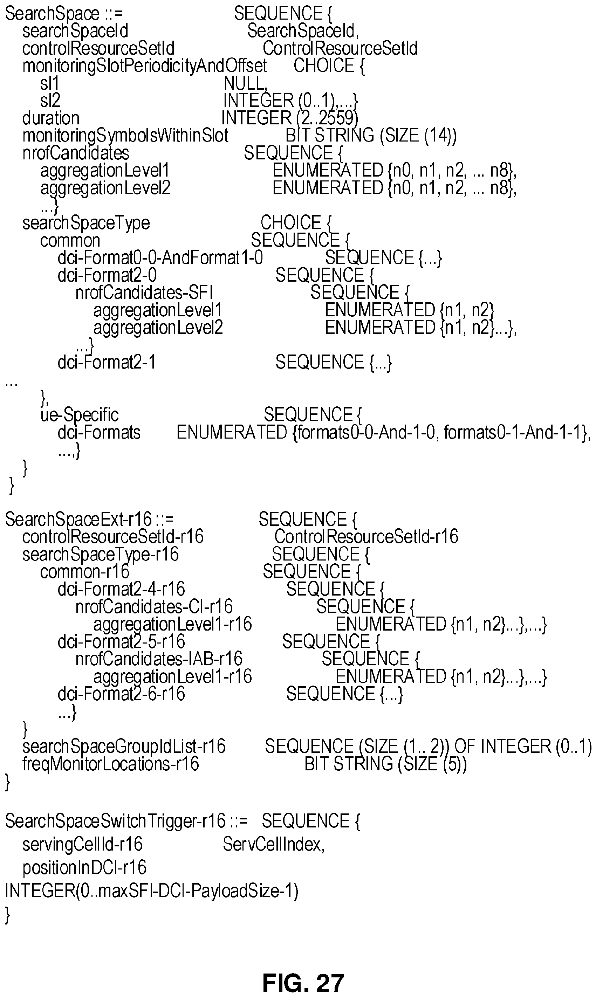

A wireless device may determine a PDCCH transmission monitoring occasion on an active DL BWP based on one or more PDCCH transmission configuration parameters (e.g., as described with respect to FIG. 27) comprising at least one of: a PDCCH transmission monitoring periodicity, a PDCCH transmission monitoring offset, or a PDCCH transmission monitoring pattern within a slot. For a search space set (SS $s$), the wireless device may determine that a PDCCH transmission monitoring occasion(s) exists in a slot with number/quantity $n_{s,f}^{\mu}$ in a frame with number/quantity $n_f$ if

$$\left(n_f \cdot N_{\text{slot}}^{\text{frame},\mu} + n_{s,f}^{\mu} - o_s\right) \bmod k_s = 0$$

. $N_{\text{slot}}^{\text{frame},\mu}$ may be a number/quantity of slots in a frame if numerology $\mu$ is

configured. $o_s$ may be a slot offset indicated in the PDCCH transmission configuration parameters. $k_s$ may be a PDCCH transmission monitoring periodicity indicated in the PDCCH transmission configuration parameters. The wireless device may monitor PDCCH transmission candidates for the search space set for $T_s$ consecutive slots, starting from slot $n_{s,f}^{\mu}$, and may not monitor PDCCH transmission candidates for search space set $s$ for the next $k_s$ - $T_s$ consecutive slots. A USS at CCE aggregation level $L \in \{1, 2, 4, 8, 16\}$ may be defined by a set of PDCCH transmission candidates for CCE aggregation level L.

A wireless device may decide, for a search space set $s$ associated with CORESET $p$, CCE indexes for aggregation level $L$ corresponding to PDCCH transmission candidate $m_{s,n_{CI}}$ of the search space set in slot $n_{s,f}^{\mu}$ for an active DL BWP of a serving cell corresponding to carrier indicator field value $n_{CI}$ as $L$ ·

$$\left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \lfloor N_{CCE,p}/L \rfloor \right\} + i$$

, where, $Y_{p,n_{s,f}^{\mu}} = 0$ for any CSS;

$$Y_{p,n_{s,f}^{\mu}} = \left( A_p \cdot Y_{p,n_{s,f}^{\mu}-1} \right) mod D$$ for a USS, $Y_{p,-1} = n_{RNTI} \neq 0$, $A_p = 39827$ for $p \bmod 3 = 0$, $A_p = 39829$ for $p \bmod 3 = 1$, $A_p = 39839$ for $p \bmod 3 = 2$, and $D = 65537$ ; $i = 0, \cdots, L - 1$ ; $N_{CCE,p}$ is the number/quantity of CCEs, numbered/quantified from 0 to $N_{CCE,p}$ - 1, in CORESET $p$; $n_{CI}$ is the carrier indicator field value if the wireless device is configured with a carrier indicator field by *CrossCarrierSchedulingConfig* for the serving cell on which PDCCH transmission is monitored; otherwise, including for any CSS, $n_{CI} = 0$ ; $m_{s,n_{CI}} = 0,\ldots,M_{s,n_{CI}}^{(L)} - 1$ , where $M_{s,n_{CI}}^{(L)}$ is the number/quantity of PDCCH transmission candidates the wireless device is configured to monitor for aggregation level $L$ of a search space set s for a serving cell corresponding to $n_{CI}$; for any CSS, $M_{s,max}^{(L)} = M_{s,0}^{(L)}$ ; for a USS, $M_{s,max}^{(L)}$ is the maximum of $M_{s,n_{CI}}^{(L)}$ over configured $n_{CI}$ values for a CCE aggregation level L of search space set $s$; and the RNTI value used for $n_{RNTI}$ is the C-RNTI.

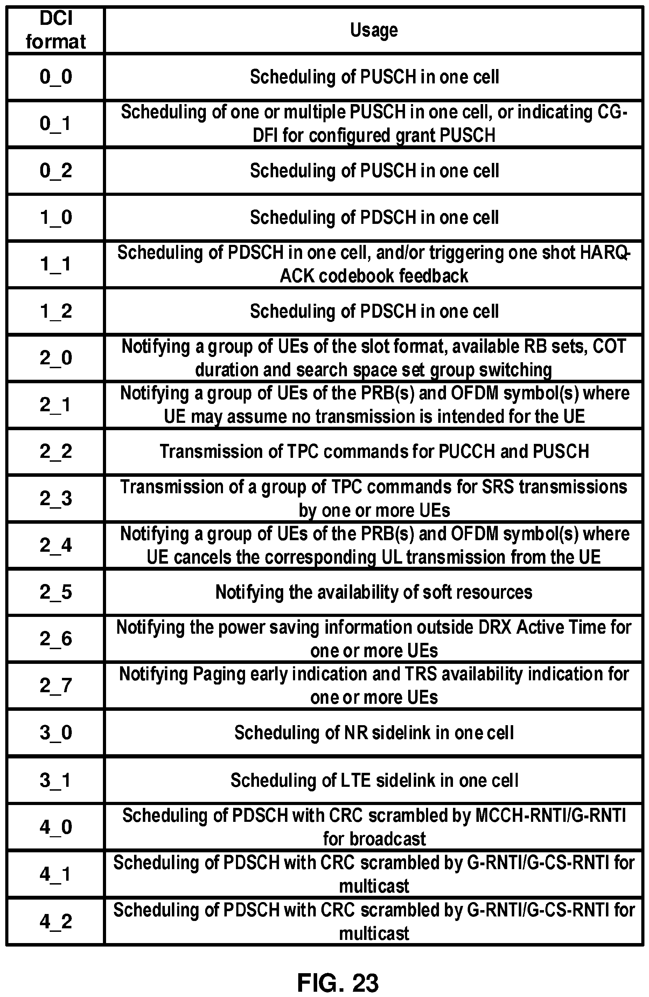

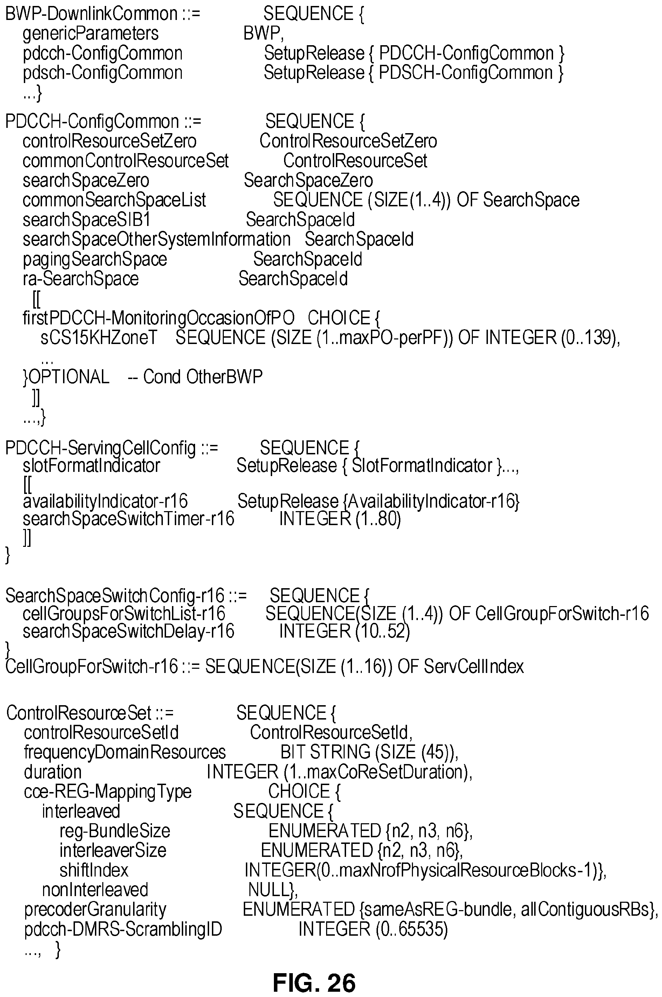

A wireless device may monitor a set of PDCCH transmission candidates according to configuration parameters of a search space set comprising a plurality of search spaces. The wireless device may monitor a set of PDCCH transmission candidates in one or more CORESETs for detecting one or more DCI messages. A CORESET may be configured, for example, as described with respect to FIG. 26. Monitoring may comprise decoding one or more PDCCH transmission candidates of the set of the PDCCH transmission candidates according to the monitored DCI formats. Monitoring may comprise decoding DCI content of one or more PDCCH transmission candidates with possible (or configured) PDCCH transmission locations, possible (or configured) PDCCH transmission formats (e.g., number/quantity of CCEs, number/quantity of PDCCH transmission candidates in common search spaces, and/or number/quantity of PDCCH transmission candidates in the wireless device-specific search spaces (e.g., the UE-specific search spaces)) and possible (or configured) DCI formats. The decoding may be referred to as blind decoding. The possible DCI formats may be based on examples of FIG. 23.

FIG. 23 shows examples of various DCI formats. The various DCI formats may be used, for example, by a base station to send (e.g., transmit) control information (e.g., to a wireless device and/or to be used by the wireless device) for PDCCH transmission monitoring. Different DCI formats may comprise different DCI fields and/or have different DCI payload sizes. Different DCI formats may have different signaling purposes. DCI format 0_0 may be used to schedule PUSCH transmission in one cell. DCI format 0_1 may be used to schedule one or multiple PUSCH transmissions in one cell or indicate CG-DFI (configured grant-Downlink Feedback Information) for configured grant PUSCH transmission, etc. The DCI format(s), that the wireless device may monitor for reception via a search space, may be configured.

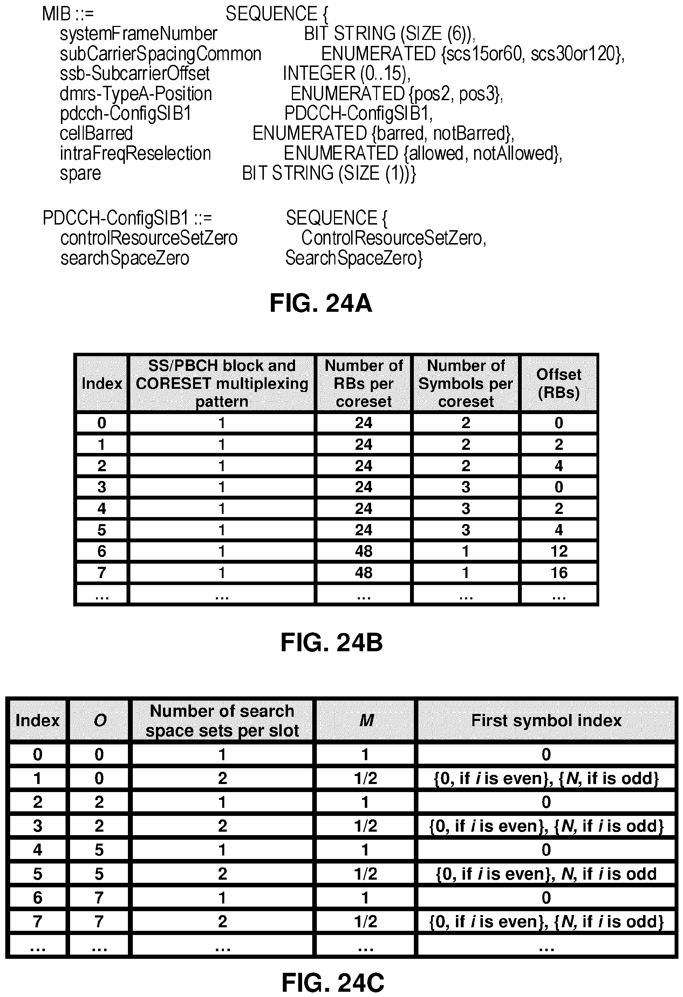

FIG. 24A shows an example MIB message. FIG. 24A shows example configuration parameters of a MIB of a cell. The cell may be a PCell (or any other cell). A wireless device may receive a MIB via a PBCH. The wireless device may receive the MIB, for example, based on receiving a PSS and/or an SSS. The configuration parameters of a MIB may comprise/indicate a SFN (e.g., indicated via a higher layer parameter systemFrameNumber), subcarrier spacing indication (e.g., indicated via a higher layer parameter subCarrierSpacingCommon), a frequency domain offset (e.g., indicated via a higher layer parameter ssb-SubcarrierOffset) between SSB and overall resource block grid in number of subcarriers, a parameter indicating whether the cell is barred (e.g., indicated via a higher layer parameter cellBarred), a DMRS position indication (e.g., indicated via a higher layer parameter dmrs-TypeA-Position) indicating position of DMRS, parameters of a CORESET and a search space of a PDCCH (e.g., indicated via a higher layer parameter pdcch-ConfigSIB1) comprising a common CORESET, a common search space and necessary PDCCH parameters, etc. Each of the higher layer parameters may be indicated via one or bits. For example, the SFN may be indicated using 6 bits (or any other quantity of bits).

A configuration parameter (e.g., pdcch-ConfigSIB1) may comprise a first parameter (e.g., controlResource-

SetZero) indicating a common CORESET of an initial BWP of the cell. The common CORESET may be associated with an indicator/index (e.g., 0, or any other indicator). For example, the common CORESET may be CORESET 0. The first parameter may be an integer between 0 and 15 (or any other integer). Each integer (e.g., between 0 and 15, or any other integer) may indicate/identify a configuration of CORESET 0.

FIG. 24B shows an example configuration of a CORESET. The CORESET may be CORESET 0 (or any other CORESET). A wireless device may determine an SSB and CORESET 0 multiplexing pattern, a quantity/number of RBs for CORESET 0, a quantity/number of symbols for CORESET 0, an RB offset for CORESET 0, for example, based on a value of the first parameter (e.g., controlResourceSetZero).

A higher layer parameter (e.g., pdcch-ConfigSIB1) may comprise a second parameter (e.g., searchSpaceZero). The second parameter may indicate a common search space of the initial BWP of the cell. The common search space may be associated with an indicator/index (e.g., 0, or any other indicator). For example, the common search space may be search space 0. The second parameter may be an integer between 0 and 15 (or any other integer). Each integer (e.g., between 0 and 15, or any other integer) may identify a configuration of search space 0.

FIG. 24C shows an example configuration of a search space. The search space may be search space 0 (or any other search space). A wireless device may determine one or more parameters (e.g., O, M) for slot determination for PDCCH monitoring, a first symbol indicator/index for PDCCH monitoring, and/or a quantity/number of search spaces per slot, for example, based on a value of the second parameter (e.g., searchSpaceZero). For example, for operation without shared spectrum channel access and for the SS/PBCH block and CORESET multiplexing pattern 1, the wireless device may monitor PDCCH (e.g., in the TypeO-PDCCH CSS set) over two slots. For SS/PBCH block with index *i,* the wireless device may determine an index of slot $n_0$ as $n_0 = (O \cdot 2^\mu + \lfloor i \cdot M \rfloor) \bmod N_{\text{slot}}^{\text{frame},\mu}$ . Slot $n_0$ is may be in a frame with a SFN SFN$_C$ that satisfies the condition SFN$_c$mod2 = 0 (e.g., if $\lfloor (O \cdot 2^\mu + \lfloor i \cdot M \rfloor)/N_{\text{slot}}^{\text{frame},\mu} \rfloor \bmod 2 = $ 0 ), or in a frame with a SFN that SFN$_C$ satisfies the condition SFN$_c$mod2 = 1 (e.g., if $\lfloor (O \cdot 2^\mu + \lfloor i \cdot M \rfloor)/N_{\text{slot}}^{\text{frame},\mu} \rfloor \bmod 2 = 1$ ) , where $\mu \in$ {0,1,2,3,5,6} based on the SCS for PDCCH receptions in the CORESET.

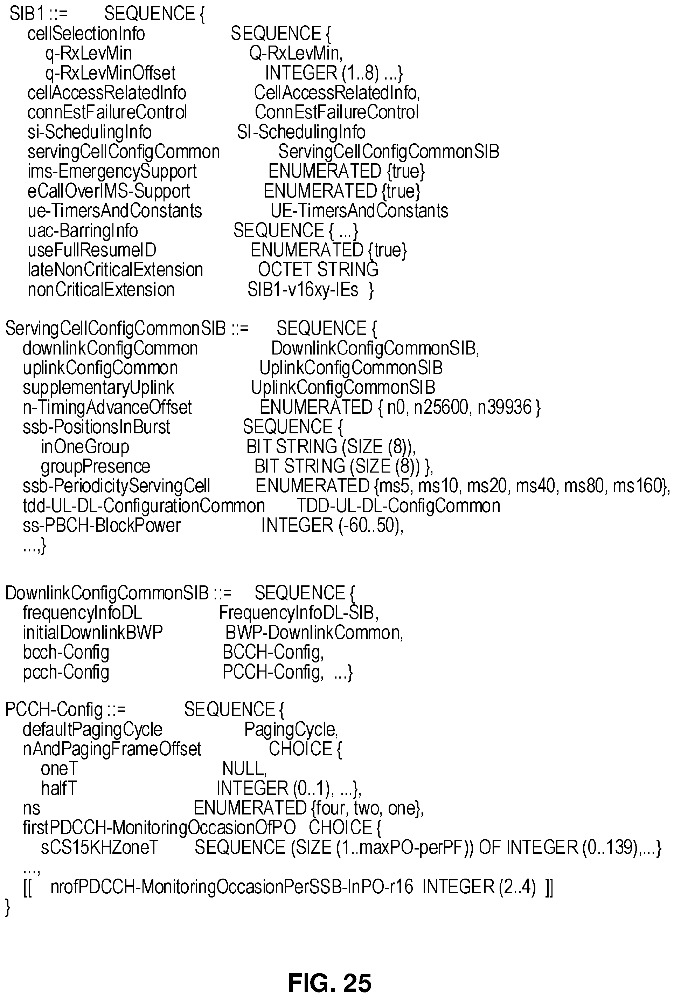

A wireless device may monitor a PDCCH for receiving DCI. The wireless device may monitor a search space 0 of a CORESET 0 for receiving the DCI. The DCI may schedule a SIB1. For example, a SIB1 message may be similar to as described with respect to FIG. 25. The wireless device may receive the DCI with CRC scrambled with a SI-RNTI dedicated for receiving the SIB 1.

FIG. 25 shows an example SIB. The SIB may comprise one or more configuration parameters (e.g., RRC configuration parameters). A SIB (e.g., SIB1) may be sent/transmitted to one or more wireless devices. For example, the SIB may be broadcasted to multiple wireless devices. The SIB may contain information for evaluating/determining whether a wireless device is allowed to access a cell, information of paging configuration, and/or scheduling configuration of other system information. A SIB may comprise radio resource configuration information that may be common for multiple wireless devices and barring information used/applied to a unified access control. A base station may send/transmit, to a wireless device (or a plurality of wireless devices), one or more SIB information messages. As shown in FIG. 25, parameters of the one or more SIB information messages may comprise: one or more parameters for cell selection related to a serving cell (e.g., cellSelectionInfo), one or more configuration parameters of a serving cell (e.g., in ServingCell-ConfigCommonSIB information element (IE)), and/or one or more other parameters. The ServingCellConfigCommonSIB IE may comprise at least one of: common downlink parameters (e.g., in DownlinkConfigCommonSIB IE) of the serving cell, common uplink parameters (e.g., in UplinkConfigCommonSIB IE) of the serving cell, and/or other parameters.

A DownlinkConfigCommonSIB IE may comprise parameters of an initial downlink BWP (e.g., indicated via initialDownlinkBWP IE) of the serving cell (e.g., SpCell). The parameters of the initial downlink BWP may be comprised in a BWP-DownlinkCommon IE (e.g., as shown in FIG. 26). The BWP-DownlinkCommon IE may be used to configure common parameters of a downlink BWP of the serving cell. The base station may configure a parameter (e.g., locationAndBandwidth) such that the initial downlink BWP may comprise an entire CORESET (e.g., CORESET 0) of the serving cell in the frequency domain. The wireless device may use/apply the parameter locationAndBandwidth based on reception of the parameter. The wireless device may use/apply the parameter locationAndBandwidth to determine the frequency position of signals in relation to the frequency as indicated via locationAndBandwidth. The wireless device may keep CORESET 0, for example, until after reception of an RRC setup message (e.g., RRCSetup), RRC resume message (e.g., RRCResume) and/or an RRC re-establishment message (e.g., RRCReestablishment).

The DownlinkConfigCommonSIB IE may comprise parameters of a paging channel configuration. The parameters may comprise a paging cycle value (T, e.g., indicated by defaultPagingCycle IE), a parameter indicating total quantity/number (N) of paging frames (PFs) (e.g., indicated by nAndPagingFrameOffset IE) and paging frame offset in a paging DRX cycle (e.g., indicated by parameter PF_offset), a quantity/number (Ns) for total paging occasions (POs) per PF, a first PDCCH monitoring occasion indication parameter (e.g., firstPDCCH-MonitoringOccasionofPO IE) indicating a first PDCCH monitoring occasion for paging of each PO of a PF. The wireless device may monitor a PDCCH for receiving a paging message, for example, based on parameters of a PCCH configuration.

A parameter (e.g., first-PDCCH-MonitoringOccasionOfPO) may be signaled in SIB1 for paging in initial DL BWP. The parameter first-PDCCH-MonitoringOccasionOfPO may be signaled in the corresponding BWP configuration, for example, for paging in a DL BWP other than the initial DL BWP.

FIG. 26 shows example RRC configuration parameters. The configuration parameters may be RRC configuration parameters for a downlink BWP of a serving cell. The configuration parameters may be indicated via a higher layer parameter BWP-DownlinkCommon IE. A base station may send/transmit to a wireless device (or a plurality of wireless devices) one or more configuration parameters of a downlink BWP (e.g., initial downlink BWP) of a serving cell. The one or more configuration parameters of the downlink BWP may comprise: one or more generic BWP parameters of the downlink BWP, one or more cell-specific parameters for PDCCH of the downlink BWP (e.g., in pdcch-ConfigCommon IE), one or more cell specific parameters for the PDSCH of the BWP (e.g., in pdsch-ConfigCommon IE), and/or one or more other parameters. A pdcch-ConfigCommon IE may comprise parameters of CORESET 0 (e.g., indicated via parameter controlResourceSetZero) which may be used in any common or wireless device-specific search spaces. A value of the controlResourceSetZero may be interpreted in the same manner as the corresponding bits in MIB parameter pdcch-ConfigSIB1. A pdcch-ConfigCommon IE may comprise parameters (e.g., in commonControlResourceSet) of an additional common control resource set which may be configured and used for any common or wireless device-specific search space. The network may use a parameter ControlResourceSetId other than 0 for this ControlResourceSet, for example, if the network configures commonControlResourceSet. The network may configure the commonControlResourceSet in SIB 1 such that the SIB 1 is contained within the bandwidth of CORESET 0. A pdcch-ConfigCommon IE may comprise parameters (e.g., in commonSearchSpaceList) of a list of additional common search spaces. Parameters of a search space may be implemented based on example of FIG. 27. A pdcch-ConfigCommon IE may indicate, from a list of search spaces, a search space for paging (e.g., via parameter pagingSearchSpace), a search space for random access procedure (e.g., via parameter ra-SearchSpace), a search space for SIB1 message (e.g., via parameter searchSpace-SIB1), a common search space 0 (e.g., via parameter searchSpaceZero), and/or one or more other search spaces.

A CORESET may be associated with a CORESET indicator/index (e.g., indicated via parameter ControlResourceSetId). A CORESET may be implemented based on examples described with respect to FIG. 14A and/or FIG. 14B. The CORESET index 0 may identify a common CORESET configured in MIB and in ServingCellConfigCommon (e.g., indicated via controlResourceSetZero). The CORESET index 0 may not be used in the ControlResourceSet IE. The CORESET index with other values may identify CORESETs configured by dedicated signaling or in SIB1. The controlResourceSetId may be unique among the BWPs of a serving cell. A CORESET may be associated with coresetPoolIndex indicating an index of a CORESET pool for the CORESET. A CORESET may be associated with a time duration parameter (e.g., duration) indicating contiguous time duration of the CORESET (e.g., in terms of a quantity/number of symbols). Configuration parameters of a CORESET may comprise at least one of: frequency resource indication (e.g., frequencyDomainResources), a CCE-REG mapping type indicator (e.g., cce-REG-MappingType), a plurality of TCI states, and/or an indicator indicating whether a TCI is present in DCI, etc.

FIG. 27 shows an example configuration of a search space. The configuration of the search space may be within a SearchSpace IE. One or more search space configuration parameters of a search space may comprise at least one of: a search space ID (e.g., searchSpaceId), a CORESET indicator (ID) (e.g., controlResourceSetId), a monitoring slot periodicity and offset parameter (e.g., monitoringSlotPeriodicityAndOffset), a search space time duration value (e.g., duration), a monitoring symbol indication (e.g., monitoringSymbolsWithinSlot), a quantity/number of candidates for an aggregation level (e.g., nrofCandidates), and/or a search space type indicating a common search space type or a wireless device-specific search space type (e.g., searchSpaceType). The monitoring slot periodicity and offset parameter may indicate slots (e.g., in a radio frame) and slot offset (e.g., related to a starting of a radio frame) for PDCCH monitoring. The monitoring symbol indication may indicate symbol(s), of a slot, in which a wireless device may monitor a PDCCH on the search space. The control resource set ID may indicate/identify a CORESET on which a search space may be located.

A wireless device, in an RRC idle state (e.g., RRC_IDLE) or in an RRC inactive state (e.g., RRC_INACTIVE), may periodically monitor POs for receiving paging message(s) for the wireless device. The wireless device, in an RRC idle state or an RRC inactive state and before monitoring the POs, may wake up at a time before each PO for preparation and/or to activate (e.g., turn on) all components in preparation of data reception (e.g., warm up stage). The gap between the waking up and the PO may be set to be sufficient to accommodate all the processing requirements. The wireless device may perform, after the warming up, timing acquisition from SSB and coarse synchronization, frequency and time tracking, time and frequency offset compensation, and/or calibration of local oscillator. The wireless device, after warm up, may monitor a PDCCH for a paging DCI via one or more PDCCH monitoring occasions. The wireless device may monitor the PDCCH, for example, based on configuration parameters of the PCCH configuration (e.g., as configured in SIB1). The configuration parameters of the PCCH configuration may be as described with respect to FIG. 25.

A base station may send/transmit one or more SSBs (e.g., periodically) to a wireless device or a plurality of wireless devices. The wireless device (in RRC_IDLE state, RRC_INACTIVE state, or RRC_CONNECTED state) may use the one or more SSBs for time and frequency synchronization with a cell of the base station. An SSB, comprising a PSS, a SSS, a PBCH, and/or a PBCH DM-RS, may be sent/transmitted (e.g., as described with respect to FIG. 11A). An SSB may occupy a quantity/number (e.g., 4, or any other quantity) of OFDM symbols. The base station may send/transmit one or more SSBs in an SSB burst (e.g., to enable beam-sweeping for PSS/SSS and PBCH). An SSB burst may comprise a set of SSBs, with each SSB potentially being sent/transmitted via a corresponding different beam. SSBs, in the SSB burst, may be sent/transmitted using time-division multiplexing. An SSB burst may be within a time window (e.g., a 5 ms window, or a window of any other duration) and may be either located in first-half or in the second-half of a radio frame (e.g., with a duration of 10 ms, or any other duration). An SSB burst may be equivalently referred to as a transmission window (e.g., 5 ms, or any other time duration) in which the set of SSBs are transmitted.

The base station may indicate a transmission periodicity of SSB via an RRC message (e.g., *ssb-PeriodicityServingCell* in *ServingCellConfigCommonSIB* of *SIB1* message, or *ServingCellConfigCommon* of a serving cell). A candidate value of the transmission periodicity may be in a range of {5ms, 10ms, 20ms, 40ms, 80ms, 160ms}. The transmission periodicity may have any other value. A maximum quantity/number of candidate SSBs ($L_{max}$) within an SSB burst may depend on a carrier frequency/band of the cell. For example, $L_{max}=4$ if $f_c<=3GHz$. $L_{max}=8$ if $3GHz<f_c<=6GHz$. $L_{max}=64$ if $f_c>=6GHz$, etc., wherein $f_c$ may be the carrier frequency of the cell. A starting OFDM symbol indicator/index, of a candidate SSB (e.g., occupying 4 OFDM symbols) within an SSB burst (e.g., comprised in a 5 ms time window), may depend on an SCS and a carrier frequency band of the cell.

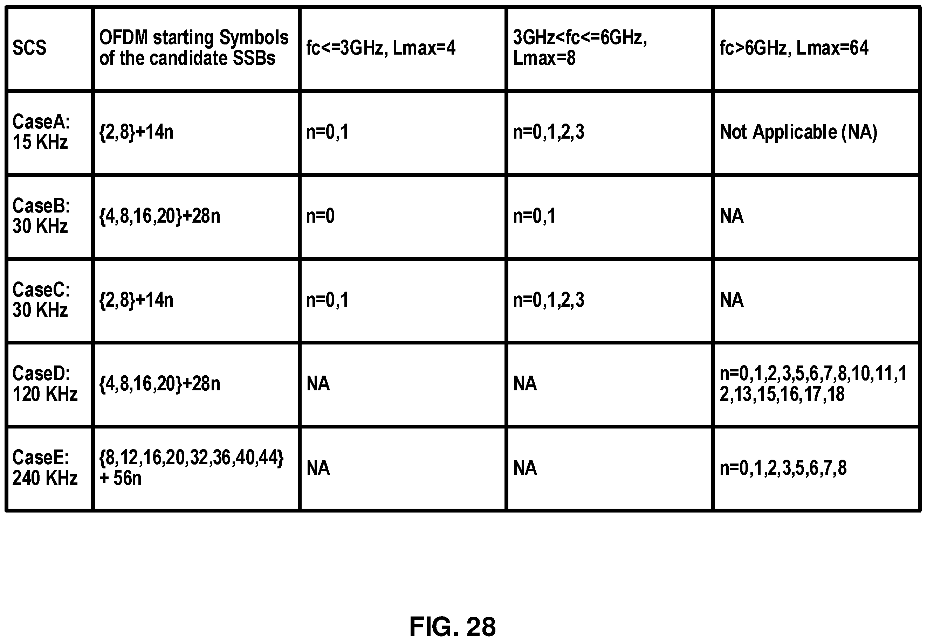

FIG. 28 shows an example of SSB configurations. FIG. 28 shows an example table for determination of a starting OFDM symbol index of candidate SSBs. OFDM starting symbols may be determined as a function of a SCS and carrier frequency. For example, starting OFDM symbol indexes of SSBs in an SSB burst, for a cell configured with 15 kHz SCS and carrier frequency fc<3GHz (e.g., $L_{max}=4$), may be 2, 8, 16, and 22. OFDM symbols in a half-frame may be indexed with the first symbol of the first slot being indexed as 0. Starting OFDM symbol indexes of SSBs in an SSB burst, for a cell configured with 15 kHz and carrier frequency 3GHz<fc<6GHz ($L_{max}=8$) may be 2, 8, 16, 22, 30, 36, 44 and 50. Starting OFDM symbol indexes for other SCSs and carrier frequencies may be similarly determined in accordance with the table shown in FIG. 28. The base station may send/transmit only one SSB by using the first SSB starting position, for example, if the base station is not transmitting the SSBs with beam forming.

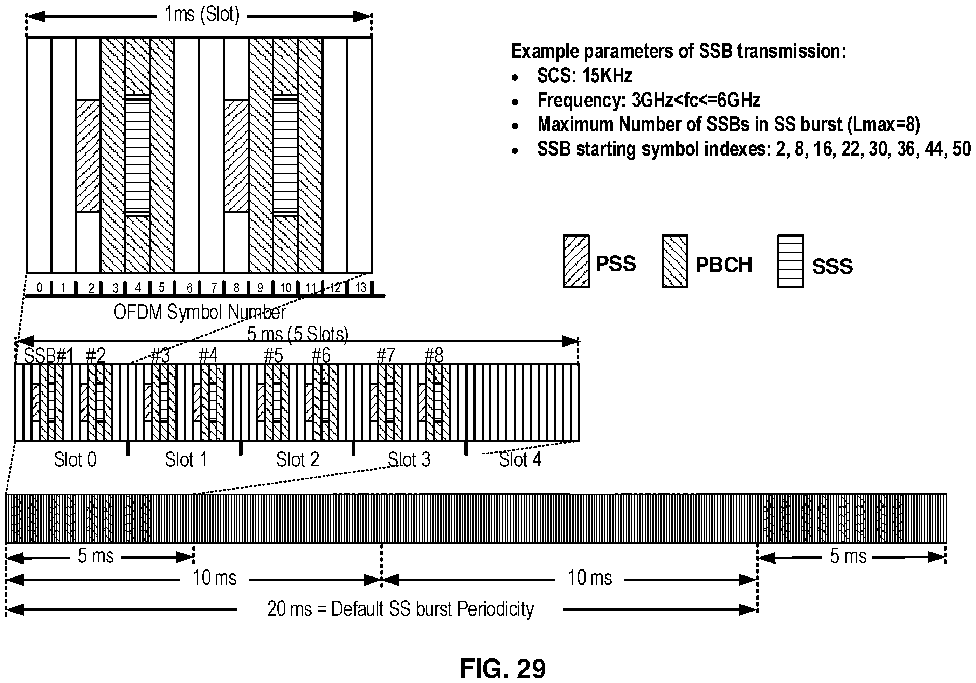

FIG. 29 shows an example of SSB transmissions of a base station. An SCS of the cell may be 15 kHz, and the cell may be configured with carrier frequency $f_c$, such that 3GHz<fc<=6GHz. A maximum quantity of candidate SSBs in an SSB burst may be 8 ($L_{max}=8$), for example, based on the value of $f_c$. Starting symbols for SSB transmission may be determined in accordance with the table shown in FIG. 29. SSB#1 may start at symbol 2 (of 70 symbols included in 5 ms half-frame), SSB#2 may start at symbol#8, SSB#3 may start at symbol#16, SSB#4 may start at symbol#22, SSB#5 may start at symbol#30, SSB#6 may start at symbol#36, SSB#7 may start at symbol#44, and SSB#8 may start at symbol 50. The SSB burst may be transmitted in the first half (and not the second half) of a radio frame (with 10 ms duration).

The SSB burst (and each SSB of the SSB burst) may be sent/transmitted with a periodicity. A default periodicity of an SSB burst may be 20 ms (e.g., as shown in FIG. 29, or any other duration of time). The default transmission periodicity may be a periodicity, for example, before a wireless device may receive a SIB1 message for initial access of the cell. For example, the base station, with 20 ms transmission periodicity of SSB (or SSB burst), may send/transmit the SSB burst in the first 5 ms of each 20 ms period. The base station may not send/transmit the SSB burst in the rest 15 ms of the each 20 ms period.

A base station may send/transmit RRC messages (e.g., SIB1 messages and/or *ServingCellConfigCommon* IE) indicating cell specific configuration parameters of SSB transmission of a serving cell (e.g., a PCell or a SCell). The cell specific configuration parameters may comprise a value for a transmission periodicity (e.g., parameter ssb-PeriodicityServingCell) of an SSB burst and locations (e.g., presence) of SSBs (e.g., active SSBs), of a plurality of candidate SSBs, in the SSB burst. The plurality of candidate SSBs (e.g., starting symbols of candidate SSBs) may be determined as described with respect to FIG. 29. The cell specific configuration parameters may comprise a position indication of an SSB in an SSB burst (e.g., parameter ssb-PositionsInBurst). The position indication may comprise a first bitmap (e.g., groupPresence) and a second bitmap (e.g., inOneGroup) indicating locations/presence of SSBs in an SSB burst.

A base station may send (e.g., transmit) a Master Information Block (*MIB*) on PBCH, to indicate configuration parameters (e.g., *PDCCH-ConfigSIB1* as shown in FIG. 24A) for a wireless device that may monitor PDCCH to receive a SIB1 message. The *PDCCH-ConfigSIB1* (e.g., *PDCCH-ConfigSIB1* information element (IE)) may indicate a resource configuration index (e.g., *ControlResourceSetZero* indicating SSB and CORESET multiplex pattern, the quantity (e.g., number) of RBs for the CORESET, the quantity (e.g., number) of symbols of the CORESET and/or the frequency offset of the CORESET relative to a reference point of the cell, as shown in FIG. 24B) for CORESET#0 (corresponding to the CORESET for TypeO-PDCCH CSS set) for the *SIB1* message. The *PDCCH-ConfigSIB1* IE may indicate a resource configuration index (e.g., *SearchSpaceZero* indicating, a time offset, the quantity (e.g., number) of search space sets in a slot, the first symbol index, etc., as shown in FIG. 24C) for search space #0 for the *SIB1* message. The base station may send (e.g., transmit) a *MIB* message with a transmission periodicity of 80 millisecond (ms). The same *MIB* message may be repeated (e.g., based on SSB periodicity) within the 80 ms. Contents of a *MIB* message may be the same over 80 ms period. The same *MIB* may be sent (e.g., transmitted) over all SSBs within a SS burst. For example, the PBCH may indicate that there is no associated *SIB1,* in which case a wireless device may be pointed to another frequency from where to search for an SSB that may be associated with a *SIB1,* as well as a frequency range where the wireless device may assume no SSB associated with *SIB1* is present. The indicated frequency range may be confined within a contiguous spectrum allocation of the same operator in which SSB may be detected.

As a first option, a base station may send (e.g., transmit) an SSB and CORESET#0 multiplexed in time domain. The symbols used for the SSB transmissions and the symbols used for CORESET#0 may not overlap in time domain, in which case, the transmission of the SSB and CORESET#0 may be referred to as the SSB and CORESET#0 multiplexing pattern 1. Different from the SSB and CORESET#0 multiplexing pattern 1, as a second option, the base station may send (e.g., transmit) the SSB and CORESET#0 in different symbols (or time domain multiplexed) while the PDSCH (containing a *SIB1* message) scheduled by a DCI via CORESET#0 may be frequency domain multiplexed with the SSB, in which case, the transmission of the SSB and CORESET#0 may be referred to as SSB and CORESET#0 multiplexing pattern 2. As a third option, the base station may send (e.g., transmit) an SSB and CORESET#0 and the PDSCH multiplexed in frequency domain, wherein the symbols used for SSB transmissions and the symbols used for CORESET#0/PDSCH may overlap in time domain, in which case, the transmission of SSB and CORESET#0 may be referred to as SSB and CORESET#0 multiplexing pattern 3.

The base station may send (e.g., transmit) a DCI (or a group common DCI) that may schedule the *SIB1* message via a PDCCH with SI-RNTI based on configuration parameters of search space #0 and control resource set #0 indicated by the MIB messages. The base station may send (e.g., transmit) a *SIB1* message with a periodicity of 160 ms. The base station may send (e.g., transmit) the same *SIB1* message with variable transmission repetition periodicity within 160 ms. The default transmission repetition periodicity of *SIB1* may be 20 ms. The base station may determine an actual transmission repetition periodicity based on network implementation. *SIB1* repetition transmission period may be 20 ms, for example, for SSB and CORESET multiplexing pattern 1. *SIB1* transmission repetition period may be the same as the SSB period, for example, for SSB and CORESET multiplexing pattern 2/3. *SIB1* may comprise information regarding the availability and/or scheduling (e.g., mapping of SIBs to SI message, periodicity, SI-window size) of other SIBs, an indication whether one or more SIBs are only provided on-demand and in which case, configuration parameters needed by a wireless device to perform an SI request.

A base station may send (e.g., transmit) SSBs/*SIB1* over each serving cell (e.g., a PCell or an SCell) of multiple serving cells configured for a wireless device. The base station may send (e.g., transmit) SSBs/*SIB1* over some serving cells of the multiple serving cells and may not send (e.g., transmit) SSBs/*SIB1* over other serving cells of the multiple serving cells. A serving cell without SSBs/*SIB1* may be referred to as an SSB/*SIB1*-less serving cell. A serving cell with SSBs/*SIB1* always sent (e.g., transmitted) by the base station may be referred to as an always-on SSBs/*SIB1* serving cell.

The MIB message may comprise an *ssb-SubcarrierOffset* (as shown in FIG. 24A) that may indicate a frequency domain offset (corresponding to $k_{SSB}$) between SSB and the overall resource block grid in quantity (e.g., number) of subcarriers. The *ssb-SubcarrierOffset* field may indicate that the cell may not provide *SIB1* and that there may be no CORESET#0 configured in *MIB.* The wireless device may determine, from *MIB,* upon detection of an SSB, that a CORESET for Type0-PDCCH CSS set (corresponding to CORESET#0), may be present if $k_{SSB} \leq 23$ for FR1 or if $k_{SSB} \leq 11$ for FR2. The wireless device may determine, from *MIB,* that CORESET#0 may not be present if $k_{SSB} > 23$ for FR1 or if $k_{SSB} > 11$ for FR2. For example, the field *pdcch-ConfigSIB1* of the MIB message may indicate the frequency positions where the wireless device may (or may not) find an SSB with CORESET#0 and search space#0 for *SIB1.* If the field *ssb-SubcarrierOffset* indicates that *SIB1* is absent, the field *pdcch-ConfigSIB1* of the MIB message may indicate the frequency positions where the wireless device may find SSB with *SIB1* or the frequency range where the network may not provide SSB with *SIB1* (e.g., according to 3GPP standard specification TS 38.213, clause 130.

A wireless device may monitor PDCCH in the Type0-PDCCH CSS set (corresponding to search space #0) over two slots, for example, for operation without shared spectrum channel access and for the SSB and CORESET multiplexing pattern 1. For an SSB with index *i,* the wireless device may determine an index of slot $n_0$ as

$$n_0 = (O \cdot 2^\mu + \lfloor i \cdot M \rfloor) \bmod N_{\text{slot}}^{\text{frame},\mu}$$ that is in a frame with system frame quantity (e.g., number) (SFN) $\text{SFN}_C$ satisfying $\text{SFN}_c \bmod 2 = 0$, if $\lfloor (O \cdot 2^\mu + \lfloor i \cdot M \rfloor) / N_{\text{slot}}^{\text{frame},\mu} \rfloor \bmod 2 = 0$, or in a frame with SFN satisfying $\text{SFN}_c \bmod 2 = 1$ if $\lfloor (O \cdot 2^\mu + \lfloor i \cdot M \rfloor) / N_{\text{slot}}^{\text{frame},\mu} \rfloor \bmod 2 = 1$, where $\mu \in \{0,1,2,3,5,6\}$ based on the SCS for PDCCH receptions in the CORESET. For example, M, 0, and the index of the first symbol of the CORESET may be indicated by *SearchSpaceZero* (e.g., as shown in FIG. 24C). For $\mu \in \{0, 1, 2, 3\}$ and for an SSB index *i,* the two slots including the associated Type0-PDCCH monitoring occasions are slots $n_0$ and $n_0 + 1$. For $\mu = 5$ and for an SSB index *i,* the two slots including the associated Type0-PDCCH monitoring occasions are slots $n_0$ and $n_0 + 4$. For $\mu = 6$ and for an SSB index *i,* the two slots including the associated Type0-PDCCH monitoring occasions are slots $n_0$ and $n_0 + 8$, etc.

A wireless device may monitor PDCCH in the Type0-PDCCH CSS set over one slot with Type0-PDCCH CSS set periodicity equal to the periodicity of SSB, for example, for operation without shared spectrum channel access and for the SSB and CORESET multiplexing pattern 2 and/or 3. For an SSB with index *i,* the wireless device may determine, based on *SearchSpaceZero,* the slot index $n_c$ and $SFN_c$ based on parameters provided by Tables 13-13 through 13-15A of 3GPP TS 38.213 clause 13. A wireless device may be expected to be able to perform radio link monitoring (RLM) and measurements for radio resource management (RRM) using an SSB that provides a CORESET for TypeO-PDCCH CSS set, for example, for the SSB and CORESET multiplexing patterns 2 and 3, if the active DL BWP is the initial DL BWP.

The wireless device may determine the nearest (in the corresponding frequency direction) global synchronization channel number (GSCN) of a second SSB having a CORESET for an associated Type0-PDCCH CSS set as

$$N_{\text{GSCN}}^{\text{Reference}} + N_{\text{GSCN}}^{\text{Offset}}. \quad N_{\text{GSCN}}^{\text{Reference}}$$ is the GSCN of the first SSB and $N_{\text{GSCN}}^{\text{Offset}}$ is a GSCN offset (e.g., provided by Table 13-16 for FR1 and Table 13-17 for FR2 in TS 38.213, clause 13), for example, if a wireless device detects a first SSB and determines that a CORESET for TypeO-PDCCH CSS set is not present, and for $24 \le k_{\text{SSB}} \le 29$ for FR1 or for $12 \le k_{\text{SSB}} \le 13$ for FR2. The wireless device may ignore the information related to GSCN of SSB locations for performing cell search, for example, if the wireless device detects the second SSB and the second SSB does not provide a CORESET for TypeO-PDCCH CSS set.

A wireless device may determine that there is no SSB having an associated TypeO-PDCCH CSS set within a GSCN range $$[N_{\text{GSCN}}^{\text{Reference}} - N_{\text{GSCN}}^{\text{Start}}, N_{\text{GSCN}}^{\text{Reference}} + N_{\text{GSCN}}^{\text{End}}]. \quad N_{\text{GSCN}}^{\text{Start}}$$ and $N_{\text{GSCN}}^{\text{End}}$ are respectively determined by *controlResourceSetZero* and *searchSpaceZero* in *pdcch-ConfigSIB1,* for example, if the wireless device detects an SSB and determines that a CORESET for TypeO-PDCCH CSS set is not present, and for $k_{\text{SSB}} = 31$ for FR1 or for $k_{\text{SSB}} = 15$ for FR2. The wireless device may determine that there is no information for a second SSB with a CORESET for an associated TypeO-PDCCH CSS set on the detected SSB, for example, if the GSCN range is $$[N_{\text{GSCN}}^{\text{Reference}}, N_{\text{GSCN}}^{\text{Reference}}].$$

The wireless device may ignore the information related to GSCN of SSBs in performing cell search, for example, if the wireless device does not detect any SSB providing a CORESET for TypeO-PDCCH CSS set, within a time period determined by the wireless device. The wireless device may acquire time and frequency synchronization with the serving cell based on receptions of SSBs on the PCell, or on the PSCell, of the cell group for the serving cell, for example, for a serving cell without transmission of SSBs.

A base station may send (e.g., transmit) a *SIB1* message of a cell via RRC Reconfiguration message (e.g., comprising *dedicatedSIB1-Delivery* IE), different from the broadcasted *SIB1* message scheduled by DCI with SI-RNTI in search space#0 and CORESET#0. In addition to always-on SSBs/*SIB1* and SSBs/*SIB1*-less, a base station may send (e.g., transmit) SSBs/*SIB1* over a cell based on indication from a wireless device, or from another base station, and/or triggered by the base station itself, for example, by sending (e.g., transmitting) a SCell activation/deactivation MAC CE. The base station may stop/skip sending (e.g., transmitting) the SSBs/*SIB1*, for example, if there is no indication from the wireless device or from another base station or there is no trigger from the base station. The SSBs/*SIB1* sent/transmitted/stopped upon a request may be referred to as on-demand SSBs/*SIB1*.

A wireless device may acquire essential system information (e.g., MIB or *SIB1*) as described herein, for example, if performing camping a cell in RRC_IDLE state or performing handover to a neighbor cell in RRC_CONNECTED state. The wireless device may acquire the *SIB1,* which may be scheduled by a DCI with SI-RNTI via PDCCH occasions according to search space#0 and CORESET#0 of the cell, for example, if *ssb-SubcarrierOffset* indicates *SIB1* is sent (e.g., transmitted) in the cell and if *SIB1* acquisition is required for the wireless device. The wireless device may not be able to acquire the SIB message. The wireless device may consider the cell is barred and perform a cell re-selection to another cell in the same frequency, for example, if the wireless device is unable to acquire the *SIB1* message.

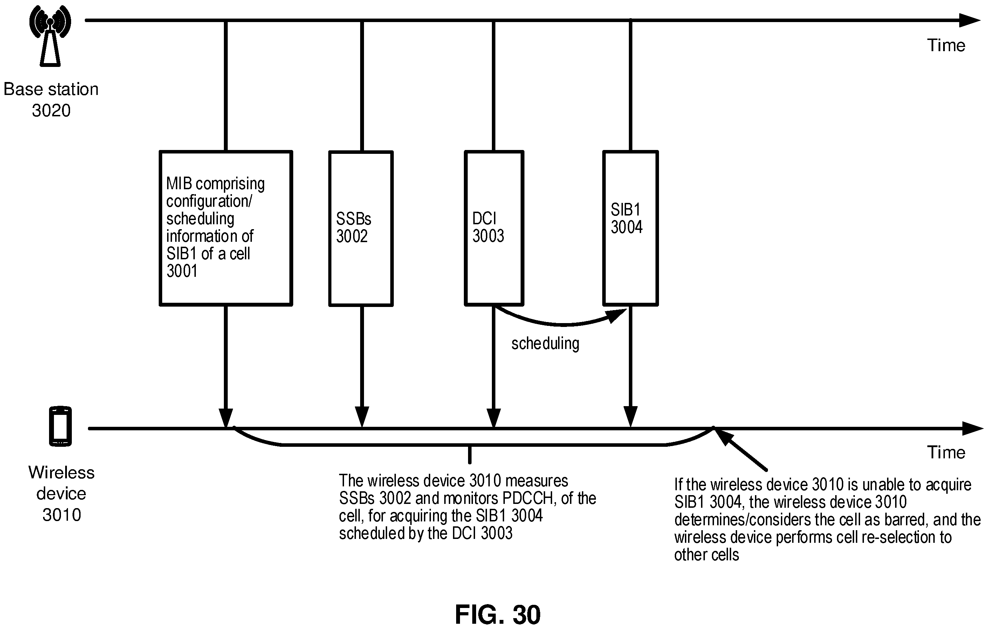

FIG. 30 shows an example of a procedure for missing essential system information. For example, a wireless device 3010 may receive, and/or a base station 3020 may send (e.g., transmit), a MIB message comprising configuration and/or scheduling information of a SIB (e.g., SIB1) message of a cell. The configuration and/or the scheduling information may be implemented, for example, based on examples described herein and/or in FIG. 24A. The wireless device 3010 may detect/receive SSBs 3002 of the cell, for example, based on the MIB message. An SSB may be implemented, for example, based on examples of FIG. 28 and/or FIG. 29.

As described with respect to FIG. 30, the wireless device 3010 may measure the SSBs 3002 and monitor PDCCH via search space#0 of CORESET#0 of the cell, for example, based on the MIB message. The wireless device 3010 may obtain the cell common configuration parameters (e.g., based on an example of FIG. 25) of the cell and acquire other system information (e.g., SIB2, SIB3, etc.) based on the cell common configuration parameters of the cell, for example, based on (e.g., in response to) receiving a DCI 3003 scheduling a *SIB1* message 3004 based on monitoring the PDCCH via search space#0 of CORESET#0 of the cell. The wireless device 3010 may perform an initial access procedure (e.g., based on examples of FIG. 13A, FIG. 13B and/or FIG. 13C) via the cell, for example, based on the cell common configuration parameters of the cell.

The wireless device 3010 may not receive/decode the DCI 3003 that may schedule the *SIB1* message 3004 according to the configuration of search space#0 and CORESET#0 of the cell based on the MIB message. The wireless device 3010 may not receive/decode the DCI 3003, for example, due to poor channel quality of the PDCCH that may carry the DCI 3003. The wireless device 3010 may not decode the *SIB1* message 3004 carried in a PDSCH transmission scheduled by the DCI 3003 with CRC scrambled by SI-RNTI. The wireless device 3010 may not decode the *SIB1* message 3004, for example, due to poor channel quality of the PDSCH carrying the *SIB1* message 3004. The wireless device 3010 may determine/consider the cell as barred (e.g., even if the cell is not indicated as barred in the MIB message), for example, based on (e.g., in response to) the MIB being acquired and the *SIB1* not being acquired (e.g., due to not decoding the DCI 3003 and/or the PDSCH carrying the *SIB1* message 3004). The wireless device 3010 may perform barring (as shown herein) as if *intraFreqReselectionRedCap* of a *SIB1* message is set to *allowed,* for example, if it is a RedCap wireless device 3010. The wireless device 3010 may perform a cell re-selection to other cells on the same frequency as the barred cell, for example, if it is not a RedCap wireless device 3010.

A wireless device may not be permitted to select/reselect a cell (e.g., not even for emergency calls) and may select another cell based on the following rule, for example, if the cell status is indicated as "barred" or is to be determined (e.g., treated) as "barred".

The wireless device may exclude a barred cell as a candidate for cell selection/reselection for up to 300 seconds, for example, if the cell is determined (e.g., treated) as "barred" due to being unable to acquire the *MIB.*

The wireless device may select another cell on the same frequency if the selection criteria are fulfilled, for example, if the cell is determined (e.g., treated) as "barred" due to being unable to acquire the *MIB.*

If the cell is not determined (e.g., treated) as "barred" due to being unable to acquire the *MIB,* the wireless device may perform one or more operations based on following conditions.

If the wireless device is a RedCap wireless device, the wireless device may acquire a *SIB1* message and, for the remainder of this procedure, consider '*intraFreqReselection* in MIB' as '*intraFreqReselectionRedCap* in SIB1', if available.

The wireless device may exclude the barred cell as a candidate for cell selection/reselection for up to 300 seconds, for example, if the cell is to be determined (e.g., treated) as if the cell status is "barred" due to being unable to acquire the *SIB1* message.

The wireless device may select another cell on the same frequency if the selection criteria are fulfilled, for example, for example, if the cell is to be determined (e.g., treated) as if the cell status is "barred" due to being unable to acquire the *SIB1* message.

The wireless device may exclude the barred cell as a candidate for cell selection/reselection for 300 seconds, for example, if the cell status "barred" is indicated in *MIB* but the wireless device is unable to acquire the *SIB1* message, or if the cell is to be determined (e.g., treated) as if the cell status is "barred" due to not supporting RedCap wireless devices.

The wireless device may select another cell on the same frequency if re-selection criteria are fulfilled, for example, if the cell status "barred" is indicated in *MIB* but the wireless device is unable to acquire the *SIB1* message, or if the cell is to be determined (e.g., treated) as if the cell status is "barred" due to not supporting RedCap wireless devices.

The wireless device may select another cell on the same frequency if re-selection criteria are fulfilled, for example, if the wireless device is not a RedCap wireless device, or if the wireless device is a RedCap wireless device and *intraFreqReselectionRedCap* in SIB1 message is available: and if the field *intraFreqReselection* in *MIB* message is set to "allowed".

The wireless device may exclude the barred cell as a candidate for cell selection/reselection for up to 300 seconds, for example, if the cell is to be determined (e.g., treated) as if the cell status is "barred" due to being unable to acquire the *SIB1* message.

The wireless device may exclude the barred cell as a candidate for cell selection/reselection for 300 seconds, for example, if the cell is not to be treated as if the cell status is "barred" due to being unable to acquire the SIB 1.

The wireless device may exclude the barred cell as a candidate for cell selection/reselection for up to 300 seconds, for example, if the field *intraFreqReselection* in *MIB* message is set to "not allowed", and if the cell is to be determined (e.g., treated) as if the cell status is "barred" due to being unable to acquire the *SIB1.*

The wireless device may not re-select to another cell on the same frequency as the barred cell and exclude such cell(s) as candidate(s) for cell selection/reselection for 300 seconds, for example, if the cell operates in licensed spectrum.

The wireless device may select to another cell on the same frequency if the reselection criteria are fulfilled, for example, if the cell does not operate in licensed spectrum.

The wireless device may not re-select to another cell on the same frequency as the barred cell and exclude such cell(s) as candidate(s) for cell selection/reselection for 300 seconds, for example, if the cell is to be determined (e.g., treated) as if the cell status is "barred" due to being unable to acquire the *SIB1,* and if the cell operates in licensed spectrum, or if this cell belongs to a PLMN which is indicated as being equivalent to the registered PLMN or the selected PLMN of the wireless device, or if this cell belongs to the registered SNPN or the selected SNPN of the wireless device.

The wireless device may select to another cell on the same frequency if the reselection criteria are fulfilled, for example, if the cell does not operate in licensed spectrum, or if this cell does not belong to a PLMN which is indicated as being equivalent to the registered PLMN or the selected PLMN of the wireless device, or if this cell does not belong to the registered SNPN or the selected SNPN of the wireless device.

The wireless device may exclude the barred cell as a candidate for cell selection/reselection for 300 seconds, for example, for example, if the cell is not to be treated as if the cell status is "barred" due to being unable to acquire the SIB1.

A wireless device may use a valid stored version of the system information (SI) except for *MIB, SIB1, SIB6, SIB7* or *SIB8,* for example, after cell re-selection, upon return from out of coverage, or after receiving an SI change indication. The *valueTag* and *expirationTime* for posSIB may be optionally provided in *assistanceDataSIB-Element.* Allowing the wireless device to select another cell based on (e.g., in response to) not acquiring the *SIB1* message from a selected cell for camping may reduce power consumption of the wireless device if searching for a suitable cell for camping. Otherwise, the wireless device may continue trying to decode the *SIB1* message in vain if the channel quality of the PDCCH/PDSCH is not sufficient on the selected cell.

In at least some wireless communications, a base station may periodically (e.g., always periodically) send (or a wireless device may assume that the base station may periodically (e.g., always periodically) send) a *SIB1* message in a cell, for example, if it is configured in a *MIB* message. The wireless device may determine the cell is barred (e.g., unavailable), for example, if the wireless device is not able to acquire/decode the *SIB1* message. Additionally or alternatively, the base station may trigger an on-demand *SIB1* transmission, for example, based on (e.g., in response to) receiving an uplink signal (e.g., a wake-up signal) from a wireless device, receiving indication from a neighbor cell, or receiving indication from a high layer indication. The configuration parameters of the on-demand *SIB1* message may be similar to the configuration parameters of an always-on *SIB1* message that may be indicated by the *MIB* message. Additionally or alternatively, the base station may not always send (e.g., transmit) the on-demand *SIB1* message. For example, if the on-demand *SIB1* message is not always (or consistently) sent (e.g., transmitted) in a cell, the wireless device may have difficulty in determining when to abandon (e.g., give up) the camping process on the cell (or determine that the cell is barred) and perform cell reselection to another cell.

As described herein, a wireless device may efficiently communicate with a base station, for example, by requesting and receiving system information such as in a control message (e.g., system information block 1 (SIB1)). For example, a base station may send, to a wireless device, one or more configuration parameters indicating that system information and/or a control message (e.g., SIB1) associated with a cell may be requested on demand. The wireless device may send, to the base station, an uplink signal (e.g., a wake-up signal) to request the system information and/or control message. Based on receiving the uplink signal, the base station may or may not send a response (e.g., system information and/or a control message). After sending the uplink signal, the wireless device may monitor physical downlink control channel (PDCCH) in order to receive a response to the uplink signal. If system information and/or a control message is not received (e.g., within a time duration after sending the uplink signal), the wireless device may determine that a base station and/or cell is unavailable (e.g., barred). The wireless device may perform a procedure (e.g., cell reseletion procedure) to search for a different base station and/or cell based on such a determination. By switching to an available cell if the requested system information and/or control message is not received, the wireless device may communicate with the base station more efficiently.

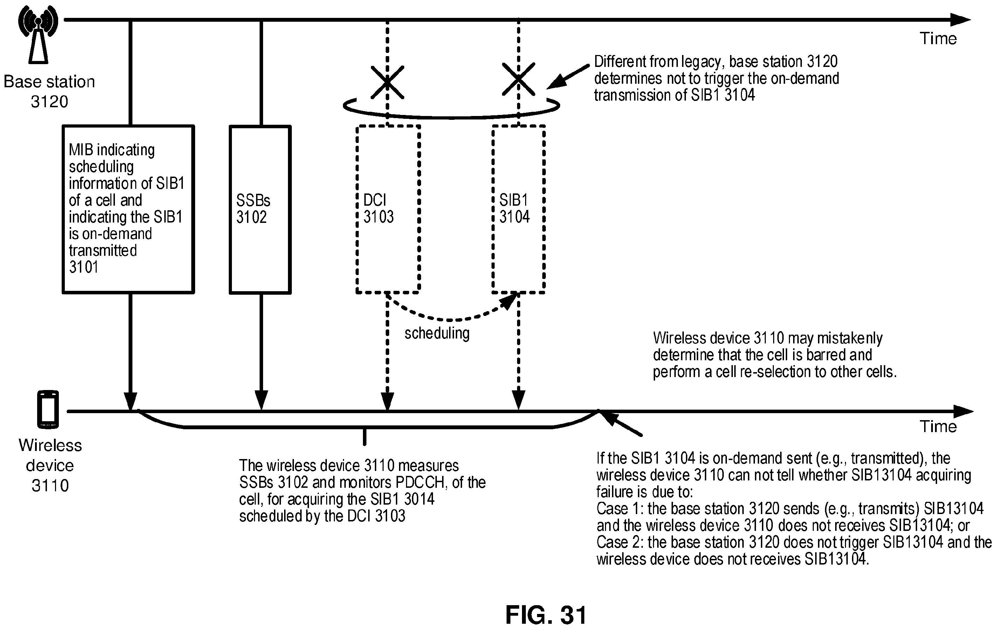

FIG. 31 shows an example of a camping method on a cell when on-demand system information (e.g., *SIB1*) is configured on the cell. As shown in FIG. 31, a wireless device 3110 may receive a *MIB* message that may indicate scheduling information of *SIB1* message 3104 of a cell and may indicate that the *SIB1* message 3104 is sent (e.g., transmitted) on-demand (e.g., not always sent/transmitted). The wireless device 3110 may measure SSBs 3102 and monitor PDCCH for receiving a DCI 3103 (e.g., via search space#0 of CORESET#0 of the cell) scheduling the *SIB1* message 3104, for example, based on the *MIB* message. Since the base station 3120 does not know when (or if) the wireless device 3110 enters the coverage of the cell, the base station 3120 may determine not to send/transmit (or trigger the sending/transmitting) the *SIB1* message 3104, for example, even if it's configured with search space#0 and CORESET#0 for the transmission of the *SIB1* message 3104. For example, the wireless device 3110 may not be able to acquire the *SIB1* message 3104. The wireless device 3110 may declare/consider/determine that the cell is barred, for example, based on (e.g., in response to) not being able to acquire the *SIB1* message 3104. The wireless device 3110 may perform a cell reselection to other cells, which may increase latency and/or power consumption of the cell selection/camping process.

The wireless device may be unable to determine whether the lack of receiving a *SIB1* message is due to: 1) poor channel quality (e.g., the base station actually sends/transmits the *SIB1* message, but the wireless device cannot decode the *SIB1* message due to poor channel quality), or 2) the *SIB1* message not being sent/transmitted (e.g., the base station has not yet sent/transmitted the on-demand *SIB1* message), for example, if the cell is configured with an on-demand *SIB1* message.

The wireless device may simply determine/declare/consider that the cell is barred, regardless of whether the lack of receiving the *SIB1* message is due to: 1) poor channel quality, or 2) the *SIB1* message not being sent/transmitted. Power consumption of the wireless device may be increased for cell selection/camping process.

A wireless device may determine/declare/consider that a cell is barred, for example, if the cell is configured with an on-demand *SIB1* message and the on-demand *SIB1* message has not been received (e.g., after the wireless device sends (e.g., transmits) an uplink signal (e.g., a wake-up signal) requesting the transmission of the on-demand *SIB1* message).

The wireless device may not determine/declare/consider the cell is barred if the wireless device is not able to acquire the *SIB1* message according to the configuration of search space#0 and CORESET#0 of the cell at a time interval before the wireless device sends (e.g., transmits) an uplink signal requesting the transmission of the on-demand *SIB1* message, for example, if the cell is configured with an on-demand *SIB1* message.

The wireless device may determine/declare/consider the cell is barred if the wireless device is not able to acquire the *SIB1* message according to the configuration of search space#0 and CORESET#0 of the cell, for example, if the cell is configured with an always-on *SIB1* message. The power consumption of the wireless device and/or latency of cell selection/camping of the wireless device may be improved. The wireless device may select another cell for the camping, which may increase the camping latency and/or power consumption of the wireless device, for example, if the wireless device declares that the cell is barred due to not being able to acquire the *SIB1* message, without considering that the *SIB1* message may be triggered on-demand based on uplink signals.

A timer (e.g., in unit of slot/subframe/millisecond, etc.) and/or a quantity (e.g., number) (e.g., 1 indicating a single transmission allowed, 2 indicating at most two transmissions allowed, etc.) for (re-)transmissions of an uplink signal requesting on-demand *SIB1* message for a cell may be configured. The wireless device may start the timer upon a (re-)transmission of the uplink signal, and/or may increment the counter (e.g., by 1) upon the (re-)transmission of the uplink signal. The wireless device may determine/declare/consider the transmission(s) of the uplink signal is unsuccessfully completed if the timer expires and/or if the counter reaches the configured quantity (e.g., number) and the wireless device has not received the on-demand *SIB1* message. The wireless device may determine/declare/consider the transmission(s) of the uplink signal is successfully completed if the wireless device receives the on-demand *SIB1* message before the timer expires and/or before the counter reaches the configured quantity (e.g., number). The wireless device may determine/-declare/consider that a cell is barred if the transmission of the uplink signal is unsuccessfully completed. The wireless device may determine/declare/consider that a cell is barred if the on-demand *SIB1* message has not been received if the timer expires and/or if the counter reaches the configured quantity (e.g., number). The wireless device may not determine/declare/consider the cell is barred before the timer expires, and/or before the counter reaches the configured quantity (e.g., number). The wireless device may try a limited quantity (e.g., number) of attempts to request an on-demand *SIB1* message of a cell, before the wireless device performs a cell re-selection to another cell. By trying a limited quantity (e.g., number) of attempts, the latency of cell selection/camping for the wireless device may be reduced. Power consumption for acquiring the on-demand SSB message may be increased, for example, if the wireless device keeps trying, without limitation, the uplink signal transmissions requesting the on-demand SSB message of a cell (e.g., when the uplink channel quality of the uplink signal is poor).

A wireless device may cancel/drop/stop a triggered/on-going/pending process of (or associated with) an uplink signal transmission requesting an on-demand *SIB1* message for a first cell, for example, if the wireless device performs a cell re-selection to a second cell after the wireless device triggers the process and before the wireless device receives the on-demand *SIB1* message from the first cell. By doing so, the power consumption of the wireless device may be reduced. The wireless device may waste power for the uplink signal transmissions requesting the on-demand *SIB1* message of the first cell, for example, if the wireless device keeps trying the uplink signal transmissions requesting the on-demand *SIB1* message of a first cell (e.g., when the uplink channel quality of the uplink signal is not good) during which the wireless device may find another suitable cell different from the first cell.

A wireless device may trigger a transmission of an uplink signal requesting an on-demand *SIBI* message based on (e.g., in response to) not receiving a DCI (with CRC scrambled by SI-RNTI) that may schedule a *SIB1* message in a quantity (e.g., number) of slots. The quantity (e.g., number) may be determined based on a pre-defined/default quantity (e.g., number) (e.g., 4 for fc<=3GHz, 8 for 3GHz<fc<=6GHz, 64 for fc>6GHz, etc.) of SSBs of the cell and/or an SSB and CORESET#0 multiplexing pattern. The wireless device may trigger a transmission of the uplink signal requesting the on-demand *SIB1* message, for example, based on (e.g., in response to) not receiving the DCI in the quantity (e.g., number) of slots. The wireless device may skip the triggering the uplink transmission of the uplink signal, for example, based on (e.g., in response to) receiving the DCI in at least one of the quantity (e.g., number) of slots.

The wireless device may trigger the uplink transmission, for example, only if the wireless device determines that the DCI has not been detected in all possible occasions associated with SSBs. The wireless device may unnecessarily or pre-maturely trigger the uplink transmission since the base station may send (e.g., transmit) the DCI in other slot(s) corresponding to another SSB, for example, if the wireless device triggers the uplink transmission upon not detecting the DCI in one PDCCH occasion (corresponding to 2 slots for SSB and CORESET#0 multiplexing pattern 1, or 1 slot for SSB and CORESET#0 multiplexing pattern 2/3) corresponding to an SSB.

A time gap/offset between one or more PDCCH occasions of search space#0 (for scheduling *SIB1* message) of CORESET#0 of a cell and an uplink transmission occasion of an uplink signal requesting on-demand *SIB1* message may be (pre-)configured. The wireless device may trigger an uplink transmission of the uplink signal at the uplink transmission occasion (in an uplink slot of the cell) based on the time gap/offset after the last PDCCH occasion of the one or more PDCCH occasions, for example, based on (e.g., in response to) not receiving the *SIB1* message in the one or more PDCCH occasions. The base station may miss-detect the uplink signal, which in turn may increase latency of the delivery of the on-demand *SIB1* message, for example, if the base station and the wireless device do not align on when the uplink signal is expected to be sent (e.g., transmitted).

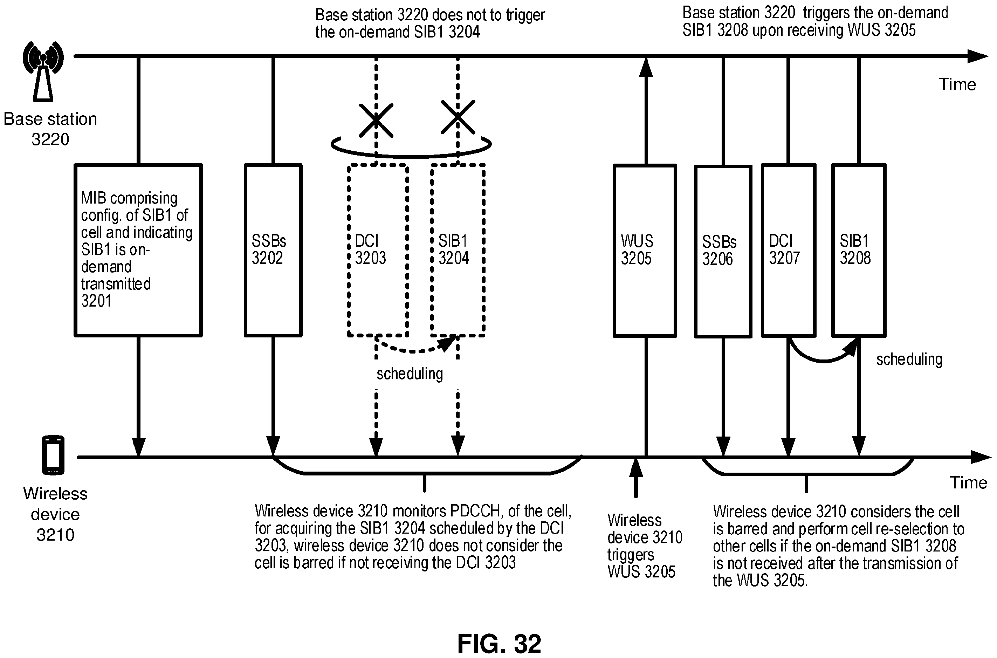

FIG. 32 shows an example of on-demand system information (e.g., *SIB1*) reception. For example, a wireless device 3210 (e.g., UE) may receive from a base station 3220 (e.g., gNB), and/or the base station 3220 may send (e.g., transmit) to the wireless device 3210, one or more *MIB* messages that may comprise configuration parameters of a *SIB1* message 3204 of a cell. The configuration parameters may be implemented, for example, based on examples of FIG. 24A, FIG. 30 and/or FIG. 31. The configuration parameters may comprise a parameter indicating whether the *SIB1* message 3204 is triggered on-demand (e.g., different from a legacy system) or always sent (e.g., transmitted), for example, such as in the legacy system. The configuration parameters may indicate radio resources of an uplink signal which may be used for requesting the *SIB1* message 3204. The *SIB1* message 3204 (e.g., which may be triggered by the uplink signal) may be referred to as an on-demand *SIB1*. The uplink signal requesting the *SIB1* message 3204 may be referred to as a wake-up signal (WUS).

As described with respect to FIG. 32, the base station 3220 may determine not to send (e.g., transmit or trigger the transmitting) the *SIB1* message 3204, for example, after the base station 3220 sends (e.g., transmits) the *MIB* message in the cell. The base station 3220 may determine not to send (e.g., transmit) the *SIB1* message 3204, for example, if there are no wireless devices camped or active in the cell. The base station 3220 may periodically send (e.g., transmit) SSBs 3202 (e.g., even if the base station 3220 does not periodically send (e.g., transmit) the *SIB1* message 3204), for example, for cell selection/reselection, time/frequency synchronization, RRM measurement (for mobility) for wireless devices.

The wireless device 3210 may measure SSBs 3202 and monitor PDCCH in one or more slots determined based on the SSBs 3202 and according to the configuration of search space#0 and CORESET#0 (indicated by the *MIB* message) of the cell, as described above, for example, after receiving the *MIB* message. For example, the wireless device 3210 may not receive/decode the DCI 3203 (e.g., with CRC scrambled by SI-RNTI) scheduling the *SIB1* message 3204 after receiving the *MIB* message. The wireless device 3210 may not consider/declare/determine that the cell is barred (e.g., even if the *MIB* message indicates that the cell is not barred by *cellBarred* IE), for example, based on (e.g., in response to) not receiving the DCI scheduling the *SIB1* message 3204.

The wireless device 3210 may delay the declaration, for example, after the wireless device 3210 sends (e.g., transmits) a WUS 3205. The wireless device 3210 may trigger an uplink transmission of the WUS 3205, for example, based on (e.g., in response to) not receiving the DCI 3203. The DCI 3203 scheduling the *SIB1* message 3204 may be sent (e.g., transmitted) with different beams (e.g., corresponding to different SSBs of the multiple SSBs), for example, if multiple SSBs 3202 are sent (e.g., transmitted) in the cell by the base station 3220. The DCI may be sent (e.g., transmitted) in different slots with different beams. A slot(s) for monitoring PDCCH for receiving the DCI 3203 may be determined based on an SSB index and an indication (search space#0) of the *MIB* message, as described herein. The wireless device 3210 may determine whether the on-demand *SIB1* message 3204 is received by checking/detecting all possible PDCCH occasions for all SSBs 3202 and defined by the slots and the RBs associated with search space#0.

The wireless device 3210 may not know how many SSBs are sent (e.g., transmitted) by the base station 3220 after receiving the *MIB* message and before receiving the *SIB1* message 3204. The wireless device 3210 may have difficulty in determining when to trigger the uplink transmission of the WUS 3205. The WUS 3205 may be a RACH preamble, a SRS, and/or a new RS defined for the on-demand *SIB1* request.

The wireless device 3210 may determine a default (maximum) quantity (e.g., number) of SSBs to be used to determine the possible PDCCH occasions for receiving the DCI scheduling the *SIB1* message 3204. For example, the default quantity (e.g., number) of SSBS may be 4 for fc<=3GHz, 8 for 3GHz<fc<=6GHz, 64 for fc>6GHz, etc. The wireless device 3210 may determine a total quantity (e.g., number) of slots for PDCCH monitoring for receiving the DCI scheduling the *SIB1* message 3204, wherein the total quantity (e.g., number) is determined based on the default quantity (e.g., number) and an SSB and CORESET#0 multiplexing pattern. For example, if the multiplex pattern is 1, the total quantity (e.g., number) is equal to (the default quantity (e.g., number) x 2), otherwise, the total quantity (e.g., number) is equal to the default quantity (e.g., number). The location of each slot of the slots may be determined based on an SSB index and search space#0 indication of the *MIB,* as described above. For example, based on (e.g., in response to) not receiving the DCI in the total quantity (e.g., number) of slots associated with search space#0 of CORESET#0 of the cell, the wireless device 3210 may trigger the uplink transmission of the WUS 3205. Allowing the wireless device 3210 to trigger the WUS 3205 only after the wireless device 3210 has checked/detecting all possible PDCCH occasions (e.g., associated with different SSBs) for receiving the DCI scheduling the *SIB1* message may reduce the possibility of unnecessarily or pre-maturely triggering the WUS 3205.

The wireless device 3210 may further determine to trigger the WUS 3205 based on a measurement of SSBs of the cell, in addition to not receiving the *SIB1* message 3204 scheduled by the DCI 3203 in the search space#0 of CORESET#0 of the cell. For example, if the RSRP values of the SSBs of the cell being lower than a threshold (e.g., configured or pre-configured), the wireless device 3210 may not trigger the WUS 3205, even if the wireless device 3210 does not receive the *SIB1* message 3204. For example, if the RSRP values of the SSBs of the cell being equal to or greater than the threshold, the wireless device 3210 may trigger the WUS 3205, if the wireless device 3210 does not receive the *SIB1* message in the search space#0 of CORESET#0 of the cell. The power consumption of the wireless device 3210 may be reduced. The wireless device 3210 may trigger the WUS 3205 even if the RSRP of the SSBs of the cell is lower than the threshold, which may end up a failure of the WUS transmission and on-demand *SIB1* reception on this cell.

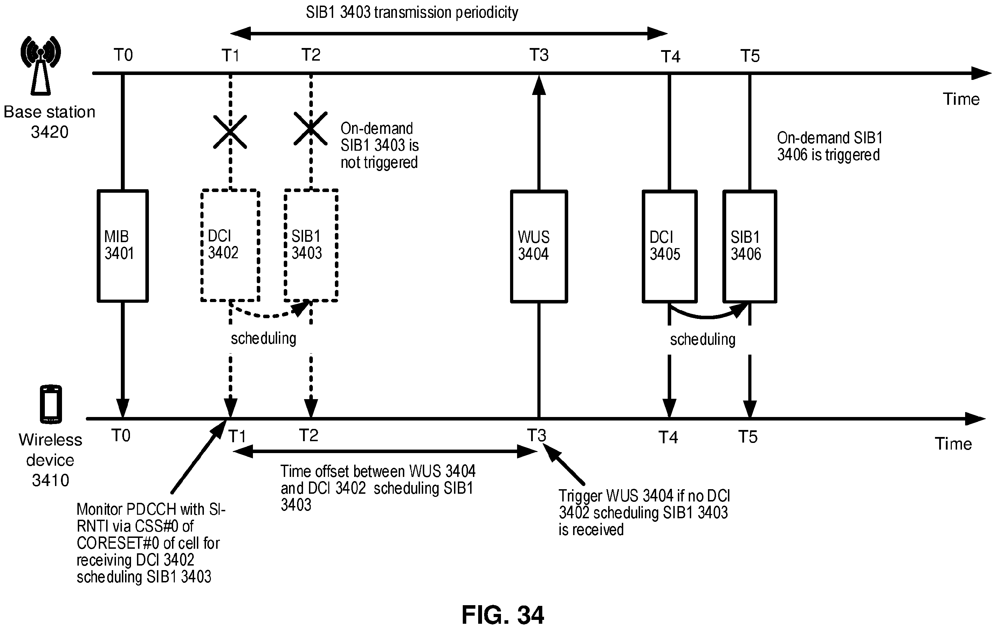

As shown in FIG. 32, the base station may monitor uplink channel for receiving the WUS 3205 in one or more WUS occasions associated with the WUS 3205. The one or more WUS occasions may be implemented based on an example of FIG. 34 which may be described herein. The base station may trigger the transmission of the on-demand *SIB1* message (e.g., by sending (e.g., transmitting) the DCI and a PDSCH carrying the *SIB1* message), for example, based on (e.g., in response to) receiving the WUS 3205. The wireless device 3210 may monitor the PDCCH according to the SSBs and the configuration of search space#0 and CORESET#0 (indicated by the *MIB* message) of the cell, for receiving the DCI scheduling the *SIB1* message, for example, based on (e.g., in response to) sending (e.g., transmitting) the WUS 3205.

The wireless device 3210 may receive the on-demand *SIB1* message 3208 after the wireless device 3210 sends (e.g., transmits) the WUS 3205. The wireless device 3210 may obtain the cell common configuration parameters (e.g., based on an example of FIG. 25) of the cell and acquire other system information (e.g., SIB2, SIB3, etc.,) based on the cell common configuration parameters of the cell, for example, based on (e.g., in response to) receiving a DCI 3207 scheduling the on-demand *SIB1* message 3208 based on monitoring the PDCCH via search space#0 of CORESET#0 of the cell. The wireless device 3210 may perform an initial access procedure (e.g., based on examples of FIG. 13A, FIG. 13B and/or FIG. 13C) via the cell, based on the cell common configuration parameters of the cell.

The wireless device 3210 may not receive the on-demand *SIB1* message 3208 after the wireless device 3210 sends (e.g., transmits) the WUS 3205, for example, due to the base station 3220 not receiving the WUS 3205 or the base station 3220 determining not to send (e.g., transmit) the on-demand *SIB1* message 3208. The wireless device 3210 may consider/determine/declare that the on-demand *SIB1* message 3208 is not successfully acquired, for example, based on (e.g., in response to) not receiving the on-demand *SIB1* message 3208. For example, the wireless device 3210 may determine that the cell is barred (e.g., even if the *MIB* message indicates that the cell is not barred). The wireless device 3210 may delay the declaration/evaluation of whether the cell is barred based on *SIB1* acquisition, until or after the wireless device 3210 sends (e.g., transmits) the WUS 3205, which may at least allow the wireless device 3210 to trigger the on-demand *SIB1* of the cell. The wireless device 3210 may unnecessarily and/or pre-maturely determine that the cell is barred and perform a cell re-selection to another cell without triggering the WUS 3205 transmission, for example, if the wireless device 3210 determines/declares whether the cell is barred based on *SIB1* acquisition right after the configured PDCCH occasions for the *SIB1* transmission and without considering the WUS 3205 transmission occasion.

The wireless device 3210 may determine (or consider) the cell (a first cell) is barred and/or perform a cell re-selection to another cell (a second cell) which may be in the same frequency (and/or exclude the barred cell as a candidate for cell selection/reselection for up to 300 seconds). The wireless device 3210 may select the second cell for the cell camping, for example, if the RSRP of the second cell is higher than the RSRP of the first cell.

As described with respect to FIG. 32, the wireless device 3210 may try uplink transmission of the WUS 3205 with multiple times, for example, before the wireless device 3210 declares that the cell is barred and/or the *SIB1* message 3208 is not successfully acquired. For example, the *MIB* message in FIG. 32 may further (explicitly or implicitly) indicate/comprise a value of a timer and/or a maximum transmission quantity (e.g., number) of the WUS 3205. The value of the timer may be used by the wireless device 3210 to determine when to declare that the WUS 3205 transmission is completed (unsuccessfully) if the wireless device 3210 does not receive the on-demand *SIB1* message 3208. The maximum transmission quantity (e.g., number) may be used by the wireless device 3210 to determine how many times the wireless device 3210 may be allowed to send (e.g., transmit) the WUS 3205 before declaring that the WUS 3205 transmission is completed (unsuccessfully) if the wireless device 3210 does not receive the on-demand *SIB1* message 3208.

The wireless device 3210 may start the timer with the value indicated by the *MIB,* based on (e.g., in response to) sending (e.g., transmitting) the WUS 3205. The wireless device 3210 may increment a transmission counter (which is set with an initial value 0 before the initial transmission of the WUS 3205) by one in response to send (e.g., transmit) the WUS 3205. The wireless device 3210 may monitor PDCCH for receiving the DCI 3207 scheduling the on-demand *SIB1* message 3208 (e.g., based on the configured search space#0 and CORESET#0) of the cell. The wireless device 3210 may retransmit the WUS 3205 and increment the transmission counter if the transmission counter is less than the configured maximum transmission quantity (e.g., number), for example, based on (e.g., in response to) not receiving the *SIB1* message 3208.

The wireless device 3210 may keep the timer running, without reset to the initial value, for example, if the wireless device 3210 is performing the retransmission of the WUS 3205. The wireless device 3210 may restart the timer, for example, based on (e.g., in response to) resending (e.g., retransmitting) the WUS 3205. The wireless device 3210 may perform the retransmission of the WUS 3205 and monitor the PDCCH for receiving the *SIB1* message 3208, for example, if the timer is running, and/or the transmission counter is less than the configured maximum transmission quantity (e.g., number).

The wireless device 3210 may determine that the transmission of the WUS 3205 is unsuccessful (or unsuccessfully completed) if the timer expires, the transmission counter is equal to or greater than the maximum transmission quantity (e.g., number) and/or the wireless device 3210 has not yet received the on-demand *SIB1* message 3208 after the wireless device 3210 sends (e.g., transmits) the WUS 3205. The wireless device 3210 may determine/declare that the cell is barred and perform a cell re-selection to another cell (and/or exclude the barred cell as a candidate for cell selection/reselection for up to 300 seconds), for example, based on (e.g., in response to) the transmission of the WUS 3205 being unsuccessfully completed.

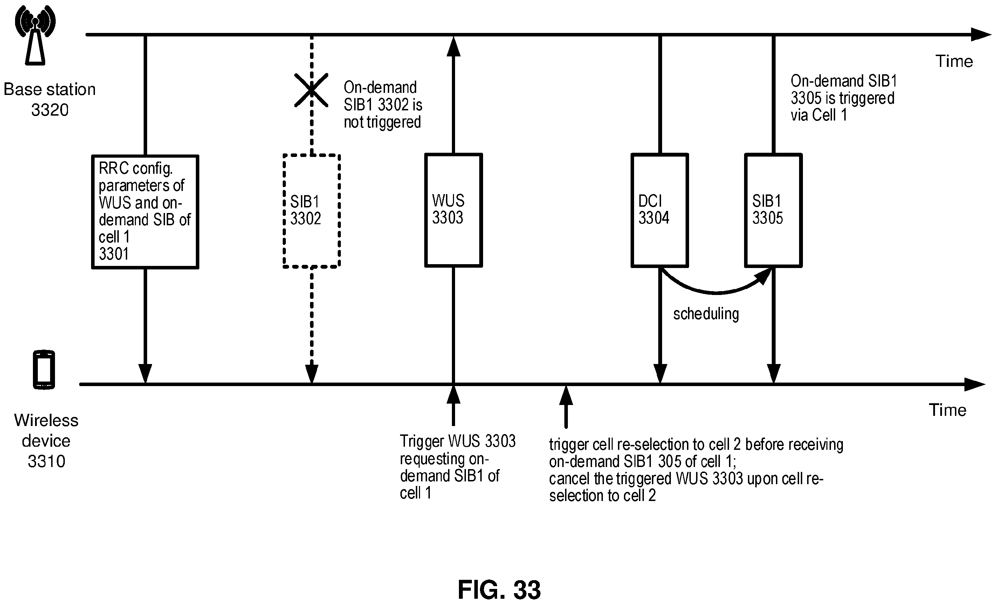

FIG. 33 shows an example of on-demand system information (e.g., *SIB1*) reception. For example, a wireless device 3310 (e.g., UE) may receive from a base station 3320 (e.g., gNB), and/or the base station 3320 may send (e.g., transmit) to the wireless device 3310, one or more *MIB* message comprising configuration parameters of a *SIB1* message 3302 of a first cell (cell 1). The configuration parameters may be implemented, for example, based on examples of FIG. 32. The configuration parameters may comprise a parameter indicating whether the *SIB1* message 3302 is on-demand triggered (e.g., different from a legacy system) or always sent (e.g., transmitted), for example, such as in the legacy system. The configuration parameters may indicate that radio resources of a WUS 3303 may be used to request the *SIB1* message 3302, for example, based on an example of FIG. 32.

The base station 3320 may determine not to send (e.g., transmit or trigger the transmitting) the *SIB1* message 3302 via the first cell (e.g., cell 1) after the base station 3320 sends (e.g., transmits) the *MIB* message in the first cell (e.g., cell 1). The wireless device 3310, after receiving the *MIB* message, may measure SSBs of the first cell (e.g., cell 1) and monitor PDCCH in one or more slots determined based on the SSBs and/or the configuration of search space#0 and CORESET#0 (indicated by the *MIB* message) of the first cell (e.g., cell 1), as described herein.

The wireless device 3310 may not receive/decode the DCI (e.g., with CRC scrambled by SI-RNTI) that may schedule the *SIB1* message 3302 after receiving the *MIB* message. The wireless device 3310 may not consider/declare/determine that the first cell (e.g., cell 1) is barred (e.g., even if the *MIB* message indicates that the first cell (e.g., cell 1) is not barred by *cellBarred* IE), for example, based on (e.g., in response to) not receiving the DCI scheduling the *SIB1* message 3302. The wireless device 3310 may delay the declaration after the wireless device 3310 sends (e.g., transmits) the WUS 3303. For example, the wireless device 3310 may trigger an uplink transmission of the WUS 3303 (e.g., requesting on-demand *SIB1* 3305 of the first cell (e.g., cell 1)) based on (e.g., in response to) not receiving the DCI 3304. The wireless device 3310 may perform retransmission of the WUS 3303, for example, based on (e.g., in response to) not receiving the on-demand SSB1 3305. The wireless device 3310 may be allowed to retransmit the WUS 3303 multiple times.

The wireless device 3310 may measure SSBs of a second cell (e.g., cell 2), for example, if the (retransmissions of the WUS 3303 has not yet completed (or a process associated with the transmission of the WUS 3303 is still pending/ongoing or is not cancelled) due to no on-demand *SIB1* message having been received. The wireless device 3310 may trigger a cell re-selection to the second cell (e.g., cell 2), for example, based on (e.g., in response to) an RSRP of the second cell (e.g., cell 2) being greater than a threshold or an RSRP of the second cell (e.g., cell 2) being greater than the RSRP of the first cell (e.g., cell 1). The wireless device 3310 may trigger the cell re-selection to the second cell (e.g., cell 2), for example, before the wireless device 3310 receives the on-demand *SIB1* message 3305 from the first cell (e.g., cell 1). The wireless device 3310 may cancel/stop/abort the on-going/pending process associated with the (re-)transmission(s) of the WUS 3303, for example, based on (e.g., in response to) triggering the cell re-selection to the second cell (e.g., cell 2) before the wireless device 3310 receives the on-demand *SIB1* message 3305 from the first cell (e.g., cell 1). The wireless device 3310 may reduce power consumption for the cell camping process, for example, by cancelling/stopping/aborting the process associated with the WUS 3303 to request on-demand *SIB1* message 3305 for a cell if the wireless device 3310 performs a cell re-selection to another cell.

FIG. 34 shows an example of a wake-up signal triggered on-demand transmission and reception. For example, a wireless device 3410 (e.g., UE) may receive from a base station 3420 (e.g., gNB), and/or the base station 3420 may send (e.g., transmit) to the wireless device 3410, at T0, one or more *MIB* message comprising configuration parameters of a system information (e.g., *SIB1*) message of a first cell (e.g., cell 1). The configuration parameters may be implemented, for example, based on the examples of FIG. 32 and/or FIG. 33. The configuration parameters may comprise a parameter indicating whether the *SIB1* message is on-demand triggered (e.g., different from a legacy system) or always sent (e.g., transmitted), for example, such as in the legacy system. The configuration parameters may indicate that radio resources of a WUS 3404 may be used to request the *SIB1* message, for example, based on examples of FIG. 32 and/or FIG. 33.

The configuration parameters of the WUS 3404 may comprise a time offset (or a time gap) between searchspace#0 of CORESET#0 of the cell and transmission occasion of the WUS 3404. For example, the time offset may be in unit of slot, symbol or millisecond. The transmission occasion of the WUS 3404 may be within an uplink slot of the cell. The time offset may start from the last slot (e.g., corresponding to the highest SSB index, or occurring the latest in time domain) of a quantity (e.g., number) of slots which may be associated with the search space#0 for one or more SSBs of the cell. As descrbied with respect to FIG. 34, the last slot may be T1. Configuring the time offset for the WUS 3404 transmission relative to search space#0 may allow the wireless device 3410 to determine whether to trigger the WUS 3404 after the wireless device 3410 has monitored all PDCCH candidates associated with search space#0 and may not detect the DCI scheduling the *SIB1* message.

The wireless device 3410 may monitor PDCCH via search space#0 of CORESET#0 of the cell to receive a DCI that may schedule *SIB1* message. The wireless device 3410 may not receive the DCI, at T1, which may the last slot where the base station 3420 may send (e.g., transmit) the DCI for search space#0 of CORESET#0 of the cell. The wireless device 3410 may trigger the WUS 3404 at T3, which may be at the time offset after T1, for example, based on (e.g., in response to) not receiving the DCI at T1. The wireless device 3410 may send (e.g., transmit) the WUS 3404 at T3 and monitor the PDCCH to receive the on-demand *SIB1* message 3406, for example, based on the periodicity of the *SIB1* message 3406 and/or the periodicity of search space#0. The wireless device 3410 may receive the DCI 3405 with CRC scrambled by SI-RNTI, at T4, and receive the *SIB1* message 3406 scheduled by the DCI 3405, at T5.

The frequency resources of the WUS 3404 may be implicitly indicated by the *MIB* message, for example, by pre-configured association between search space#0/CORESET#0 and the WUS 3404. As shown in FIG. 24B and/or FIG. 24C, 4 bits may be used to indicate configuration of CORESET#0 and another 4 bits may be used to indicate configuration of search space#0. For example, the same 4 bits used for CORESET#0 may be also used to indicate the frequency resources of the WUS 3404. For example, the base station 3420 and/or the wireless device 3410 may preconfigure 16 sets of frequency resource configurations of the WUS 3404, where the base station 3420 may use the 4 bits to indicate one of the 16 sets. A set of frequency resource configurations may comprise an absolute frequency point and/or an RB offset indication, based on which the wireless device 3410 may send (e.g., transmit) the WUS 3404 on the uplink carrier of the cell, a preamble/SRS/RS index, a subcarrier spacing indication for the WUS 3404, a received target power, a maximum quantity (e.g., number) of transmissions of the WUS 3404, a transmission power ramping step, etc. For example, the received target power may be absent where the wireless device 3410 may always send (e.g., transmit) the WUS 3404 with the maximum transmission power of the wireless device 3410. For example, the transmission power ramping step may be absent where the wireless device 3410 may always retransmit the WUS 3404 with the maximum transmission power.

The same 4 bits used for search space#0 may be used to indicate the time resources of the WUS 3404. For example, the base station 3420 and/or the wireless device 3410 may preconfigure 16 sets of time resource configurations of the WUS 3404, where the base station 3420 may use the 4 bits to indicate one of the 16 sets. A set of time resource configurations may comprise a time offset (between the search space#0 and the WUS occasion), a periodicity of the WUS 3404, a quantity (e.g., number) of symbols for the transmissions of the WUS 3404, etc.

The 8 bits (comprising 4 bits for search space#0 and 4 bits for CORESET#0) may jointly indicate a set of time/frequency resources for the WUS 3404 from at most 64 sets of time/frequency resources. The at most 64 sets of time/frequency resources may be preconfigured and known to both the base station 3420 and the wireless device 3410. A set of time/frequency resources may comprise an absolute frequency point and/or an RB offset indication based on which the wireless device 3410 may send (e.g., transmit) the WUS 3404 on the uplink carrier of the cell, a preamble/SRS/RS index, a subcarrier spacing indication for the WUS 3404, a received target power, a maximum quantity (e.g., number) of transmission of the WUS 3404, a transmission power ramping step, a time offset (between the search space#0 and the WUS occasion), a periodicity of the WUS 3404, a quantity (e.g., number) of symbols for the transmissions of the WUS 3404, etc. The base station 3420 and the wireless device 3410 may align on where the WUS 3404 may be sent (e.g., transmitted), for example, by implementing an example of FIG. 34.

As shown and described with respect to FIG. 32, FIG. 33, and FIG. 34, a wireless device may receive, from a base station, a *MIB* message comprising configuration parameters of a *SIB1* message of a first cell. The configuration parameters comprise first parameters of PDCCH for the *SIB1* message and second parameter indicating that the *SIB1* message is on-demand triggered via the first cell, for example, based on an uplink signal. The wireless device may send (e.g., transmit) the uplink signal to request an on-demand transmission of the *SIB1* message. The wireless device may determine that the first cell is barred, for example, based on (e.g., in response to) not receiving, after sending (e.g., transmitting) the uplink signal, the *SIB1* message based on the first parameters. The wireless device may perform a cell reselection to a second cell. The wireless device may perform a cell reselection to a second cell, for example, based on the first cell being barred.

The wireless device may determine that the first cell is not barred based on (e.g., in response to) not receiving the *SIB1* message based on the scheduling information, for example, before sending (e.g., transmitting) the uplink signal. The wireless device may maintain camping on the first cell, for example, based on the determining that the first cell is not barred.

The wireless device may camp on the second cell, for example, based on performing the cell selection to the second cell. The first cell and the second cell may be in the same frequency. The wireless device may receive the *MIB* message, for example, after the wireless device performs a cell selection to the first cell. The wireless device may camp on the first cell, for example, based on receiving the *MIB* message via the first cell. The *MIB* message may comprise a third parameter indicating that the first cell is not barred.

The wireless device may determine that the first cell is barred, for example, after receiving the *MIB* message comprising the third parameter indicating that the first cell is not barred and based on (e.g., in response to) not receiving the *SIB1* message after sending (e.g., transmitting) the uplink signal. The wireless device may be in an RRC_IDLE state or an RRC_INACTIVE state. The wireless device may be in an RRC_CONNECTED state. The uplink signal may comprise a preamble, an SRS, and/or an uplink RS different from the SRS.

A wireless device receives a *MIB* message comprising configuration parameters of a procedure for requesting a *SIB1* message for a first cell. The configuration parameters may comprise first parameters of WUSs, second parameter indicating that the *SIB1* message is on-demand triggered via the first cell based on the WUS. The wireless device may send (e.g., transmit) at least one of the WUSs for the procedure. The wireless device may cancel the procedure, for example, before receiving the *SIB1* message via the first cell and based on (e.g., in response to) triggering a cell re-selection to a second cell.

A wireless device may receive a *MIB* message comprising a first parameter indicating a first slot for receiving a DCI that may schedule a *SIB1* message for a cell, a second parameter indicating that the *SIB1* message is on-demand triggered via the cell based on an uplink signal, and/or a third parameter indicating a time offset between the first slot and a transmission occasion of the uplink signal. The wireless device may monitor, in the first slot, a PDCCH of the cell to receive the DCI that may schedule the *SIB1* message. The wireless device may send (e.g., transmit) the uplink signal at a second slot occurring at the time offset after the first slot, for example, based on (e.g., in response to) not receiving the DCI in the first slot.

A wireless device may receive a *MIB* message comprising a first parameter indicating a first slot for receiving a DCI that may schedule a *SIB1* message for a cell, and a second parameter indicating that the *SIB1* message is on-demand triggered via the cell based on an uplink signal. The wireless device may monitor, in the first slot, a PDCCH of the cell to receive the DCI that may schedule the *SIB1* message. The wireless device may send (e.g., transmit) the uplink signal, for example, based on (e.g., in response to) not receiving the DCI in the first slot and a RSRP of the cell being greater than a threshold.

A wireless device may receive a *MIB* message comprising a first parameter indicating a first slot for receiving a DCI that may schedule a *SIB1* message for a cell, a second parameter indicating that the *SIB1* message is on-demand triggered via the cell based on an uplink signal. The wireless device may monitor, in the first slot, a PDCCH of the cell for receiving the DCI that may schedule the *SIB1* message. The wireless device may skip a transmission of the uplink signal, for example, based on (e.g., in response to) receiving the *SIB1* message scheduled by the DCI received in the first slot and/or a RSRP of the cell being lower than a threshold.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device, an indication that system information associated with a cell may be requested.

Clause 2. The method of clause 1, further comprising sending, via the cell, an uplink signal requesting a transmission of system information associated with the cell.

Clause 3. The method of any one of clause 1-2, further comprising, based on a determination that system information has not been received after sending the uplink signal, determining that the cell is barred.

Clause 4. The method of any one of clause 1-3, further comprising performing, based on the determination that the cell is barred, a cell re-selection procedure.

Clause 5. The method of any one of clause 1-4, further comprising receiving downlink control information (DCI) configured to schedule reception of system information.

Clause 6. The method of any one of clause 1-5, wherein the cell re-selection procedure comprises switching the cell to a different cell.

Clause 7. The method of any one of clause 1-6, wherein the uplink signal requesting a transmission of system information associated with the cell comprises a request for an on-demand system information block (SIB1).

Clause 8. The method of any one of clause 1-7, further comprising receiving a master information block (MIB) message after performing a cell selection to the cell.

Clause 9. The method of any one of clause 1-8, wherein the system information comprises a system information block 1 (SIB1).

Clause 10. The method of any one of clause 1-9, wherein the sending the uplink signal is based on at least one of: a determination of a failure to receive downlink control information (DCI); or a reference signal received power (RSRP) of the cell being greater than a threshold.

Clause 11. The method of any one of clause 1-10, further comprising skipping a transmission of the uplink signal based on at least one of: a determination that system information, scheduled by downlink control information (DCI), has been received; or a reference signal received power (RSRP) of the cell being lower than a threshold.

Clause 12. The method of any one of clause 1-11, wherein the uplink signal comprises at least one of: a preamble; a sounding reference signal (SRS); or an uplink reference signal that is different from a sounding reference signal (SRS).

Clause 13. The method of any one of clause 1-12, further comprising receiving an indication of one or more radio resources of the uplink signal via the cell.

Clause 14. The method of any one of clause 1-13, wherein the indication comprises a parameter indicating the cell is not barred.

Clause 15. The method of any one of clause 1-14, further comprising cancelling, based on triggering a cell reselection to a different cell, a scheduled reception of a system information message via the cell.

Clause 16. A computing device comprising: one or more processors; and memory storing instructions that, when executed by the one or more processors, cause the computing device to perform the method of any one of clauses 1 to 15.

Clause 17. A system comprising: a wireless device configured to perform the method of any one of clauses 1 to 15; and a base station configured to send the indication.

Clause 18. A computer-readable medium storing instructions that, when executed, cause performance of the method of any one of clauses 1 to 15.

Clause 19. A method comprising receiving, by a wireless device, a first parameter indicating a first slot to receive downlink control information (DCI) configured to schedule system information of a cell; and a second parameter indicating that the system information may be requested.

Clause 20. The method of clause 19, further comprising monitoring, in the first slot, a physical downlink control channel (PDCCH) of the cell for DCI configured to schedule reception of system information.

Clause 21. The method of any one of clause 19-20, further comprising sending, based on a determination that DCI has not been received in the first slot, an uplink signal in a second slot occurring after the first slot.

Clause 22. The method of any one of clause 19-21, further comprising receiving a third parameter indicating a time offset between the first slot and a transmission occasion of the uplink signal.

Clause 23. The method of any one of clause 19-22, wherein the sending the uplink signal is based on at least one of: a determination of a failure to receive the DCI in the first slot; or a reference signal received power of (RSRP) the cell being greater than a threshold.

Clause 24. The method of any one of clause 19-23, further comprising skipping a transmission of the uplink signal based on at least one of: a determination of receiving the system information scheduled by the DCI in the first slot; or a reference signal received power (RSRP) of the cell being lower than a threshold.

Clause 25. The method of any one of clause 19-24, further comprising cancelling, based on triggering a cell reselection to a different cell, a scheduled reception of a system information message via the cell.

Clause 26. A computing device comprising: one or more processors; and memory storing instructions that, when executed by the one or more processors, cause the computing device to perform the method of any one of clauses 19-25.

Clause 27. A system comprising: a wireless device configured to perform the method of any one of clauses 19-25; and a base station configured to send the indication.

Clause 28. A computer-readable medium storing instructions that, when executed, cause performance of the method of any one of clauses 19-25.

Clause 29. A method comprising sending, by a base station and to a wireless device, an indication that system information block associated with a cell may be requested.

Clause 30. The method of clause 29, further comprising receiving, via the cell, an uplink signal requesting a transmission of system information associated with the cell.

Clause 31. The method of any one of clause 29-30, wherein the uplink signal comprises at least one of: a preamble; a sounding reference signal (SRS); or an uplink reference signal that is different from a sounding reference signal (SRS).

Clause 32. The method of any one of clause 29-31, further comprising receiving an indication of one or more radio resources of the uplink signal on the cell.

Clause 33. The method of any one of clause 29-32, further comprising sending, to the wireless device, a master information block (MIB) message.

Clause 34. The method of any one of clause 29-33, wherein the uplink signal requesting a transmission of system information associated with the cell comprises a request for an on-demand system information block (SIB1).

Clause 35. A computing device comprising: one or more processors; and memory storing instructions that, when executed by the one or more processors, cause the computing device to perform the method of any one of clauses 29-34.

Clause 36. A system comprising: a wireless device configured to perform the method of any one of clauses 29-34; and a base station configured to send the indication.

Clause 37. A computer-readable medium storing instructions that, when executed, cause performance of the method of any one of clauses 29-34.

Clause 38. A method comprising receiving, by a wireless device, one or more radio resource control (RRC) message comprising configuration parameters of a first cell, wherein the configuration parameters indicate that system information block 1 (SIB1) of the first cell is on-demand triggered via the first cell based on an uplink signal.

Clause 39. The method of clause 38, further comprising transmitting, via the first cell, the uplink signal requesting an on-demand transmission of the SIB1 of the first cell.

Clause 40. The method of any one of clause 38-39, further comprising determining, that the first cell is barred, in response to not receiving the SIB1 after transmitting the uplink signal.

Clause 41. The method of any one of clause 38-40, further comprising performing, based on the first cell being barred, a cell re-selection to a second cell different from the first cell.

Clause 42. A method comprising receiving, by a wireless device, one or more radio resource control (RRC) messages comprising configuration parameters of a procedure for requesting system information block 1 (SIB1) for a first cell.

Clause 43. The method of clause 42, wherein the configuration parameters comprise: first parameters of wake-up signals (WUSs); and second parameter indicating that the SIB1 is on-demand requested via the first cell based on the WUSs.

Clause 44. The method of any one of clause 42-43, further comprising transmitting at least one of the WUSs for the procedure.

Clause 45. The method of any one of clause 42-44, further comprising cancelling the procedure before receiving the SIB 1 message via the first cell and in response to triggering a cell re-selection to a second cell.

Clause 46. A method comprising receiving, by a wireless device, one or more radio resource control (RRC) messages comprising: a first parameter indicating a first slot for receiving a DCI scheduling a SIB1 of a cell; a second parameter indicating that the SIB1 is on-demand triggered via the cell based on an uplink signal; and a third parameter indicating a time offset between the first slot and a transmission occasion of the uplink signal.

Clause 47. The method of clause 46, further comprising monitoring, in the first slot, a PDCCH of the cell for receiving the DCI scheduling the SIB 1.

Clause 48. The method of any one of clause 46-47, further comprising transmitting, in response to not receiving the DCI in the first slot, the uplink signal at a second slot occurring at the time offset after the first slot.

Clause 49. A method comprising receiving, by a wireless device, one or more radio resource control (RRC) messages comprising: a first parameter indicating a first slot for receiving a DCI scheduling a SIB1 of a cell; and a second parameter indicating that the SIB1 is on-demand triggered via the cell based on an uplink signal.

Clause 50. The method of clause 49, further comprising monitoring, in the first slot, a PDCCH of the cell for receiving the DCI scheduling the SIB 1.

Clause 51. The method of any one of clause 49-50, further comprising transmitting the uplink signal in response to: not receiving the DCI in the first slot; and a reference signal received power of the cell being greater than a threshold.

Clause 52. A method comprising receiving, by a wireless device, one or more radio resource control (RRC) messages comprising: a first parameter indicating a first slot for receiving a DCI scheduling a SIB1 of a cell; and a second parameter indicating that the SIB1 is on-demand triggered via the cell based on an uplink signal.

Clause 53. The method of clause 52, further comprising monitoring, in the first slot, a PDCCH of the cell for receiving the DCI scheduling the SIB 1.

Clause 54. The method of any one of clause 52-53, further comprising skipping a transmission of the uplink signal in response to at least one of: receiving the SIB1 scheduled by the DCI received in the first slot; and a reference signal received power of the cell being lower than a threshold.

Clause 55. The method of any one of clause 52-54, further comprising camping on the second cell based on performing the cell selection to the second cell.

Clause 56. The method of any one of clause 52-55, wherein the first cell and the second cell are in the same frequency.

Clause 57. The method of any one of clause 52-56, wherein the wireless device receives master information block (MIB) message after the wireless device performs a cell selection to the first cell.

Clause 58. The method of any one of clause 52-57, further comprising camping on the first cell based on receiving the MIB message via the first cell.

Clause 59. The method of any one of clause 52-58, wherein the MIB message comprises a third parameter indicating that the first cell is not barred.

Clause 60. The method of any one of clause 52-59, wherein the wireless device determines that the first cell is barred: after receiving the MIB message comprising the third parameter indicating that the first cell is not barred; and in response to not receiving the SIB1 after transmitting the WUS.

Clause 61. The method of any one of clause 52-60, wherein the wireless device is in an RRC_IDLE state or an RRC_INACTIVE state.

Clause 62. The method of any one of clause 52-61, wherein the wireless device is in an RRC_CONNECTED state.

Clause 63. The method of any one of clause 52-62, wherein the WUS comprises at least one of: a preamble; an SRS; and an uplink reference signal different from the SRS.

Clause 64. The method of any one of clause 52-63, wherein the configuration parameters indicate radio resources of the WUS on the first cell.

Clause 65. A computing device comprising: one or more processors; and memory storing instructions that, when executed by the one or more processors, cause the computing device to perform the method of any one of clauses 52-64.

Clause 66. A system comprising: a wireless device configured to perform the method of any one of clauses 52-64;

and a base station configured to send the indication.

Clause 67. A computer-readable medium storing instructions that, when executed, cause performance of the method of any one of clauses 52-64.

A wireless device may perform a method comprising multiple operations. The wireless device may receive an indication that system information that may be associated with a cell may be requested. The wireless device may send, via the cell, an uplink signal that may request a transmission of system information that may be associated with the cell. The wireless device may determine that the cell is barred, for example, based on a determination that system information has not been received after sending the uplink signal. The wireless device may perform a cell re-selection procedure, for example, based on the determination that the cell is barred. The wireless device may receive downlink control information (DCI) that may be configured to schedule reception of system information. The cell re-selection procedure may comprise switching the cell to a different cell. The uplink signal requesting a transmission of system information associated with the cell may comprise a request for an on-demand system information block (SIB1). The wireless device may receive a master information block (MIB) message after performing a cell selection to the cell. The system information may comprise a system information block 1 (SIB1). The wireless device may send the uplink signal, for example, based on at least one of: a determination of a failure to receive downlink control information (DCI); or a reference signal received power (RSRP) of the cell being greater than a threshold. The wireless device may skip a transmission of the uplink signal, for example, based on at least one of: a determination that system information, scheduled by downlink control information (DCI), has been received; or a reference signal received power (RSRP) of the cell being lower than a threshold. The uplink signal may comprise at least one of: a preamble; a sounding reference signal (SRS); or an uplink reference signal that is different from a sounding reference signal (SRS). The wireless device may receive an indication of one or more radio resources of the uplink signal via the cell. The indication may comprise a parameter indicating the cell is not barred. The wireless device may cancel a scheduled reception of a system information message via the cell, for example, based on triggering a cell re-selection to a different cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the indication. A computer-readable medium may store instructions that, when executed, cause performance of the described method, additional operations, and/or include the additional elements.

A wireless device may perform a method comprising multiple operations. The wireless device may receive a first parameter that may indicate a first slot to receive downlink control information (DCI) configured to schedule system information of a cell; and/or a second parameter that may indicate that the system information may be requested. The wireless device may monitor, in the first slot, a physical downlink control channel (PDCCH) of the cell for DCI that may be configured to schedule reception of system information. The wireless device may send an uplink signal in a second slot occurring after the first slot, for example, based on a determination that DCI has not been received in the first slot. The wireless device may receive a third parameter indicating a time offset between the first slot and a transmission occasion of the uplink signal. The wireless device may send the uplink signal, for example, based on at least one of: a determination of a failure to receive the DCI in the first slot; or a reference signal received power of (RSRP) the cell being greater than a threshold. The wireless device may skip a transmission of the uplink signal, for example, based on at least one of: a determination of receiving the system information scheduled by the DCI in the first slot; or a reference signal received power (RSRP) of the cell being lower than a threshold. The wireless device may cancel a scheduled reception of a system information message via the cell, for example, based on triggering a cell re-selection to a different cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the indication. A computer-readable medium may store instructions that, when executed, cause performance of the described method, additional operations, and/or include the additional elements.

A base station may perform a method comprising multiple operations. The base station may receive send, to a wireless device, an indication that system information block associated with a cell may be requested. The base station may receive, via the cell, an uplink signal requesting a transmission of system information associated with the cell. The uplink signal may comprise at least one of: a preamble; a sounding reference signal (SRS); or an uplink reference signal that may be different from a sounding reference signal (SRS). The base station may receive an indication of one or more radio resources of the uplink signal on the cell. The base station may send, to the wireless device, a master information block (MIB) message. The uplink signal requesting a transmission of system information associated with the cell mat comprise a request for an on-demand system information block (SIB 1).

The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the indication. A computer-readable medium may store instructions that, when executed, cause performance of the described method, additional operations, and/or include the additional elements.

A wireless device may perform a method comprising multiple operations. The wireless device may receive one or more radio resource control (RRC) message comprising configuration parameters of a first cell. The configuration parameters may indicate that system information block 1 (SIB1) of the first cell may be on-demand triggered via the first cell based on an uplink signal. The wireless device may send (e.g., transmit), via the first cell, the uplink signal requesting an on-demand transmission of the SIB1 of the first cell. The wireless device may determine, that the first cell is barred, based on (e.g., in response to) not receiving the SIB 1 after transmitting the uplink signal. The wireless device may perform, based on the first cell being barred, a cell re-selection to a second cell different from the first cell. The wireless device may receive one or more radio resource control (RRC) messages comprising configuration parameters of a procedure for requesting system information block 1 (SIB 1) for a first cell. The configuration parameters may comprise first parameters of wake-up signals (WUSs); and second parameter indicating that the SIB1 is on-demand requested via the first cell based on the WUSs. The wireless device may send (e.g., transmit) at least one of the WUSs for the procedure. The wireless device may cancel the procedure before receiving the SIB1 message via the first cell and based on (e.g., in response to) triggering a cell re-selection to a second cell. The wireless device may receive one or more radio resource control (RRC) messages comprising: a first parameter indicating a first slot for receiving a DCI scheduling a SIB1 of a cell; a second parameter indicating that the SIB1 is on-demand triggered via the cell based on an uplink signal; and a third parameter indicating a time offset between the first slot and a transmission occasion of the uplink signal. The wireless device may monitor, in the first slot, a PDCCH of the cell for receiving the DCI scheduling the SIB1. The wireless device may send (e.g., transmit), based on (e.g., in response to) not receiving the DCI in the first slot, the uplink signal at a second slot occurring at the time offset after the first slot. The wireless device may receive one or more radio resource control (RRC) messages comprising: a first parameter indicating a first slot for receiving a DCI scheduling a SIB1 of a cell; and a second parameter indicating that the SIB1 is on-demand triggered via the cell based on an uplink signal. The wireless device may monitor, in the first slot, a PDCCH of the cell for receiving the DCI scheduling the SIB1. The wireless device may send (e.g., transmit) the uplink signal based on (e.g., in response to): not receiving the DCI in the first slot; and a reference signal received power of the cell being greater than a threshold. The wireless device may receive one or more radio resource control (RRC) messages comprising: a first parameter indicating a first slot for receiving a DCI scheduling a SIB 1 of a cell; and a second parameter indicating that the SIB 1 is on-demand triggered via the cell based on an uplink signal. The wireless device may monitor, in the first slot, a PDCCH of the cell for receiving the DCI scheduling the SIB1. The wireless device may skip a transmission of the uplink signal based on (e.g., in response to) at least one of: receiving the SIB1 scheduled by the DCI received in the first slot; and a reference signal received power of the cell being lower than a threshold. The wireless device may camp on the second cell based on performing the cell selection to the second cell. The first cell and the second cell may be in the same frequency. The wireless device may receive master information block (MIB) message after the wireless device performs a cell selection to the first cell. The wireless device may camp on the first cell based on receiving the MIB message via the first cell. The MIB message may comprise a third parameter indicating that the first cell is not barred. The wireless device may determine that the first cell is barred: after receiving the MIB message comprising the third parameter indicating that the first cell is not barred; and based on (e.g., in response to) not receiving the SIB1 after transmitting the WUS. The wireless device may be in an RRC_IDLE state or an RRC_INACTIVE state. The wireless device may be in an RRC_CONNECTED state. The WUS may comprise at least one of: a preamble; an SRS; and an uplink reference signal different from the SRS. The configuration parameters may indicate radio resources of the WUS on the first cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the indication. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, MATLAB or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   receiving, by a wireless device, an indication that system information associated with a cell may be requested;
   sending, via the cell, an uplink signal requesting a transmission of system information associated with the cell;
   based on a determination that system information has not been received after sending the uplink signal, determining that the cell is barred; and
   performing, based on the determination that the cell is barred, a cell re-selection procedure.

2. The method of claim 1, further comprising receiving downlink control information (DCI) configured to schedule reception of system information.

3. The method of any one of claims 1-2, wherein the uplink signal requesting a transmission of system information associated with the cell comprises a request for an on-demand system information block (SIB1).

4. The method of any one of claims 1-3, wherein the cell re-selection procedure comprises switching the cell to a different cell.

5. The method of any one of claims 1-4, further comprising receiving a master information block (MIB) message after performing a cell selection to the cell.

6. The method of any one of claims 1-5, wherein the system information comprises a system information block 1 (SIB1).

7. The method of any one of claims 1-6, wherein the sending the uplink signal is based on at least one of:

   a determination of a failure to receive downlink control information (DCI); or
   a reference signal received power (RSRP) of the cell being greater than a threshold.

8. The method of any one of claims 1-7, further comprising skipping a transmission of the uplink signal based on at least one of:

   a determination that system information, scheduled by downlink control information (DCI), has been received; or
   a reference signal received power (RSRP) of the cell being lower than a threshold.

9. The method of any one of claims 1-8, wherein the uplink signal comprises at least one of:

   a preamble;
   a sounding reference signal (SRS); or
   an uplink reference signal that is different from a sounding reference signal (SRS).

10. The method of any one of claims 1-9, further comprising receiving an indication of one or more radio resources of the uplink signal via the cell.

11. The method of any one of claims 1-10, wherein the indication comprises a parameter indicating the cell is not barred.

12. The method of any one of claims 1-11, further comprising cancelling, based on triggering a cell reselection to a different cell, a scheduled reception of a system information message via the cell.

13. A computing device comprising:

   one or more processors; and
   memory storing instructions that, when executed by the one or more processors, cause the computing device to perform the method of any one of claims 1 to 12.

14. A system comprising:

   a wireless device configured to perform the method of any one of claims 1 to 12; and

a base station configured to send the indication.

15. A computer-readable medium storing instructions that, when executed, cause performance of the method of any one of claims 1 to 12.

**FIG. 1A**

**FIG. 1B**

EP 4 535 874 A1

## Wireless Device 210

| SDAP 215 |
| PDCP 214 |
| RLC 213 |
| MAC 212 |
| PHY 211 |

## Base Station 220

| SDAP 225 |
| PDCP 224 |
| RLC 223 |
| MAC 222 |
| PHY 221 |

## FIG. 2A

## Wireless Device 210

| NAS 217 |
| RRC 216 |
| PDCP 214 |
| RLC 213 |
| MAC 212 |
| PHY 211 |

## Base Station 220

| RRC 226 |
| PDCP 224 |
| RLC 223 |
| MAC 222 |
| PHY 221 |

## AMF 230

| NAS 237 |

## FIG. 2B

**IP Packets**

**FIG. 3**

**FIG. 4A**

**FIG. 4B**

EP 4 535 874 A1

FIG. 5A — Downlink

FIG. 5B — Uplink

FIG. 6

FIG. 7

EP 4 535 874 A1

Resource Element (RE)
1 Symbol x 1 Subcarrier

Resource Block (RB)
12 Subcarriers

NR Carrier Bandwidth
(Up to 3300 Subcarriers)

Frequency

Time

One Slot (14 Symbols)

FIG. 8

**FIG. 9**

**FIG. 10A**

**FIG. 10B**

**FIG. 11A**

**FIG. 11B**

**FIG. 12A**

**FIG. 12B**

EP 4 535 874 A1

Wireless Device    Base Station    Wireless Device    Base Station    Wireless Device    Base Station

Configuration 1310

⋮

Msg 1 1311

Msg 2 1312

Msg 3 1313

Msg 4 1314

**FIG. 13A**

Configuration 1320

⋮

Msg 1 1321

Msg 2 1322

**FIG. 13B**

Configuration 1320

⋮

Msg A 1331

Preamble 1341

⋮

1342 Transport block

Msg B 1332

**FIG. 13C**

EP 4 535 874 A1

CORESET
1404

CORESET
1403

CORESET
1402

CORESET
1401

Bandwidth

One slot

**FIG. 14A**

CORESET → CCE-to-REG mapping → Search Space → PDCCH candidate
PDCCH candidate
PDCCH candidate

**FIG. 14B**

**FIG. 15A**

FIG. 15B

**FIG. 16A**

**FIG. 16B**

**FIG. 16D**

**FIG. 16C**

**FIG. 17A**

**FIG. 17B**

**FIG. 17C**

| R/LCID subheader | Fixed-sized MAC CE | | R/F/LCID/L subheader | Variable-sized MAC CE | | R/F/LCID/L subheader | MAC SDU |
|---|---|---|---|---|---|---|---|

| MAC subPDU including MAC CE 1 | MAC subPDU including MAC CE 2 | MAC subPDU including MAC SDU | ... | MAC subPDU including MAC SDU | MAC subPDU including padding (opt) |
|---|---|---|---|---|---|

**FIG. 18A**

EP 4 535 874 A1

| R/F/LCID/L subheader | MAC SDU | | R/LCID subheader | Fixed-sized MAC CE | | R/F/LCID/L subheader | Variable-sized MAC CE |
|---|---|---|---|---|---|---|---|

| MAC subPDU including MAC SDU | MAC subPDU including MAC SDU | ... | MAC subPDU including MAC CE 1 | MAC subPDU including MAC CE 2 | MAC subPDU including padding (opt) |
|---|---|---|---|---|---|

**FIG. 18B**

| Index | LCID values |
|---|---|
| 000000 | CCCH |
| 000001-100000 | Identity of a logical channel |
| 100001-101111 | Reserved |
| 110000 | SP ZP CSI-RS Resource Set Act./Deact. |
| 110001 | PUCCH spatial relation Act./Deact. |
| 110010 | SP SRS Act./Deact. |
| 110011 | SP CSI reporting on PUCCH Act./Deact. |
| 110100 | TCI State Indication for UE-specific PDCCH |
| 110101 | TCI State Indication for UE-specific PDSCH |
| 110110 | Aperiodic CSI Trigger State Subselection |
| 110111 | SP CSI-RS/CSI-IM Resource Set Act./Deact. |
| 111000 | Duplication Activation/deactivation |
| 111001 | SCell activation/deactivation (4 Octet) |
| 111010 | SCell activation/deactivation (1 Octet) |
| 111011 | Long DRX Command |
| 111100 | DRX Command |
| 111101 | Timing Advance Command |
| 111110 | UE Contention Resolution Identity |
| 111111 | Padding |

FIG. 19

| Index | LCID values |
|---|---|
| 000000 | CCCH |
| 000001-100000 | Identity of a logical channel |
| 100001-110110 | Reserved |
| 110111 | Configured Grant Confirmation |
| 111000 | Multiple Entry PHR |
| 111001 | Single Entry PHR |
| 111010 | C-RNTI |
| 111011 | Short Truncated BSR |
| 111100 | Long Truncated BSR |
| 111101 | Short BSR |
| 111110 | Long BSR |
| 111111 | Padding |

# FIG. 20

| $C_7$ | $C_6$ | $C_5$ | $C_4$ | $C_3$ | $C_2$ | $C_1$ | R | Oct 1 |

**FIG. 21A**

| $C_7$ | $C_6$ | $C_5$ | $C_4$ | $C_3$ | $C_2$ | $C_1$ | R | Oct 1 |
|---|---|---|---|---|---|---|---|---|
| $C_{15}$ | $C_{14}$ | $C_{13}$ | $C_{12}$ | $C_{11}$ | $C_{10}$ | $C_9$ | $C_8$ | Oct 2 |
| $C_{23}$ | $C_{22}$ | $C_{21}$ | $C_{20}$ | $C_{19}$ | $C_{18}$ | $C_{17}$ | $C_{16}$ | Oct 3 |
| $C_{31}$ | $C_{30}$ | $C_{29}$ | $C_{28}$ | $C_{27}$ | $C_{26}$ | $C_{25}$ | $C_{24}$ | Oct 4 |

**FIG. 21 B**

**FIG. 22**

EP 4 535 874 A1

| DCI format | Usage |
|---|---|
| 0_0 | Scheduling of PUSCH in one cell |
| 0_1 | Scheduling of one or multiple PUSCH in one cell, or indicating CG-DFI for configured grant PUSCH |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying a group of UEs of the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 2_7 | Notifying Paging early indication and TRS availability indication for one or more UEs |
| 3_0 | Scheduling of NR sidelink in one cell |
| 3_1 | Scheduling of LTE sidelink in one cell |
| 4_0 | Scheduling of PDSCH with CRC scrambled by MCCH-RNTI/G-RNTI for broadcast |
| 4_1 | Scheduling of PDSCH with CRC scrambled by G-RNTI/G-CS-RNTI for multicast |
| 4_2 | Scheduling of PDSCH with CRC scrambled by G-RNTI/G-CS-RNTI for multicast |

FIG. 23

```
MIB ::=                          SEQUENCE {
    systemFrameNumber                 BIT STRING (SIZE (6)),
    subCarrierSpacingCommon            ENUMERATED {scs15or60, scs30or120},
    ssb-SubcarrierOffset              INTEGER (0..15),
    dmrs-TypeA-Position               ENUMERATED {pos2, pos3},
    pdcch-ConfigSIB1                  PDCCH-ConfigSIB1,
    cellBarred                       ENUMERATED {barred, notBarred},
    intraFreqReselection              ENUMERATED {allowed, notAllowed},
    spare                        BIT STRING (SIZE (1))}

PDCCH-ConfigSIB1 ::=             SEQUENCE {
    controlResourceSetZero            ControlResourceSetZero,
    searchSpaceZero                  SearchSpaceZero}
```

## FIG. 24A

| Index | SS/PBCH block and CORESET multiplexing pattern | Number of RBs per coreset | Number of Symbols per coreset | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| ... | ... | ... | ... | ... |

## FIG. 24B

| Index | $O$ | Number of search space sets per slot | $M$ | First symbol index |
|---|---|---|---|---|
| 0 | 0 | 1 | 1 | 0 |
| 1 | 0 | 2 | 1/2 | {0, if $i$ is even}, {$N$, if is odd} |
| 2 | 2 | 1 | 1 | 0 |
| 3 | 2 | 2 | 1/2 | {0, if $i$ is even}, {$N$, if $i$ is odd} |
| 4 | 5 | 1 | 1 | 0 |
| 5 | 5 | 2 | 1/2 | {0, if $i$ is even}, $N$, if $i$ is odd |
| 6 | 7 | 1 | 1 | 0 |
| 7 | 7 | 2 | 1/2 | {0, if $i$ is even}, {$N$, if $i$ is odd} |
| ... | ... | ... | ... | ... |

## FIG. 24C

```
SIB1 ::=        SEQUENCE {
    cellSelectionInfo            SEQUENCE {
        q-RxLevMin                  Q-RxLevMin,
        q-RxLevMinOffset             INTEGER (1..8) ...}
    cellAccessRelatedInfo        CellAccessRelatedInfo,
    connEstFailureControl        ConnEstFailureControl
    si-SchedulingInfo            SI-SchedulingInfo
    servingCellConfigCommon         ServingCellConfigCommonSIB
    ims-EmergencySupport          ENUMERATED {true}
    eCallOverIMS-Support          ENUMERATED {true}
    ue-TimersAndConstants         UE-TimersAndConstants
    uac-BarringInfo              SEQUENCE { ...}
    useFullResumeID              ENUMERATED {true}
    lateNonCriticalExtension      OCTET STRING
    nonCriticalExtension         SIB1-v16xy-IEs  }


ServingCellConfigCommonSIB ::=     SEQUENCE {
    downlinkConfigCommon             DownlinkConfigCommonSIB,
    uplinkConfigCommon            UplinkConfigCommonSIB
    supplementaryUplink           UplinkConfigCommonSIB
    n-TimingAdvanceOffset          ENUMERATED { n0, n25600, n39936 }
    ssb-PositionsInBurst         SEQUENCE {
        inOneGroup               BIT STRING (SIZE (8)),
        groupPresence            BIT STRING (SIZE (8)) },
    ssb-PeriodicityServingCell       ENUMERATED {ms5, ms10, ms20, ms40, ms80, ms160},
    tdd-UL-DL-ConfigurationCommon      TDD-UL-DL-ConfigCommon
    ss-PBCH-BlockPower            INTEGER (-60..50),
    ...,}


DownlinkConfigCommonSIB ::=    SEQUENCE {
    frequencyInfoDL               FrequencyInfoDL-SIB,
    initialDownlinkBWP            BWP-DownlinkCommon,
    bcch-Config                  BCCH-Config,
    pcch-Config                  PCCH-Config,  ...}

PCCH-Config ::=        SEQUENCE {
    defaultPagingCycle            PagingCycle,
    nAndPagingFrameOffset          CHOICE {
        oneT                      NULL,
        halfT                     INTEGER (0..1), ...},
    ns                        ENUMERATED {four, two, one},
    firstPDCCH-MonitoringOccasionOfPO  CHOICE {
        sCS15KHZoneT      SEQUENCE (SIZE (1..maxPO-perPF)) OF INTEGER (0..139),...}

    ...,
    [[  nrofPDCCH-MonitoringOccasionPerSSB-InPO-r16  INTEGER (2..4) ]]
}
```

## FIG. 25

```
BWP-DownlinkCommon ::=          SEQUENCE {
    genericParameters           BWP,
    pdcch-ConfigCommon              SetupRelease { PDCCH-ConfigCommon }
    pdsch-ConfigCommon              SetupRelease { PDSCH-ConfigCommon }
    ...}

PDCCH-ConfigCommon ::=          SEQUENCE {
    controlResourceSetZero          ControlResourceSetZero
    commonControlResourceSet        ControlResourceSet
    searchSpaceZero             SearchSpaceZero
    commonSearchSpaceList           SEQUENCE (SIZE(1..4)) OF SearchSpace
    searchSpaceSIB1             SearchSpaceId
    searchSpaceOtherSystemInformation   SearchSpaceId
    pagingSearchSpace               SearchSpaceId
    ra-SearchSpace              SearchSpaceId
    [[
    firstPDCCH-MonitoringOccasionOfPO   CHOICE {
        sCS15KHZoneT    SEQUENCE (SIZE (1..maxPO-perPF)) OF INTEGER (0..139),
        ...
    }OPTIONAL   -- Cond OtherBWP
    ]]
    ...,}

PDCCH-ServingCellConfig ::=     SEQUENCE {
    slotFormatIndicator         SetupRelease { SlotFormatIndicator }...,
    [[
    availabilityIndicator-r16           SetupRelease {AvailabilityIndicator-r16}
    searchSpaceSwitchTimer-r16      INTEGER (1..80)
    ]]
}


SearchSpaceSwitchConfig-r16 ::=     SEQUENCE {
    cellGroupsForSwitchList-r16     SEQUENCE(SIZE (1..4)) OF CellGroupForSwitch-r16
    searchSpaceSwitchDelay-r16      INTEGER (10..52)
}
CellGroupForSwitch-r16 ::= SEQUENCE(SIZE (1..16)) OF ServCellIndex


ControlResourceSet ::=          SEQUENCE {
    controlResourceSetId            ControlResourceSetId,
    frequencyDomainResources        BIT STRING (SIZE (45)),
    duration                INTEGER (1..maxCoReSetDuration),
    cce-REG-MappingType             CHOICE {
        interleaved             SEQUENCE {
            reg-BundleSize              ENUMERATED {n2, n3, n6},
            interleaverSize             ENUMERATED {n2, n3, n6},
            shiftIndex              INTEGER(0..maxNrofPhysicalResourceBlocks-1)},
        nonInterleaved              NULL},
    precoderGranularity             ENUMERATED {sameAsREG-bundle, allContiguousRBs},
    pdcch-DMRS-ScramblingID         INTEGER (0..65535)
    ..., }
```

**FIG. 26**

```
SearchSpace ::=                      SEQUENCE {
    searchSpaceId                        SearchSpaceId,
    controlResourceSetId                 ControlResourceSetId
    monitoringSlotPeriodicityAndOffset   CHOICE {
        sl1                                  NULL,
        sl2                                  INTEGER (0..1),...}
    duration                             INTEGER (2..2559)
    monitoringSymbolsWithinSlot          BIT STRING (SIZE (14))
    nrofCandidates                       SEQUENCE {
        aggregationLevel1                    ENUMERATED {n0, n1, n2, ... n8},
        aggregationLevel2                    ENUMERATED {n0, n1, n2, ... n8},
        ...}
    searchSpaceType                      CHOICE {
        common                               SEQUENCE {
            dci-Format0-0-AndFormat1-0           SEQUENCE {...}
            dci-Format2-0                        SEQUENCE {
                nrofCandidates-SFI                   SEQUENCE {
                    aggregationLevel1                    ENUMERATED {n1, n2}
                    aggregationLevel2                    ENUMERATED {n1, n2}...},
                ...}
            dci-Format2-1                        SEQUENCE {...}
        ...
        },
        ue-Specific                          SEQUENCE {
            dci-Formats      ENUMERATED {formats0-0-And-1-0, formats0-1-And-1-1},
            ...,}
    }
}


SearchSpaceExt-r16 ::=               SEQUENCE {
    controlResourceSetId-r16             ControlResourceSetId-r16
    searchSpaceType-r16                  SEQUENCE {
        common-r16                           SEQUENCE {
            dci-Format2-4-r16                    SEQUENCE {
                nrofCandidates-CI-r16                SEQUENCE {
                    aggregationLevel1-r16                ENUMERATED {n1, n2}...},...}
            dci-Format2-5-r16                    SEQUENCE {
                nrofCandidates-IAB-r16               SEQUENCE {
                    aggregationLevel1-r16                ENUMERATED {n1, n2}...},...}
            dci-Format2-6-r16                    SEQUENCE {...}
            ...}
    }
    searchSpaceGroupIdList-r16           SEQUENCE (SIZE (1.. 2)) OF INTEGER (0..1)
    freqMonitorLocations-r16             BIT STRING (SIZE (5))
}


SearchSpaceSwitchTrigger-r16 ::=   SEQUENCE {
    servingCellId-r16             ServCellIndex,
    positionInDCI-r16
INTEGER(0..maxSFI-DCI-PayloadSize-1)
}
```

**FIG. 27**

| SCS | OFDM starting Symbols of the candidate SSBs | fc<=3GHz, Lmax=4 | 3GHz<fc<=6GHz, Lmax=8 | fc>6GHz, Lmax=64 |
|---|---|---|---|---|
| CaseA: 15 KHz | {2,8}+14n | n=0,1 | n=0,1,2,3 | Not Applicable (NA) |
| CaseB: 30 KHz | {4,8,16,20}+28n | n=0 | n=0,1 | NA |
| CaseC: 30 KHz | {2,8}+14n | n=0,1 | n=0,1,2,3 | NA |
| CaseD: 120 KHz | {4,8,16,20}+28n | NA | NA | n=0,1,2,3,5,6,7,8,10,11,12,13,15,16,17,18 |
| CaseE: 240 KHz | {8,12,16,20,32,36,40,44} + 56n | NA | NA | n=0,1,2,3,5,6,7,8 |

FIG. 28

FIG. 29

EP 4 535 874 A1

Base station
3020

Time

| MIB comprising configuration/ scheduling information of SIB1 of a cell 3001 | SSBs 3002 | DCI 3003 | SIB1 3004 |

scheduling

Wireless
device
3010

Time

The wireless device 3010 measures SSBs 3002 and monitors PDCCH, of the cell, for acquiring the SIB1 3004 scheduled by the DCI 3003

If the wireless device 3010 is unable to acquire SIB1 3004, the wireless device 3010 determines/considers the cell as barred, and the wireless device performs cell re-selection to other cells

FIG. 30

FIG. 31

Base station 3220 does not to trigger the on-demand SIB1 3204

Base station 3220 triggers the on-demand SIB1 3208 upon receiving WUS 3205

Base station 3220

MIB comprising config. of SIB1 of cell and indicating SIB1 is on-demand transmitted 3201

SSBs 3202

DCI 3203

SIB1 3204

scheduling

WUS 3205

SSBs 3206

DCI 3207

SIB1 3208

scheduling

Time

Wireless device 3210

Wireless device 3210 monitors PDCCH, of the cell, for acquiring the SIB1 3204 scheduled by the DCI 3203, wireless device 3210 does not consider the cell is barred if not receiving the DCI 3203

Wireless device 3210 triggers WUS 3205

Wireless device 3210 considers the cell is barred and perform cell re-selection to other cells if the on-demand SIB1 3208 is not received after the transmission of the WUS 3205.

Time

**FIG. 32**

EP 4 535 874 A1

**FIG. 33**

EP 4 535 874 A1

FIG. 34

| | Europäisches Patentamt European Patent Office Office européen des brevets | **EUROPEAN SEARCH REPORT** | Application Number EP 24 20 4814 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/136832 A1 (AGIWAL ANIL [KR] ET AL) 6 May 2021 (2021-05-06) | 1,3-15 | INV. H04W48/12 |
| Y | * paragraphs [0054], [0055], [0056], [0058], [0059], [0061], [0062] * | 2 | H04W48/14 |
| | ----- | | ADD. |
| X | US 2019/327665 A1 (GENG TINGTING [CN] ET AL) 24 October 2019 (2019-10-24) * paragraphs [0527], [0528] * | 1,13-15 | H04W48/02 H04W48/20 H04W72/23 |
| | ----- | | |
| Y | CN 116 193 509 A (HUAWEI TECH CO LTD) 30 May 2023 (2023-05-30) * paragraphs [0185], [0186] * | 2 | |
| | ----- | | |

**TECHNICAL FIELDS SEARCHED (IPC)**

H04W

The present search report has been drawn up for all claims

| Place of search | Date of completion of the search | Examiner |
|---|---|---|
| Munich | 20 February 2025 | Kahl, Marcus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

3

## ANNEX TO THE EUROPEAN SEARCH REPORT
## ON EUROPEAN PATENT APPLICATION NO.

EP 24 20 4814

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | | Publication date |
|---|---|---|---|---|
| US 2021136832 A1 | 06-05-2021 | CN | 110574482 A | 13-12-2019 |
| | | EP | 3603306 A1 | 05-02-2020 |
| | | KR | 20190135060 A | 05-12-2019 |
| | | US | 2018317264 A1 | 01-11-2018 |
| | | US | 2021136832 A1 | 06-05-2021 |
| | | WO | 2018199647 A1 | 01-11-2018 |
| US 2019327665 A1 | 24-10-2019 | BR | 112019018750 A2 | 07-04-2020 |
| | | CA | 3049931 A1 | 20-12-2018 |
| | | CN | 109151737 A | 04-01-2019 |
| | | CN | 110636457 A | 31-12-2019 |
| | | CN | 111034226 A | 17-04-2020 |
| | | EP | 3573353 A1 | 27-11-2019 |
| | | JP | 2020517131 A | 11-06-2020 |
| | | KR | 20190103360 A | 04-09-2019 |
| | | RU | 2019128215 A | 09-03-2021 |
| | | US | 2019327665 A1 | 24-10-2019 |
| CN 116193509 A | 30-05-2023 | CN | 116193509 A | 30-05-2023 |
| | | EP | 4426003 A1 | 04-09-2024 |
| | | JP | 2024543154 A | 19-11-2024 |
| | | US | 2024323814 A1 | 26-09-2024 |
| | | WO | 2023093445 A1 | 01-06-2023 |

EPO FORM P0459

For more details about this annex : see Official Journal of the European Patent Office, No. 12/82

## EP 4 535 874 A1

**Patent documents cited in the description**

- US 63542628